# EUROPEAN PATENT APPLICATION

(11) **EP 4 123 781 A1**
(43) Date of publication of application: **25.01.2023**
(21) Application number: 21772399.8
(22) Date of filing: 19.03.2021
(51) Int. Cl.: H01M 10/0567, C07F 9/6574, H01G 11/06, H01G 11/60, H01G 11/64, H01M 4/38, H01M 4/48, H01M 10/052, H01M 10/0569

(54) **NON-AQUEOUS ELECTROLYTE AND ENERGY DEVICE USING SAID NON-AQUEOUS ELECTROLYTE**

(30) Priority: 19.03.2020 JP 2020049544; 19.03.2020 JP 2020049613
(71) Applicant: Mitsubishi Chemical Corporation, Chiyoda-ku Tokyo 100-8251 (JP); MU Ionic Solutions Corporation, Tokyo 100-8251 (JP)
(72) Inventor: TAMAI, Kaho, Tokyo 100-8251 (JP); ABE, Taiki, Tokyo 100-8251 (JP); WATANABE, Aiko, Tokyo 100-8251 (JP); ITO, Kanako, Tokyo 100-8251 (JP); NAKAMURA, Takeshi, Tokyo 100-8251 (JP); TOKUDA, Hiroyuki, Tokyo 100-8251 (JP); SHITO, Keiji, Tokyo 100-8251 (JP); NOZAWA, Ryo, Tokyo 100-8251 (JP)
(74) Representative: Vossius & Partner Patentanwälte Rechtsanwälte mbB
(86) International application number: PCT/JP2021/011541
(87) International publication number: WO 2021/187624

(57) **Abstract**

The present invention provides a non-aqueous electrolytic solution which can be handled industrially stably, and which allows for achieving a good durability performance, particularly, a good capacity retention rate during repeated charging and discharging, of an energy device typified by a non-aqueous electrolytic solution secondary battery. The non-aqueous electrolytic solution contains a compound(s) represented by the following general formula(e) (A1) and/or (A2). In formula (A1), X¹ represents a halogen atom; each of R¹, R², R⁵ and R⁶ independently represents a hydrogen atom, a halogen atom, or a hydrocarbon group having 10 or less carbon atoms optionally substituted with a halogen atom; and each of R³ and R⁴ independently represents a halogen atom, or a hydrocarbon group having 10 or less carbon atoms optionally substituted with a halogen atom; wherein at least two of R¹ to R⁶ may be bonded to each other to form a ring. In formula (A2), each of X² and X³ independently represents a halogen atom; and each of R⁷ to R¹⁴ independently represents a hydrogen atom, a halogen atom, or a hydrocarbon group having 10 or less carbon atoms optionally substituted with a halogen atom; wherein at least two of R⁷ to R¹⁴ may be bonded to each other to form a ring.

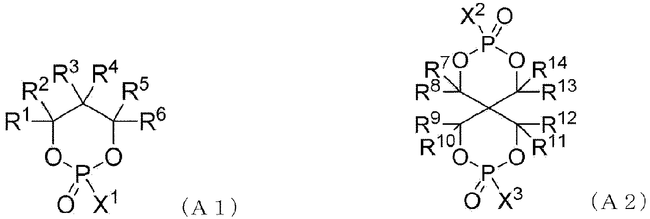

## Description

### TECHNICAL FIELD

The present inventio relates to a non-aqueous electrolytic solution and an energy device using the same.

### BACKGROUND ART

Energy devices using non-aqueous electrolytic solutions, such as non-aqueous electrolytic solution secondary batteries, electric double layer capacitors and lithium ion capacitors, have been put into practical use in a wide variety of applications including: power supplies for so-called consumer use devices such as mobile phones and notebook personal computers; in-vehicle driving power supplies for use in automobiles and the like; and large power supplies for stationary installations; and the like. However, demands for higher performance for energy devices in recent years are increasing more than ever. Particularly, non-aqueous electrolytic solution secondary batteries are required to achieve a high level of various properties, for example, battery characteristics such as capacity, swelling, input/output and charge/discharge rate characteristics, and safety, not only at initial stages, but also after enduring through cycles, storage and the like. Further, safe and stable production and supply of these non-aqueous electrolytic solution secondary batteries are also demanded.

So far, a number of techniques have been examined for various battery components including active materials for positive and negative electrodes and non-aqueous electrolytic solutions, as means for improving the capacity, input/output, charge/discharge rate, battery swelling, dissolution of positive electrode metals and safety, of non-aqueous electrolytic solution secondary batteries, at initial stages and after enduring through cycles, storage and the like.

To solve such problems, there have been proposed various types of electrolytic solutions containing a halophosphate diester compound substituted with a hydrocarbon group. The effect expected by the use of such a phosphate ester compound as an additive may be, for example, enabling to simultaneously achieve: allowing the phosphate ester compound to react in the electrolytic solution to be turned into a compound that contributes to an improvement in battery characteristics; and improving safety, such as flame retardancy of the electrolytic solution, by the effect of making phosphorus atoms incombustible.

For example, Patent Document 1 discloses a technique for improving the capacity retention rate after cycles and the capacity retention rate after high temperature storage, by using an electrolytic solution containing a specific fluorophosphate ester compound.

Patent Document 2 discloses a technique capable of reducing the initial battery resistance, by using an electrolytic solution containing a specific fluorophosphate ester compound.

Patent Document 3 discloses a technique capable of improving the battery resistance and the capacity retention rate, by using an electrolytic solution containing a specific fluorophosphate ester compound.

Patent Documents 4 and 5 each discloses a technique capable of reducing the battery resistance and improving the capacity retention rate, by using an electrolytic solution containing a phosphate ester compound.

### PRIOR ART DOCUMENTS

### PATENT DOCUMENTS

Patent Document 1: Japanese Unexamined Patent Application Publication No. 2002-141110
Patent Document 2: Japanese Unexamined Patent Application Publication No. 2016-201177
Patent Document 3: Japanese Unexamined Patent Application Publication No. 2019-153443
Patent Document 4: WO 2012/118179
Patent Document 5: Japanese Unexamined Patent Application Publication No. 2014-179247

### SUMMARY OF THE INVENTION

### PROBLEMS TO BE SOLVED BY THE INVENTION

With increasing demands for higher performance of non-aqueous electrolytic solution secondary batteries in recent years, as described above, further improvements in the performance of non-aqueous electrolytic solution secondary batteries, particularly, improvements in initial performance as well as durability performance, such as performance during repeated charging and discharging and storage characteristics, are required. On the other hand, since these non-aqueous electrolytic solutions are used industrially, it is a known fact that the safety of the constituent components contained therein, particularly, the fact that the constituent components have an excellent thermal stability, is important. In other words, a compound with a low thermal stability has a risk of causing an unintended decomposition reaction during the production of the compound itself or the production of an electrolytic solution containing the compound, as well as during the storage, transportation and use of the electrolytic solution, possibly resulting in a serious damage such as an explosion accident in some cases. Therefore, such a compound cannot be suitably used, even if the electrolytic solution containing the compound had excellent battery characteristics.

From such points of view, it has still been hard to say that non-aqueous electrolytic solution batteries using the compounds disclosed in Patent Documents 1 and 2 have a sufficient effect of improving battery performance, particularly, capacity retention characteristics during repeated charging and discharging. Further, Patent Documents 1, 2 and 3 were silent about the thermal stability of the compounds disclosed therein, and the examination by the present inventors revealed that the compounds described in the Examples in these Patent Documents have an extremely low thermal stability, making them unable to be used industrially. In the technique disclosed in Patent Document 4, a large amount of a fluorophosphoric acid dialkyl ester compound, which is more expensive compared to a carbonate-based solvent usually used in an electrolytic solution, was used, and thus has a problem from the viewpoint of industrial use. In addition, Patent Document 4 discusses the flame retardancy of an electrolytic solution in terms of inflammability upon contact with fire, not in terms of the thermal stability of the electrolytic solution itself, and there is room for improvement regarding the safety during handling in the production, storage and usage processes of the non-aqueous electrolytic solution.

In view of such problems in the background art, a first object of the present invention is to provide a non-aqueous electrolytic solution which can be handled industrially stably, and which allows for achieving a good durability performance, particularly, a good capacity retention rate during repeated charging and discharging, of an energy device typified by a non-aqueous electrolytic solution secondary battery.

As described above, improvements in initial performance as well as durability performance, such as performance during repeated charging and discharging and storage characteristics, are required for recent non-aqueous electrolytic solution secondary batteries. Driven by demands for higher energy density in recent years, on the other hand, the development of negative electrode active materials containing a material other than carbon materials is drawing attentions, in particular.

Since the compounds disclosed in Patent Documents 1 to 5 are based on the premise of being suitably used in negative electrode active materials consisting of carbon materials, no study has been done on phosphate ester compounds which can be suitably used in the case of using the above-described negative electrode active materials containing a material other than carbon materials. Moreover, the present inventors have discovered, as a result of intensive studies, that some of the phosphate ester compounds described as preferable in these Patent Documents rather cause a decrease in the performance, particularly, the capacity retention characteristics during repeated charging and discharging, of the resulting secondary battery, when used in combination with a negative electrode active material containing a material other than carbon materials.

In view of such problems in the background art, a second object of the present invention is to provide an energy device typified by a non-aqueous electrolytic solution secondary battery which has a good capacity and durability performance, particularly, a good capacity retention rate during repeated charging and discharging.

### MEANS FOR SOLVING THE PROBLEMS

The present inventors have found out, as a result of intensive studies to achieve the first object described above, that the incorporation of a compound(s) represented by general formula(e) (A1) and/or (A2) to be described later into a non-aqueous electrolytic solution enables to provide a non-aqueous electrolytic solution which can be handled industrially stably, and which allows for achieving a good durability performance, particularly, a good capacity retention rate during repeated charging and discharging, of an energy device typified by a non-aqueous electrolytic solution secondary battery, thereby completing the present invention.

That is, a first aspect of the present invention provides specific embodiments and the like shown in the following [A1] to [A9].
[A1] A non-aqueous electrolytic solution including a compound(s) represented by the following general formula(e) (A1) and/or (A2): 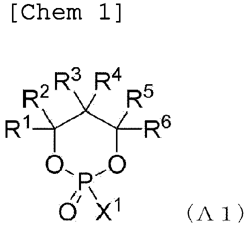 (wherein, in formula (A1), X¹ represents a halogen atom; each of R¹, R², R⁵ and R⁶ independently represents a hydrogen atom, a halogen atom, or a hydrocarbon group having 10 or less carbon atoms optionally substituted with a halogen atom; and
   each of R³ and R⁴ independently represents a halogen atom, or a hydrocarbon group having 10 or less carbon atoms optionally substituted with a halogen atom; wherein at least two of R¹ to R⁶ may be bonded to each other to form a ring) 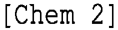 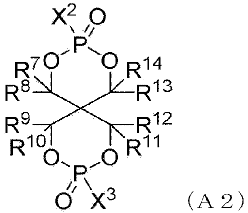 (wherein, in formula (A2), each of X² and X³ independently represents a halogen atom; and each of R⁷ to R¹⁴ independently represents a hydrogen atom, a halogen atom, or a hydrocarbon group having 10 or less carbon atoms
   optionally substituted with a halogen atom; wherein at least two of R⁷ to R¹⁴ may be bonded to each other to form a ring).
[A2] The non-aqueous electrolytic solution according to [A1], wherein R¹, R², R⁵ and R⁶ in the formula (A1) are hydrogen atoms.
[A3] The non-aqueous electrolytic solution according to [A1] or [A2], wherein X¹ in the formula (A1) is a fluorine atom.
[A4] The non-aqueous electrolytic solution according to [A1], wherein all of R⁷ to R¹⁴ in the formula (A2) are hydrogen atoms.
[A5] The non-aqueous electrolytic solution according to [A1] or [A4], wherein X² and X³ in the formula (A2) are fluorine atoms.
[A6] The non-aqueous electrolytic solution according to any one of [A1] to [A5], wherein the non-aqueous electrolytic solution includes at least one organic solvent selected from the group consisting of a saturated cyclic carbonate, a chain carbonate, a chain carboxylate ester, a cyclic carboxylate ester, an ether compound and a sulfone compound.
[A7] The non-aqueous electrolytic solution according to any one of [A1] to [A6], wherein the total content of the compounds represented by the general formulae (A1) and (A2) is 0.001% by mass or more and 30% by mass or less, with respect to the total amount of the non-aqueous electrolytic solution.
[A8] An energy device including:
   a plurality of electrodes capable of absorbing and releasing metal ions; and
   the non-aqueous electrolytic solution according to any one of [A1] to [A7].
[A9] A compound represented by the following formula (A3):

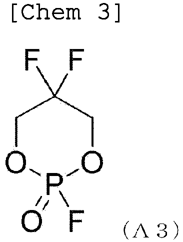

Further, the present inventors have found out, as a result of intensive studies to achieve the second object, that the incorporation of a compound(s) represented by general formula(e) (B1) and/or (B2) to be described later into a non-aqueous electrolytic solution enables to provide a non-aqueous electrolytic solution which can be suitably used in an energy device using a negative electrode active material containing a silicon atom, thereby completing the present invention.

More specifically, the present inventors paid attention to the mechanism of the formation of a negative electrode coating film and the elementary reaction rate, and further to the mechanism of the stabilization of a positive electrode surface, of a non-aqueous electrolytic solution secondary battery as an energy device, in order to develop a novel non-aqueous electrolytic solution that drastically improve the problems in the prior art and allows for achieving the above-described object, and performed various studies on the actions and effects of a variety of compounds. In addition, the present inventors performed various examinations on the decomposition mechanism of the compounds, and carried out optimum molecular designs. As a result, the present inventors have established techniques capable of improving the problems and achieving the above-mentioned object, by novel ideas to incorporate a specific halophosphate ester compound(s) represented by general formula(e) (B1) and/or (B2) to be described later into a non-aqueous electrolytic solution, and further, to combine the resulting electrolytic solution with a specific negative electrode to produce an energy device.

That is, a second aspect of the present invention provides specific embodiments and the like shown in the following [B1] to [B9].
[B1] An energy device including:
   a positive electrode capable of absorbing and releasing metal ions;
   a negative electrode capable of absorbing and releasing metal ions; and
   a non-aqueous electrolytic solution;
      wherein the negative electrode includes a negative electrode active material containing a silicon atom; and
      wherein the non-aqueous electrolytic solution contains at least one compound selected from compounds represented by the following general formulae (B1) and (B2): 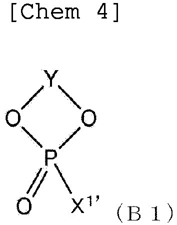 (wherein, in general formula (B1), X¹' represents a halogen atom; and Y represents a divalent alkyl group in which the number of carbon atoms forming a ring together with a part of a halogenated phosphate ester is from 2 to 4, with the proviso that one or more hydrogen atoms bonded to the carbon atoms forming the ring, of the carbon atoms of Y, are optionally substituted with a halogen atom or an organic group having 6 or less carbon atoms) 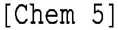 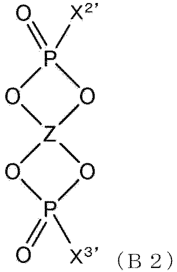 (wherein, in general formula (B2), each of X²' and X³' independently represents a halogen atom; and Z represents a tetravalent alkyl group in which the number of carbon atoms forming rings together with a part of a halogenated phosphate ester is from 4 to 8, with the proviso that one or more hydrogen atoms bonded to the carbon atoms forming the rings, of the carbon atoms of Z, are optionally substituted with a halogen atom or an organic group having 6 or less carbon atoms).
[B2] The energy device according to [B1], wherein the number of carbon atoms forming the ring together with a part of the halogenated phosphate ester, in Y in the general formula (B1), is 3.
[B3] The energy device according to [B1] or [B2], wherein at least one of the hydrogen atoms bonded to the carbon atoms forming the ring, of the carbon atoms of Y in the general formula (B1), is substituted with a fluorine atom.
[B4] The energy device according to any one of [B1] to [B3], wherein X¹' in the general formula (B1) is a fluorine atom.
[B5] The energy device according to [B1], wherein the number of carbon atoms forming the rings together with a part of the halogenated phosphate ester, in Z in the general formula (B2), is 5.
[B6] The energy device according to [B5], wherein at least one of the hydrogen atoms bonded to the carbon atoms forming the rings, of the carbon atoms of Z in the general formula (B2), is substituted with a fluorine atom.
[B7] The energy device according to any one of [B1], [B5] and [B6], wherein X²' and X³' in the general formula (B2) are fluorine atoms.
[B8] The energy device according to any one of [B1] to [B7], wherein the non-aqueous electrolytic solution comprises at least one compound selected from the group consisting of a saturated cyclic carbonate, a chain carbonate, a chain carboxylate ester, a cyclic carboxylate ester, an ether compound and a sulfone compound.
[B9] The energy device according to any one of [B1] to [B8], wherein the total content of the compounds represented by the general formulae (B1) and (B2) is 0.001% by mass or more and 30% by mass or less, with respect to the total amount of the non-aqueous electrolytic solution.

### EFFECT OF THE INVENTION

According to the first aspect of the present invention, it is possible to provide a non-aqueous electrolytic solution which can be handled industrially stably, and which allows for achieving a good durability performance, particularly, a good capacity retention rate during repeated charging and discharging, of an energy device typified by a non-aqueous electrolytic solution secondary battery.

Further, according to the second aspect of the present invention, it is possible to provide an energy device typified by a non-aqueous electrolytic solution secondary battery which has a good capacity retention rate during repeated charging and discharging.

### MODE FOR CARRYING OUT THE INVENTION

The embodiments of the present invention will be described below in specific detail. The embodiments to be described below are examples (representative examples) of the embodiments of the present invention, and the present invention is in no way limited to these embodiments. Further, the present invention can be implemented with any modifications without departing from the gist of the present invention.

It is noted, in the present specification, that the expression using "from * to *" represents a range that includes the numbers described before and after the "to".

### < 1. Non-aqueous Electrolytic Solution >

### < 1-1. Components Contained in Non-aqueous Electrolytic Solution >

### < 1-1-1. Halogenated Phosphate Ester Compounds Used in First Embodiment >

The first embodiment of the non-aqueous electrolytic solution contains a compound represented by the following general formula (A1), and/or a compound represented by the following general formula (A2) (the compound(s) is/are hereinafter sometimes referred to as "halogenated phosphate ester compound(s) used in the first embodiment").

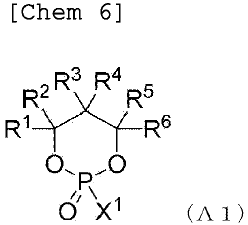

In the formula (A1), X¹ represents a halogen atom; each of R¹, R², R⁵ and R⁶ independently represents a hydrogen atom, a halogen atom, or a hydrocarbon group having 10 or less carbon atoms optionally substituted with a halogen atom; and each of R³ and R⁴ independently represents a halogen atom, or a hydrocarbon group having 10 or less carbon atoms optionally substituted with a halogen atom; wherein at least two of R¹ to R⁶ may be bonded to each other to form a ring.

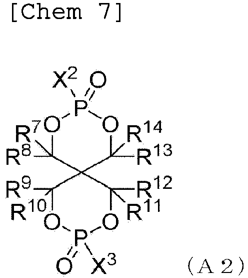

In the formula (A2), each of X² and X³ independently represents a halogen atom; and each of R⁷ to R¹⁴ independently represents a hydrogen atom, a halogen atom, or a hydrocarbon group having 10 or less carbon atoms optionally substituted with a halogen atom; wherein at least two of R⁷ to R¹⁴ may be bonded to each other to form a ring.

### [1-1-1-2. X¹]

In the formula (A1), X¹ represents a halogen atom. Specific examples of the halogen atom include fluorine atom, chlorine atom, bromine atom and iodine atom. Among these, X¹ is preferably a fluorine atom. In cases where X¹ is a fluorine atom, and when the resulting electrolytic solution is used in an energy device, side reactions of the constituent components of the electrolytic solution with a negative electrode are reduced due to the stabilization of a coating film on the negative electrode surface, and the capacity retention rate during repeated charging and discharging is improved.

### [1-1-1-3. R¹, R², R⁵ and R⁶]

In the formula (A1), each of R¹, R², R⁵ and R⁶ independently represents a hydrogen atom, a halogen atom, or a hydrocarbon group having 10 or less carbon atoms optionally substituted with a halogen atom. It is preferred that at least one of R¹, R², R⁵ and R⁶ be not a hydrogen atom, and it is particularly preferred that at least one of R¹, R², R⁵ and R⁶ be a halogen atom, because, when the resulting electrolytic solution is used in an energy device, it becomes easier to further improve the overall characteristics of the energy device such as the capacity retention rate during repeated charging. On the other hand, from the viewpoint of ease of industrial handleability in all the processes during the production and storage of the halogenated phosphate ester compound used in the first embodiment, and during the production and use of the electrolytic solution, it is also preferred that all of R¹, R², R⁵ and R⁶ be hydrogen atoms.

Specific examples of the halogen atom include fluorine atom, chlorine atom, bromine atom and iodine atom. Among these, the halogen atom is preferably a fluorine atom, because, when the electrolytic solution is used in an energy device, it becomes easier to reduce side reactions of the constituent components of the electrolytic solution with the negative electrode due to the stabilization of the coating film on the negative electrode surface, and to further improve the properties such as the capacity retention rate during repeated charging and discharging.

Specific examples of the hydrocarbon group having 10 or less carbon atoms optionally substituted with a halogen atom include a hydrocarbon group, and a hydrocarbon group substituted with a halogen atom. Of these, a hydrocarbon group is preferred, from the viewpoint of ease of industrial handleability in all the processes during the production and storage of the halogenated phosphate ester compound used in the first embodiment, and during the production and use of the electrolytic solution. From the viewpoint of making it easier to further improve the properties such as the capacity retention rate during repeated charging in the resulting energy device, on the other hand, a hydrocarbon group substituted with a halogen atom is preferred. In the hydrocarbon group substituted with a halogen atom, specific examples of the halogen atom substituting the hydrocarbon group include those described as the specific examples of the halogen atom described above.

Specific examples of the hydrocarbon group include a saturated hydrocarbon group, and a hydrocarbon group containing an unsaturated bond. Of these, a saturated hydrocarbon group is preferred, because the properties such as the capacity retention rate during repeated charging in the resulting energy device can be more easily improved.

Specific examples of the saturated hydrocarbon group include a linear or branched alkyl group, and an alkyl group partially having a cyclic structure. Of these, a linear or branched alkyl group is preferred, and a linear alkyl group is more preferred, because the properties such as the capacity retention rate during repeated charging in the resulting energy device can be more easily improved.

Specific examples of the linear alkyl group include methyl group, ethyl group, n-propyl group, n-butyl group, n-hexyl group, n-heptyl group, n-octyl group, n-nonyl group and n-decyl group. Among these, an alkyl group having from 1 to 5 carbon atoms is preferred, an alkyl group having from 1 to 3 carbon atoms is particularly preferred, and an alkyl group having 1 carbon atom is particularly preferred, because the properties such as the capacity retention rate during repeated charging in the resulting energy device can be more easily improved.

Specific examples of the branched alkyl group include: methylethyl group, methylbutyl group, methylpentyl group, methylhexyl group, methylheptyl group, methyloctyl group and methylnonyl group; dimethylethyl group, dimethylpropyl group, dimethylbutyl group, dimethylpentyl group, dimethylhexyl group, dimethylheptyl group and dimethyloctyl group; trimethylhexyl group and trimethylheptyl group; ethylpentyl group, ethylhexyl group, ethylheptyl group and ethyloctyl group; propylhexyl group and propylheptyl group; and butylhexyl group.

Among these, an alkyl group having from 3 to 5 carbon atoms is preferred, and an alkyl group having from 3 to 4 carbon atoms is particularly preferred, because the properties such as the capacity retention rate during repeated charging in the resulting energy device can be more easily improved. It is noted that the position of branching is arbitrary in the examples of the above-described branched alkyl group.

Specific examples of the alkyl group partially having a cyclic structure include:
cyclopropyl group, cyclobutyl group, cyclopentyl group, cyclohexyl group, cycloheptyl group, cyclooctyl group, cyclononyl group and cyclodecyl group;
cyclopropylmethyl group, cyclobutylmethyl group, cyclopentylmethyl group, cyclohexylmethyl group, cycloheptylmethyl group, cyclooctylmethyl group and cyclononylmethyl group;
cyclopropylethyl group, cyclobutylethyl group, cyclopentylethyl group, cyclohexylethyl group, cycloheptylethyl group and cyclooctylethyl group;
cyclopropylpropyl group, cyclobutylpropyl group, cyclopentylpropyl group, cyclohexylpropyl group and cycloheptylpropyl group;
methylcyclopropyl group, methylcyclobutyl group, methylcyclopentyl group, methylcyclohexyl group, methylcycloheptyl group, methylcyclooctyl group and methylcyclononyl group;
dimethylcyclopropyl group, dimethylcyclobutyl group, dimethylcyclopentyl group, dimethylcyclohexyl group, dimethylcycloheptyl group and dimethylcyclooctyl group;
ethylcyclopropyl group, ethylcyclobutyl group, ethylcyclopentyl group, ethylcyclohexyl group, ethylcycloheptyl group and ethylcyclooctyl group;
propylcyclopropyl group, propylcyclobutyl group, propylcyclopentyl group, propylcyclohexyl group and propylcycloheptyl group;
methylcyclohexylmethyl group, methylcycloheptylmethyl group and methylcyclooctylmethyl group;
dimethylcyclohexylmethyl group and dimethylcycloheptylmethyl group;
dimethylcyclohexylethyl group and dimethylcycloheptylethyl group; and
dimethylcyclohexylpropyl group.

Among these, an alkyl group having from 3 to 7 carbon atoms is preferred, because the properties such as the capacity retention rate during repeated charging in the resulting energy device can be more easily improved.

The hydrocarbon group containing an unsaturated bond is not particularly limited, as long as the group is any one of the above-described saturated hydrocarbon groups that have a structure containing one or more carbon-carbon double bonds or triple bonds. Specific examples thereof include ethenyl group, ethynyl group, allyl group, 2-propynyl group, isopropenyl group, 1-cyclohexenyl group and phenyl group. Among these, the hydrocarbon group containing an unsaturated bond is preferably one having 3 or less carbon atoms, more preferably an ethenyl group or an allyl group, and particularly preferably an ethenyl group, because the halogenated phosphate ester compound of the present embodiment can be more easily dissolved in the electrolytic solution.

Specific examples of the hydrocarbon group substituted with a halogen atom include a saturated hydrocarbon group and an unsaturated hydrocarbon group, in which some of the hydrogen atoms are substituted with a halogen atom. The number of substituted halogen atoms is preferably from 1 to 5, and particularly preferably from 1 to 3.

### [1-1-1-4. R³ and R⁴]

In the formula (A1), each of R³ and R⁴ independently represents a halogen atom, or a hydrocarbon group having 10 or less carbon atoms optionally substituted with a halogen atom. R³ and R⁴ may be the same as, or different from, each other. However, R³ and R⁴ are preferably the same, from the viewpoint of ease of industrial handleability in all the processes during the production and storage of the halogenated phosphate ester compound used in the first embodiment, and during the production and use of the electrolytic solution. R³ and R⁴ are each preferably a halogen atom, because it becomes easier to further improve the properties such as the capacity retention rate during repeated charging and discharging, in the resulting energy device. Specific examples of the halogen atom include fluorine atom, chlorine atom, bromine atom and iodine atom. Among these, the halogen atom is preferably a fluorine atom, because, when used in the energy device, it becomes easier to reduce side reactions of the constituent components of the electrolytic solution with the negative electrode due to the stabilization of the coating film on the negative electrode surface, and to further improve the properties such as the capacity retention rate during repeated charging and discharging. From the viewpoint of ease of industrial handleability in all the processes during the production and storage of the halogenated phosphate ester compound used in the first embodiment, and during the production and use of the electrolytic solution, R³ and R⁴ are each preferably a hydrocarbon group optionally substituted with a halogen atom. Specific examples of the hydrocarbon group having 10 or less carbon atoms optionally substituted with a halogen atom include a hydrocarbon group, and a hydrocarbon group substituted with a halogen atom. Of these, a hydrocarbon group is preferred, from the viewpoint of ease of industrial handleability in all the processes during the production and storage of the halogenated phosphate ester compound used in the first embodiment, and during the production and use of the electrolytic solution. From the viewpoint of making it easier to further improve the properties such as the capacity retention rate during repeated charging in the resulting energy device, on the other hand, a hydrocarbon group substituted with a halogen atom is preferred. In the hydrocarbon group substituted with a halogen atom, specific examples of the halogen atom substituting the hydrocarbon group include those described as the specific examples of the halogen atom described above. Specific examples and preferred examples of the hydrocarbon group, and of the hydrocarbon group substituted with a halogen atom, are the same as those described above as the specific examples of the above-described R¹, R², R⁵ and R⁶. R³ and R⁴ are preferably methyl groups, from the viewpoint of ease of industrial handleability in all the processes during the production and storage of the halogenated phosphate ester compound used in the first embodiment, and during the production and use of the electrolytic solution.

Further, at least two of R¹ to R⁶ can be bonded to each other to form a ring.

Specific examples of the embodiment in which at least two of R¹ to R⁶ are bonded to each other to form a ring include: an embodiment in which R¹ and R² are bonded to form a ring; an embodiment in which R¹ and R³ are bonded to form a ring; an embodiment in which R¹ and R⁵ are bonded to form a ring; an embodiment in which R³ and R⁴ are bonded to form a ring; and an embodiment in which R⁵ and R⁶ are bonded to form a ring. A preferred embodiment may be, for example, an embodiment in which R³ and R⁴ are bonded to form a ring.

The most preferred embodiment of R¹ to R⁶ among those described above may be an embodiment in which R³ and R⁴ are fluorine atoms, and R¹, R², R⁵ and R⁶ are hydrogen atoms, or alternatively, an embodiment in which R³ and R⁴ are methyl groups, and R¹, R², R⁵ and R⁶ are hydrogen atoms.

### [1-1-1-5. X² and X³]

In the formula (A2), each of X² and X³ independently represents a halogen atom. Specific examples and preferred examples thereof are the same as those described above as the specific examples of the above-described X¹. X² and X³ may be the same as, or different from, each other. However, X² and X³ are preferably the same, from the viewpoint of ease of industrial handleability in all the processes during the production and storage of the halogenated phosphate ester used in the first embodiment, and during the production and use of the electrolytic solution.

### [1-1-1-6. R⁷ to R¹⁴]

In the formula (A2), each of R⁷ to R¹⁴ independently represents a hydrogen atom, a halogen atom, or a hydrocarbon group having from 1 to 10 carbon atoms optionally substituted with a halogen atom. However, it is also preferred that all of R⁷ to R¹⁴ be hydrogen atoms, from the viewpoint of ease of industrial handleability in all the processes during the production and storage of the halogenated phosphate ester compound used in the first embodiment, and during the production and use of the electrolytic solution. Specific examples and preferred examples of the halogen atom, and of the hydrocarbon group having from 1 to 10 carbon atoms optionally substituted with a halogen atom, are the same as those described above as the specific examples of R¹, R², R⁵ and R⁶ in the formula (A1) .

The halogenated phosphate ester compounds used in the first embodiment preferably have a heat generation starting temperature, as measured by differential scanning calorimetry (DSC) under a nitrogen gas stream, of 190°C or higher, more preferably 200°C or higher, and particularly preferably 220°C or higher. When the heat generation starting temperature is equal to or higher than the lower limit value described above, an excellent industrial handleability can be obtained, in all the processes during the production and storage of the halogenated phosphate ester compounds used in the first embodiment, and during the production and use of the electrolytic solution. Further, the upper limit value of the heat generation starting temperature is not particularly limited, and is usually 450°C or lower.

The "heat generation starting temperature" as used herein refers to the following temperature. Specifically, when the compound is heated within the temperature range of from 20°C to 400°C at a rate of 10°C/min, in the DSC measurement under a nitrogen gas stream, and in cases where the difference between the height of the amount of heat generation at 70°C, H₁, and the height of the amount of heat generation at the maximum heat generation peak temperature, H_{MAX}, is defined as ΔH₁, and the height of the amount of heat generation, H₁, is taken as the standard, the temperature when the height of the amount of heat generation reached 5% of the ΔH₁ is defined as the heat generation starting temperature.

### < 1-1-1-7. Specific Examples >

Specific examples of the halogenated phosphate ester compounds used in the first embodiment will be described below. It is noted that the halogenated phosphate ester compounds used in the first embodiment are in no way limited to those exemplified herein.

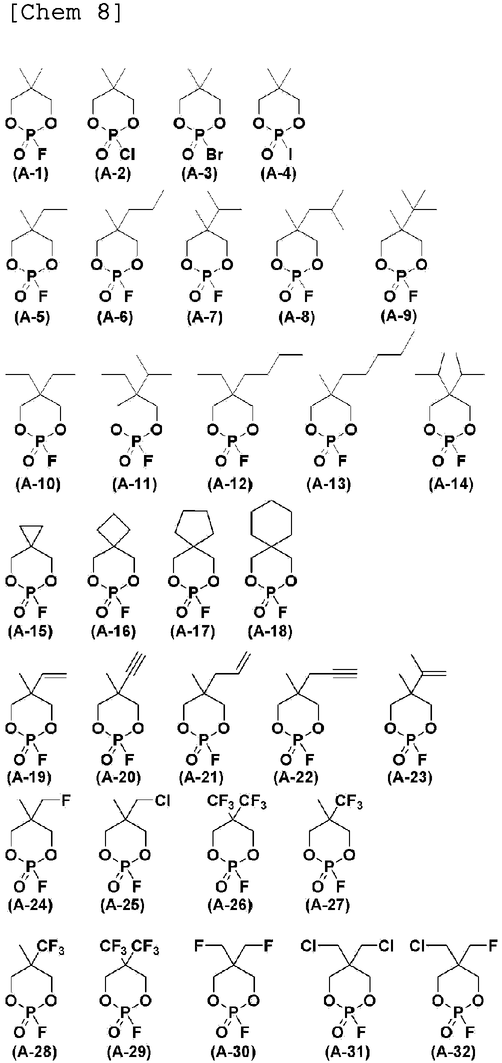

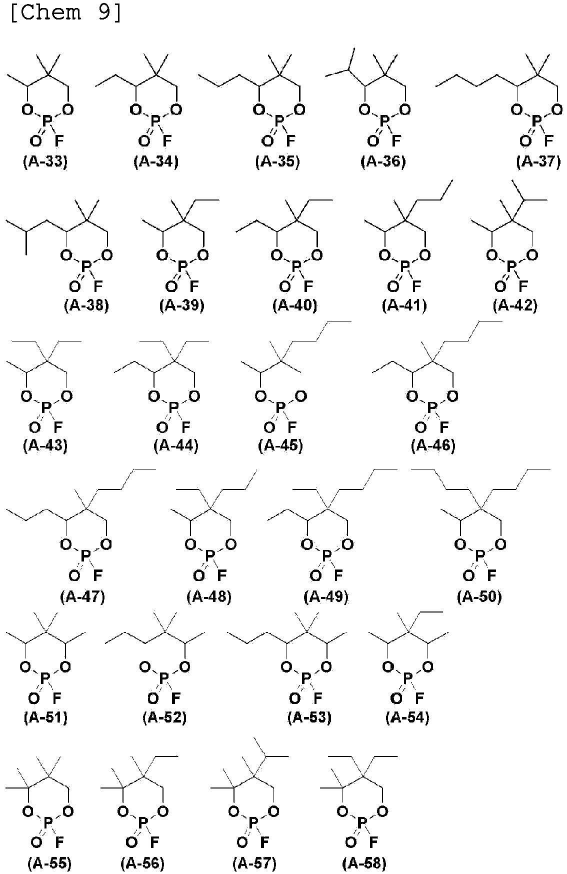

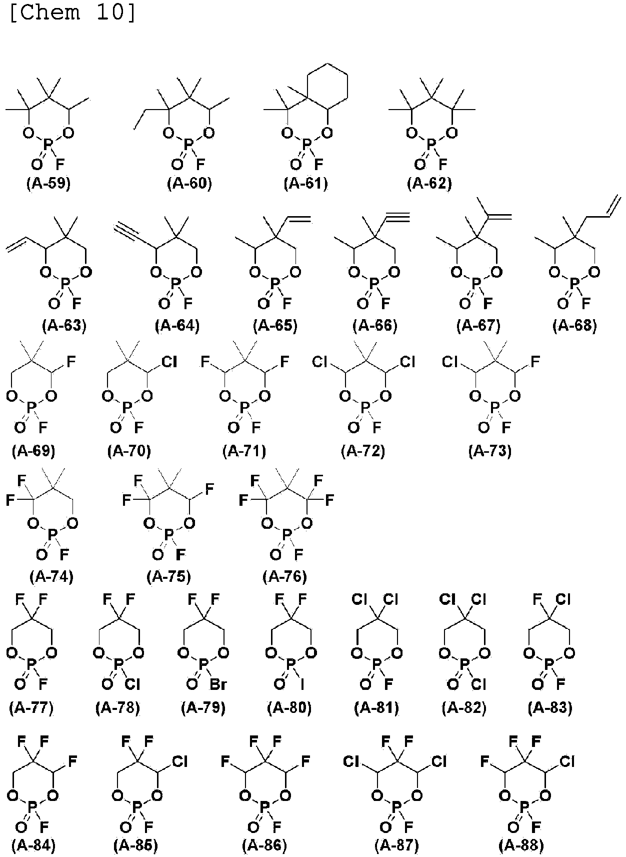

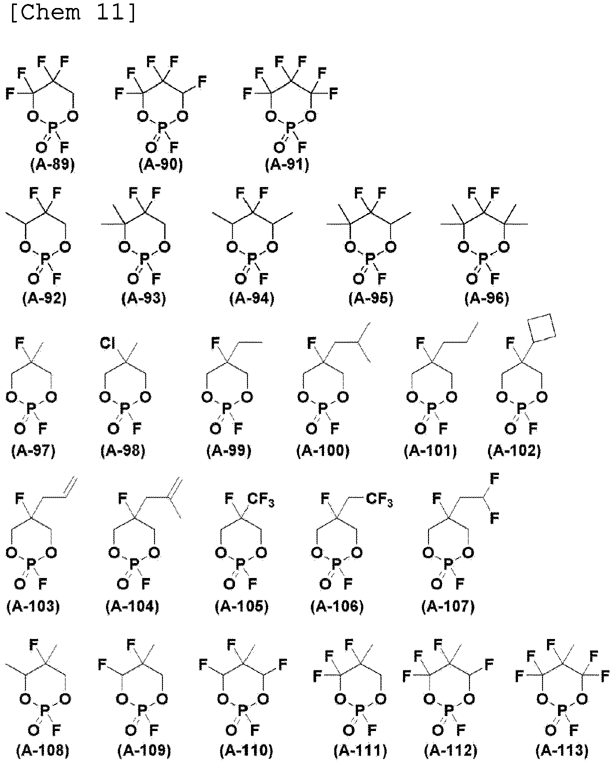

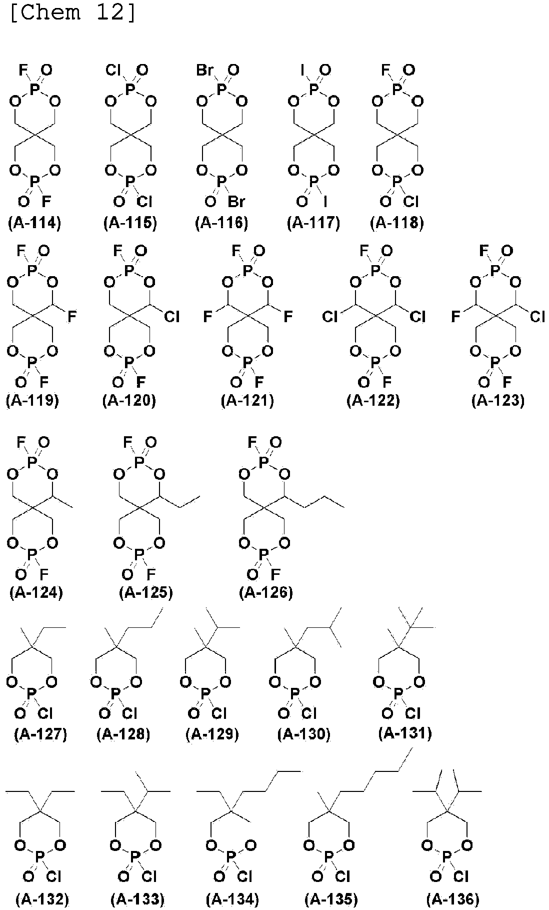

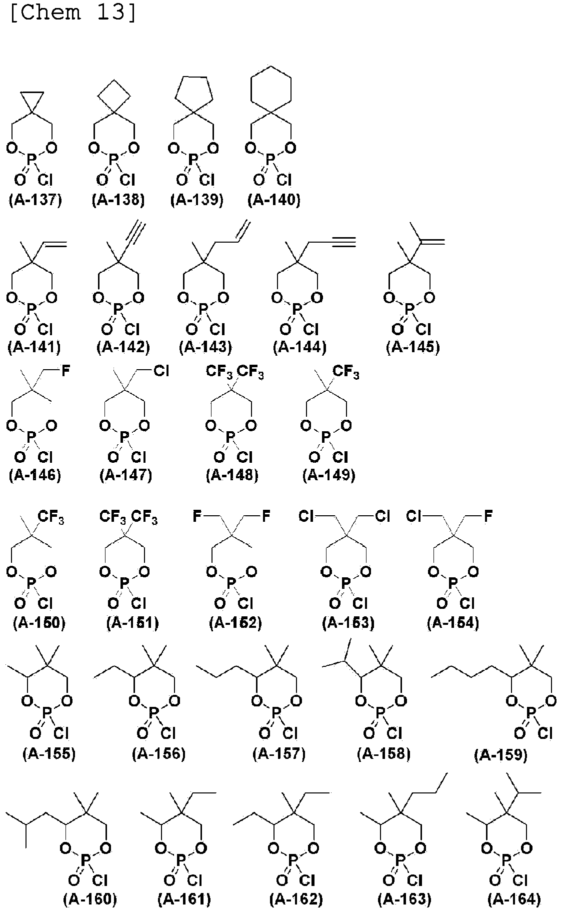

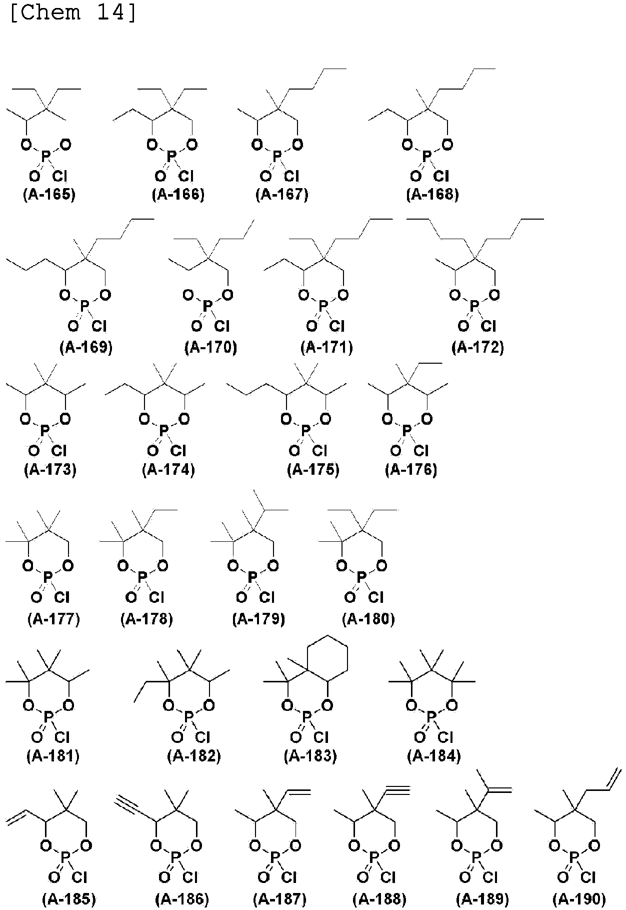

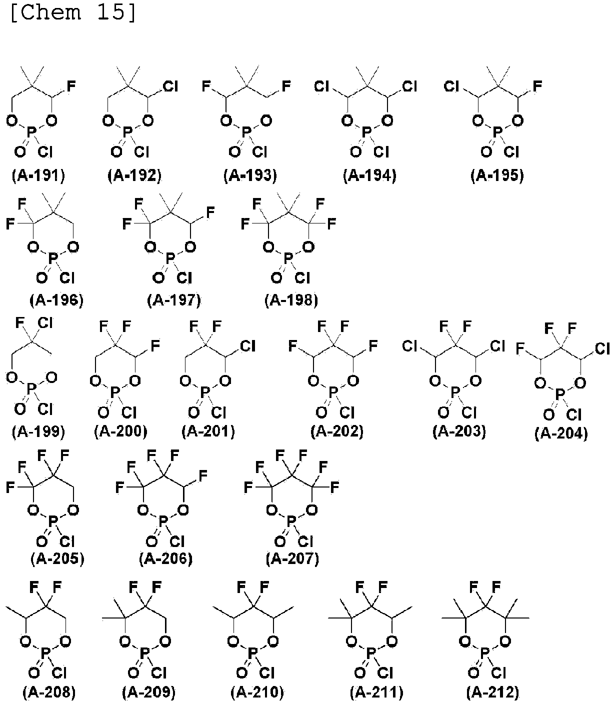

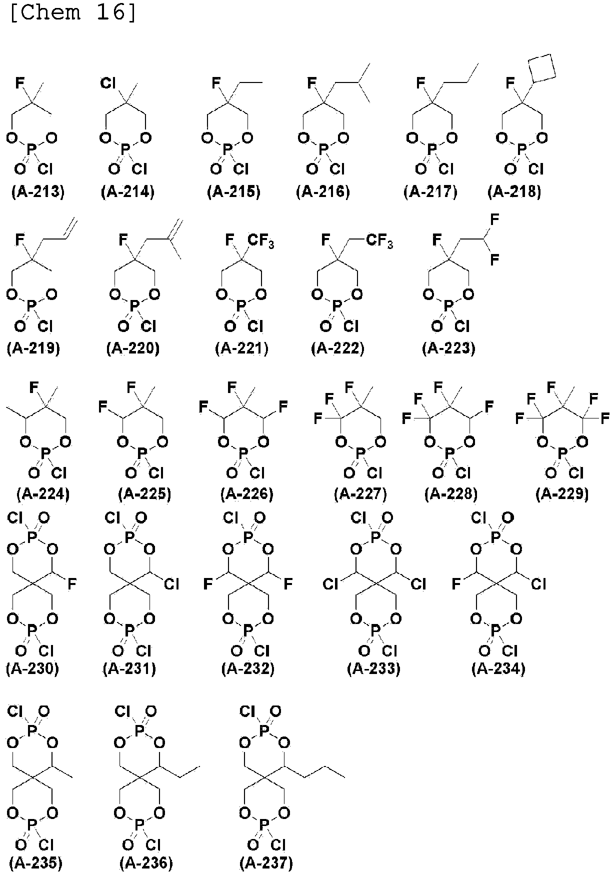

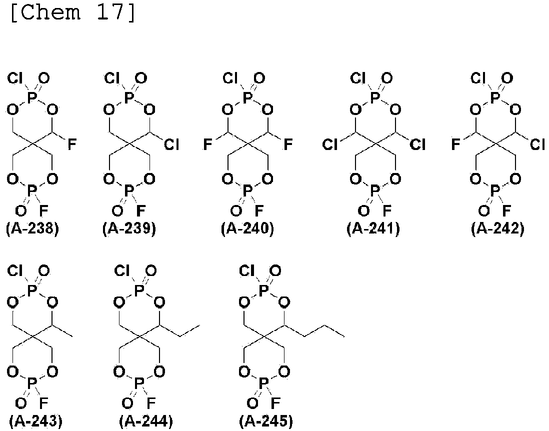

Among these, the following compounds are preferred, from the viewpoint of ease of industrial handleability in all the processes during the production and storage of the halogenated phosphate ester compounds used in the first embodiment, and during the production and use of the electrolytic solution.

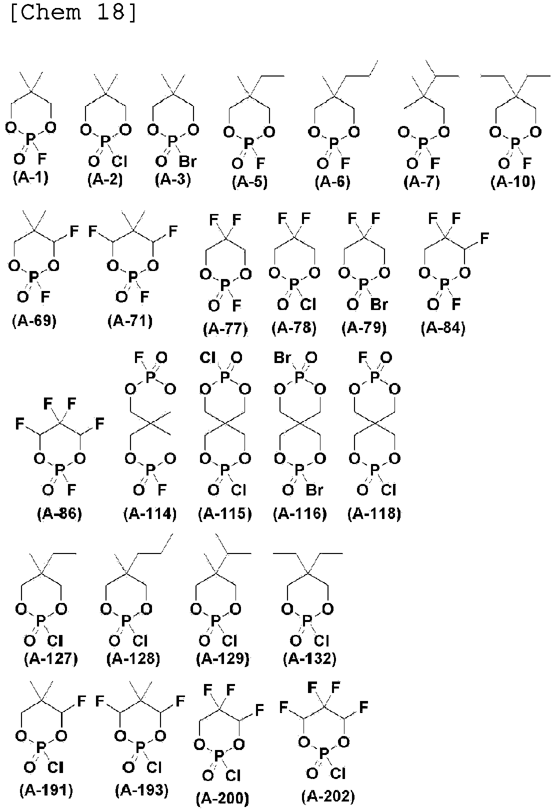

Among these, the following compounds are more preferred, because, when the resulting electrolytic solution is used in an energy device, a coating film on the surface of a negative electrode is stabilized, and it becomes easier to further improve the overall characteristics of the energy device, such as the capacity retention rate during repeated charging and discharging as well as the storage characteristics.

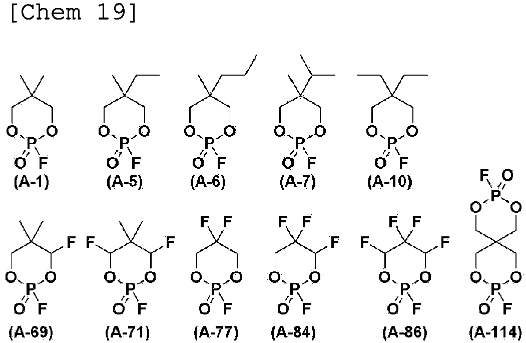

The halogenated phosphate ester compounds used in the first embodiment may be used singly, or two or more kinds thereof may be used in any combination and ratio. Further, the content(s) of the halogenated phosphate ester compound(s) used in the first embodiment is/are not particularly limited, and can be selected arbitrary as long as the effects of the present invention are not significantly impaired. However, it is preferred that the total content of the compounds represented by the general formulae (A1) and (A2) be 0.001% by mass or more, more preferably 0.01% by mass or more, and particularly preferably 0.1% by mass or more, with respect to the total amount of the non-aqueous electrolytic solution. When the total content of the compounds is within the range described above, a suitable coating film is formed on the negative electrode surface and the effect of reducing the side reactions of the constituent components of the electrolytic solution is exhibited, thereby increasing the effect of improving the cycle capacity retention rate during repeated charging and discharging, and the like.

On the other hand, the total content of the compounds represented by the general formulae (A1) and (A2) are preferably 30% by mass or less, more preferably 10% by mass or less, and particularly preferably 5% by mass or less, with respect to the total amount of the non-aqueous electrolytic solution. When the total content of the compounds is within the range described above, an excessive formation of a negative electrode coating film is prevented and the permeability of lithium ions can be ensured, thereby controlling the input/output characteristics and the charge/discharge rate characteristics within suitable ranges.

Each of the compounds represented by general formulae (A1) and (A2) can be produced by a combination of known methods, without particular limitation. Examples of the production method include: a method by a cyclization reaction of a phosphoryl halide with a polyol; a method by a cyclization reaction of a chain phosphoric acid halide with a polyol; a method by an oxidative halogenation reaction of a cyclic phosphonic acid; a method by an oxidation reaction of a cyclic phosphonic acid halide; a method by halogenation by a substitution reaction of a cyclic phosphate ester; and a method by a substitution reaction or an addition reaction, or introduction or removal of a substituent by an elimination reaction, on a hydrocarbon group of a cyclic phosphoric acid halide. Further, a halogen atom on the phosphorus of a cyclic phosphoric acid halide can be replaced to a different halogen atom, by a substitution reaction. Examples further include a method of producing each compound in the electrolytic solution, by a reaction of an oxygen nucleophile, a carbon electrophile or the like derived from a cyclic carbonate or the like, with a compound containing a phosphorus atom such as LiPF₆, or a reaction between substances derived therefrom.

The non-aqueous electrolytic solution containing a compound(s) represented by general formula(e) (A1) and/or (A2) can be prepared by a known method(s), without particular limitation. Examples of the preparation method include: a method in which a compound(s) represented by structural formula(e) (A1) and/or (A2) which has/have been separately synthetized is/are added to a non-aqueous electrolytic solution; a method in which a compound(s) represented by general formula(e) (A1) and/or (A2) which has/have been separately synthetized is/are added into a solvent, followed by dissolving an electrolyte salt therein, to form a non-aqueous electrolytic solution; a method in which a compound(s) represented by general formula(e) (A1) and/or (A2) is/are mixed into any of the battery components such as active materials, electrode plates and a separator(s) which are described later, to construct a battery element in advance, and, when a non-aqueous electrolytic solution is injected into the battery element to assemble an energy device such as a non-aqueous electrolytic solution secondary battery, the compound(s) represented by general formula(e) (A1) and/or (A2) is/are dissolved in the non-aqueous electrolytic solution; and a method in which a compound(s) capable of generating any of the compounds represented by general formulae (A1) and (A2) in a non-aqueous electrolytic solution or in a non-aqueous electrolytic solution secondary battery, is/are mixed into a non-aqueous electrolytic solution or a non-aqueous electrolytic solution secondary battery, in advance, to obtain an electrolytic solution containing the compound(s) represented by general formula (e) (A1) and/or (A2). Any of these methods may be used in the present invention.

Further, the method of measuring the content of each of the compounds represented by general formulae (A1) and (A2) in the above-described non-aqueous electrolytic solution, and in the resulting non-aqueous electrolytic solution secondary battery, is not particularly limited, and any known method can be used. Specific examples of the method include gas chromatography, liquid chromatography, and ¹H and ¹⁹F nuclear magnetic resonance spectroscopy (hereinafter, sometimes referred to as "NMR").

The reasons why the effects of the invention of the present application can be obtained by the non-aqueous electrolytic solution containing any of the compounds represented by general formulae (A1) and (A2) are assumed to be as follows.

A cyclic fluorinated phosphate ester compound is reduced by accepting an electron on the surface of a negative electrode, and then reacts with a solvent reduction product to release a fluorine ion and a cyclic phosphate ester compound. This fluorine ion is thought to interact with a lithium ion present on the negative electrode surface or in the electrolytic solution, and acts as a coating film that protects the negative electrode surface. The cyclic phosphate ester compound has a property to react with a reductive decomposition product of a solvent to undergo ring-opening, and an intermolecular crosslinked product is formed when this occurs across the molecules. It is thought that the resulting intermolecular crosslinked product precipitates because of its low solubility, and acts as a coating film that protects the negative electrode surface. In cases where the non-aqueous electrolytic solution contains a specific compound such as a cyclic carbonate containing a carbon-carbon unsaturated bond, an intermolecular crosslinked product containing the phosphate ester compound and the specific compound as the constituent components is formed, which is thought to act as a suitable coating film that protects the negative electrode surface.

Since the cyclic fluorinated phosphate ester is capable of forming different coating film species from one compound, as described above, the battery performance is assumed to be drastically improved as compared to using a common cyclic phosphorus compound or a chain fluorinated phosphorus compound.

Of the compounds represented by general formulae (A1) and (A2), a compound represented by the following formula (A3) is a novel compound, and is another embodiment of the present invention.

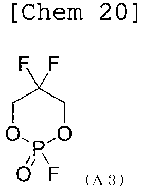

### < 1-1-2. Halogenated Phosphate Ester Compounds Used in Second Embodiment >

The second embodiment of the non-aqueous electrolytic solution contains at least one compound selected from compounds (hereinafter, sometimes referred to as "halogenated phosphate esters used in the second embodiment") represented by the following general formulae (B1) and (B2).

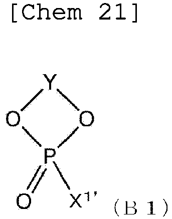

In general formula (B1), X¹' represents a halogen atom; and Y represents a divalent alkyl group in which the number of carbon atoms forming a ring together with a part of a halogenated phosphate ester is from 2 to 4, with the proviso that one or more hydrogen atoms bonded to the carbon atoms forming the ring, of the carbon atoms of Y, are optionally substituted with a halogen atom or an organic group having 6 or less carbon atoms.

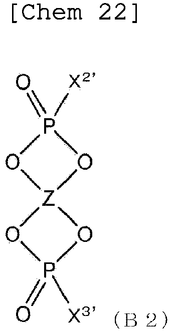

In general formula (B2), each of X²' and X³' independently represents a halogen atom; and Z represents a tetravalent alkyl group in which the number of carbon atoms forming rings together with a part of a halogenated phosphate ester is from 4 to 8, with the proviso that one or more hydrogen atoms bonded to the carbon atoms forming the rings, of the carbon atoms of Z, are optionally substituted with a halogen atom or an organic group having 6 or less carbon atoms.

First, a description will be given of a compound represented by general formula (B1).

### < 1-1-2-1. X¹' >

X¹' in general formula (B1) represents a halogen atom. Specific examples thereof include fluorine atom, chlorine atom, bromine atom and iodine atom. Among these, X¹' is preferably a fluorine atom. In cases where X¹' is a fluorine atom, and when the resulting non-aqueous electrolytic solution is used in a battery, a coating film on the surface of a negative electrode is stabilized, and the capacity retention rate during repeated charging and discharging of the battery is improved.

### < 1-1-2-2. Y >

Y in general formula (B1) represents a divalent alkyl group in which the number of carbon atoms forming a ring together with a part of a halogenated phosphate ester is from 2 to 4. Specific examples thereof include the following structures. In the following structures, each * represents a bond with an oxygen atom of the halogenated phosphate ester. Among these structures, one in which the number of carbon atoms forming a ring together with a part of the halogenated phosphate ester is 2 or 3 is preferred, from the viewpoint of ease of industrial handleability in all the processes during the production and storage of the halogenated phosphate ester compound used in the second embodiment, and during the production and use of the electrolytic solution. Above all, one in which the number of carbon atoms forming a ring together with a part of the halogenated phosphate ester is 3 is particularly preferred.

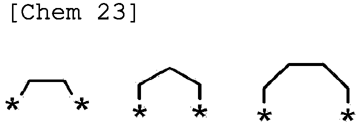

In general formula (B1), one or more hydrogen atoms bonded to the carbon atoms forming the ring, of the carbon atoms of Y, are optionally substituted with a halogen atom or an organic group having 6 or less carbon atoms. The "organic group" as used herein refers to a group containing at least one or more carbon atoms.

Specific examples of the halogen atom include fluorine atom, chlorine atom, bromine atom and iodine atom. Among these, the halogen atom is preferably a fluorine atom, because, when the resulting electrolytic solution is used in an energy device, it becomes easier to further improve the capacity retention rate during repeated charging and discharging. Further, at least one of the hydrogen atoms bonded to the carbon atoms forming the ring, of the carbon atoms of Y, is preferably substituted with a fluorine atom.

Specific examples of the organic group having 6 or less carbon atoms include a hydrocarbon group, and a group containing a hetero atom. Of these, a hydrocarbon group is preferred, from the viewpoint of ease of industrial handleability in all the processes during the production and storage of the halogenated phosphate ester used in the present embodiment, and during the production and use of the electrolytic solution. From the viewpoint of improving the compatibility with another compound(s) in the electrolytic solution to make it easier to control the characteristics of the electrolytic solution, on the other hand, a group containing a hetero atom is preferred.

Specific examples of the hydrocarbon group include a saturated hydrocarbon group, and a hydrocarbon group containing an unsaturated bond. Of these, a saturated hydrocarbon group is preferred, from the viewpoint of making it easier to improve the capacity retention rate during repeated charging and discharging, in the resulting energy device.

Specific examples of the saturated hydrocarbon group include:
linear alkyl groups such as methyl group, ethyl group, n-propyl group, n-butyl group and n-hexyl group;
branched alkyl groups such as iso-propyl group, isobutyl group and sec-butyl group, neopentyl group; and
groups partially containing a cyclic structure, such as cyclobutyl group, cyclohexyl group and cyclopentylmethyl group.
Among these, one having 4 or less carbon atoms is preferred, one having 3 or less carbon atoms is more preferred, and one having 2 or less carbon atoms is particularly preferred, from the viewpoint of making it easier to further improve the repeated capacity retention rate, in the resulting energy device.

The hydrocarbon group containing an unsaturated bond is not particularly limited, as long as the group is any one of the above-described saturated hydrocarbon groups that have a structure containing one or more carbon-carbon double bonds or triple bonds. Specific examples thereof include ethenyl group, ethynyl group, allyl group, 2-propynyl group, isopropenyl group, 1-cyclohexenyl group and phenyl group. Among these, the hydrocarbon group containing an unsaturated bond is preferably one having 3 or less carbon atoms, more preferably an ethenyl group or an allyl group, and particularly preferably an ethenyl group, from the viewpoint of making it easier to further improve the capacity retention rate during repeated charging and discharging, in the resulting energy device.

Specific examples of the organic group having 6 or less carbon atoms, when the organic group is a group containing a hetero atom, include:
groups containing a cyano group, such as cyano group, cyanomethyl group and 2-cyanoethyl group;
groups containing a halogen atom, such as fluoromethyl group, chloromethyl group, bromomethyl group, iodomethyl group, trifluoromethyl group, 2,2,2-trifluoroethyl group, 2,2,3,3-tetrafluoropropyl group and 2-fluorophenyl group;
groups containing an ether or thioether structure, such as methoxy group, ethoxy group, iso-propoxy group, tert-butoxy group, phenyloxy group, methoxymethyl group, ethoxymethyl group, methylthio group, ethylthio group, tert-butylthio group, 3-(methylthio)propyl group and 2-(methylthio)butyl group;
groups containing an amino group, such as dimethylamino group, diethylamino group and dimethylaminomethyl group;
groups containing a carbonyl, ester or carbonate structure, such as acetyl group, methoxycarbonyl group, methylcarbonyloxy group, methoxycarbonyloxy group and 1-(ethoxycarbonyl)ethyl group;
groups containing a sulfonyl or sulfonate ester structure, such as methanesulfonyl group, methanesulfonyloxy group, and trifluoromethanesulfonyloxy group;
groups containing an amide structure, such as acetamide group, acetamidemethyl group and dimethylaminocarbonyl group;
groups containing a nitro group, such as nitromethyl group, 3-nitroisobutyl group and 2-nitrophenyl group;
groups containing a silicon atom, such as trimethylsilyl group and trimethylsilyl ethynyl group; and
groups containing a hetero ring, such as 2-furyl group, 5-methyl-2-furyl group, 3-pyrazolyl group, 2-imidazolyl group, 4-imidazolyl group, 2-thiophenyl group, 3-methyl-2-thiophenyl group, 2-thiazolyl group, 2-pyridyl group, 3-pyridyl group, 4-pyridyl group, 2-quinolyl group and 5-nitro-2-furyl group.
Among these, any one of a group containing a halogen atom, a group containing an ether structure, a group containing an ester or carbonate structure, and a group containing a silicon atom is preferred, from the viewpoint of making it easier to further improve the capacity retention rate during repeated charging and discharging, in the resulting energy device.

In cases where one or more hydrogen atoms bonded to the carbon atoms forming the ring, of the carbon atoms of Y, are substituted with a halogen atom or an organic group having 6 or less carbon atoms, the number of substitution is preferably 3 or less, more preferably 2 or less, and particularly preferably 1, from the viewpoint of ease of industrial handleability in all the processes during the production and storage of the halogenated phosphate ester compound of the present embodiment, and during the production and use of the electrolytic solution.

Next, a description will be given of a compound represented by general formula (B2).

### < 1-1-2-3. X²' and X³' >

Each of X²' and X³' in general formula (B2) independently represents a halogen atom. Specific examples of the halogen atom include fluorine atom, chlorine atom, bromine atom and iodine atom. Among these, X2' and X3 are each preferably a fluorine atom, from the viewpoint of making it easier to further improve the capacity retention rate during repeated charging and discharging, in the resulting energy device. Further, X²' and X³' are preferably the same, from the viewpoint of ease of industrial handleability in all the processes during the production and storage of the halogenated phosphate ester compound of the present embodiment, and during the production and use of the electrolytic solution.

### < 1-1-2-4. Z >

Z in general formula (B1) represents a tetravalent alkyl group in which the number of carbon atoms forming rings together with a part of a halogenated phosphate ester is from 4 to 8. However, the number of carbon atom is preferably from 4 to 6, and more preferably 5. Specific examples thereof include the following structures. In the following structures, each * represents a bond with an oxygen atom of the halogenated phosphate ester. Among these, a structure that binds oxygen atoms to form a six-membered ring(s) is preferred, from the viewpoint of ease of industrial handleability in all the processes during the production and storage of the halogenated phosphate ester compound of the present embodiment, and during the production and use of the electrolytic solution.

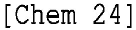

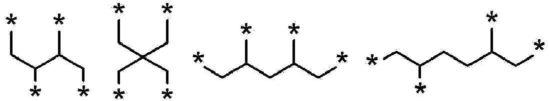

In general formula (B1), one or more hydrogen atoms bonded to the carbon atoms forming the rings, of the carbon atoms of Z, are optionally substituted with a halogen atom or an organic group having 6 or less carbon atoms. Specific examples and preferred examples of the substituent in this case include the specific examples of the halogen atom and of the organic group having 6 or less carbon atoms with which one or more hydrogen atoms bonded to the carbon atoms forming the ring, of the carbon atoms of Y, are optionally substituted.

### < 1-1-2-5. Specific Examples >

Specific examples of the compounds represented by the general formula (B1) or (B2) will be described below in specific detail. It is noted that the halogenated phosphate ester compounds used in the present invention are in no way limited to the specific examples shown below. In the following specific examples, the abbreviation "Ac" represents an acetyl group.

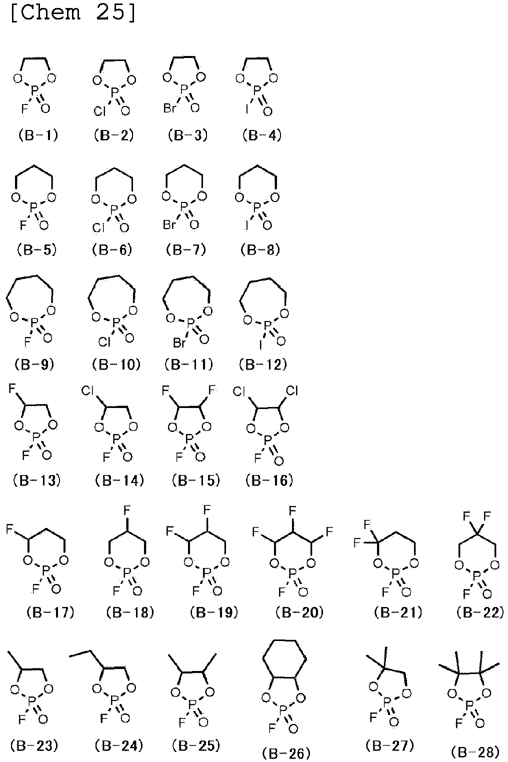

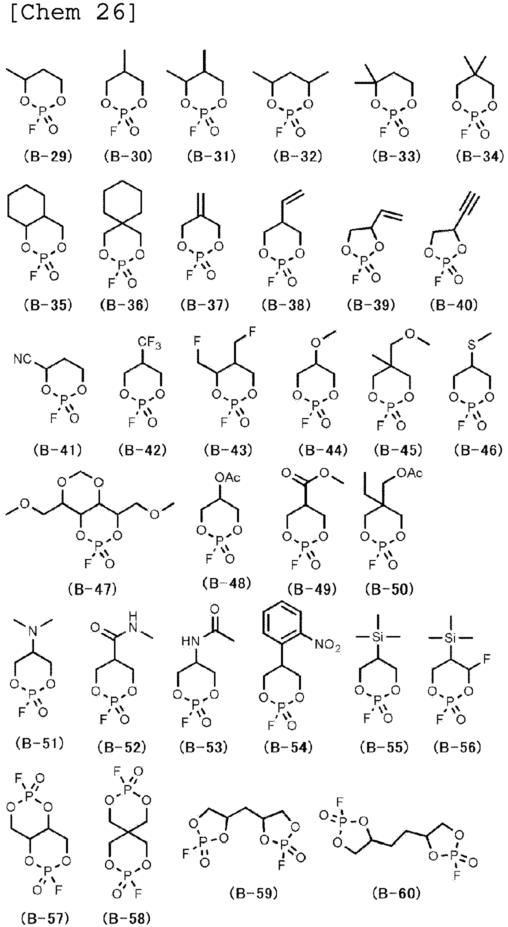

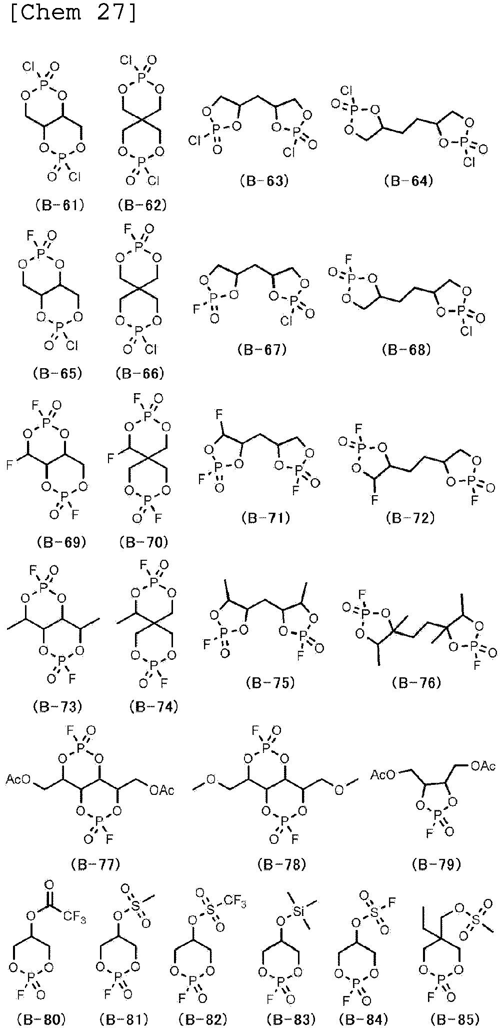

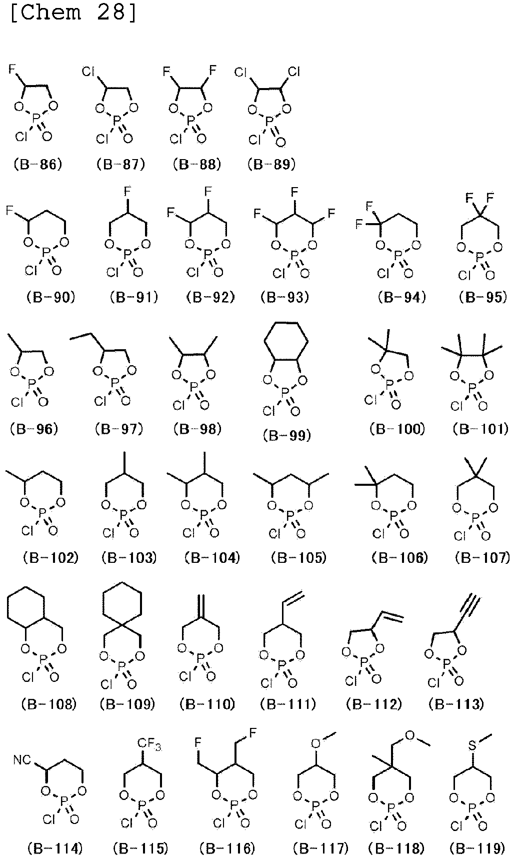

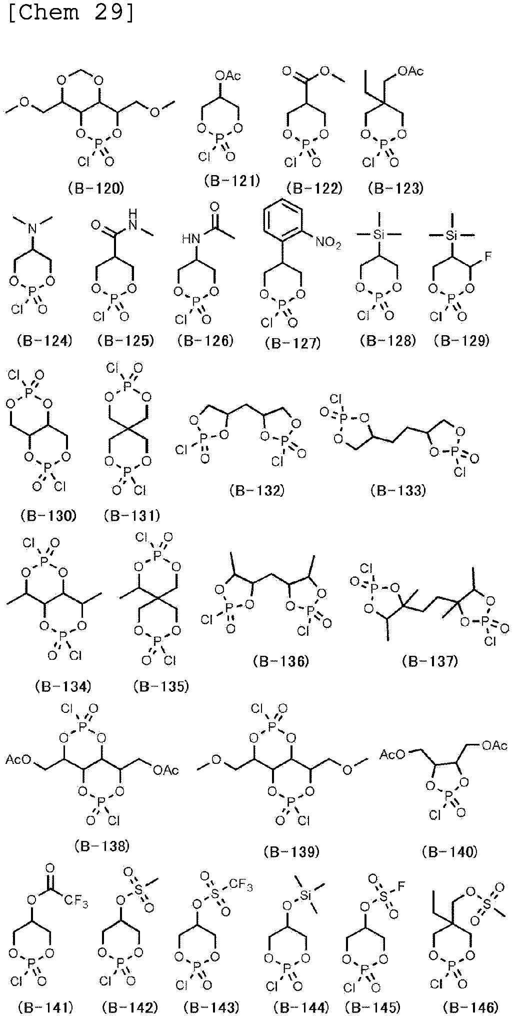

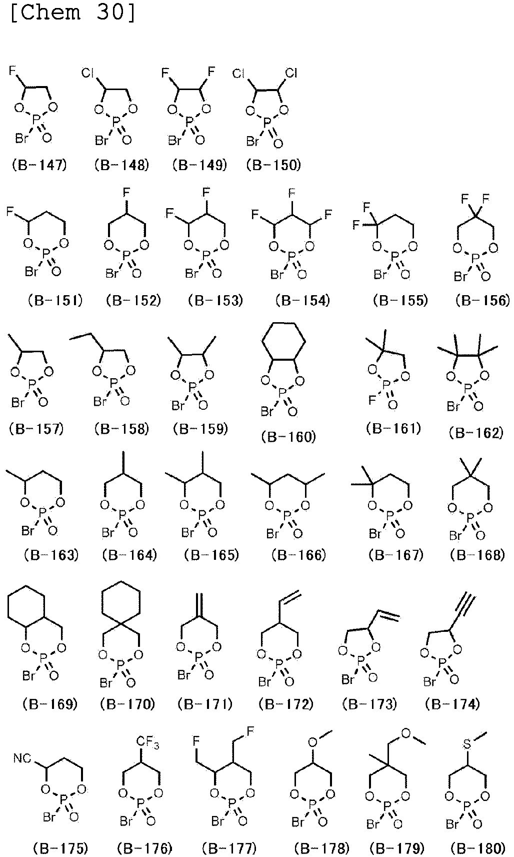

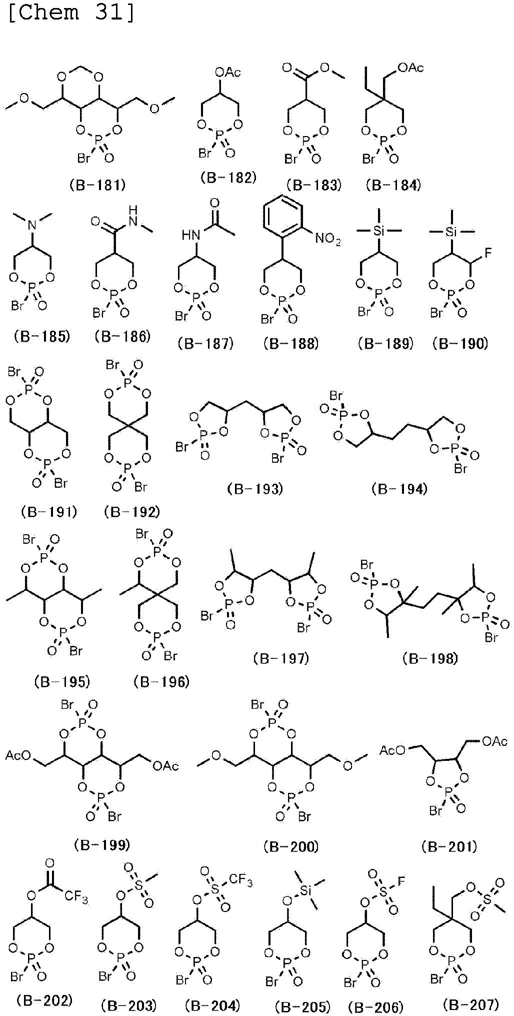

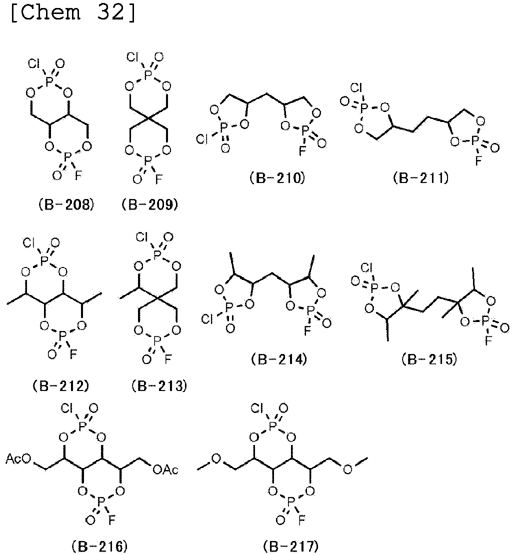

Among these, the following compounds are preferred, from the viewpoint of ease of industrial handleability in all the processes during the production and storage of the halogenated phosphate ester compounds of the present embodiment, and during the production and use of the electrolytic solution.

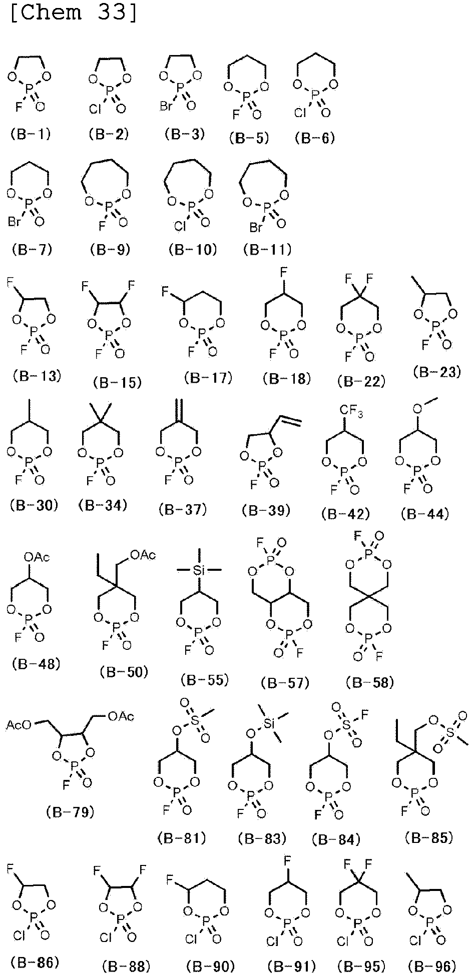

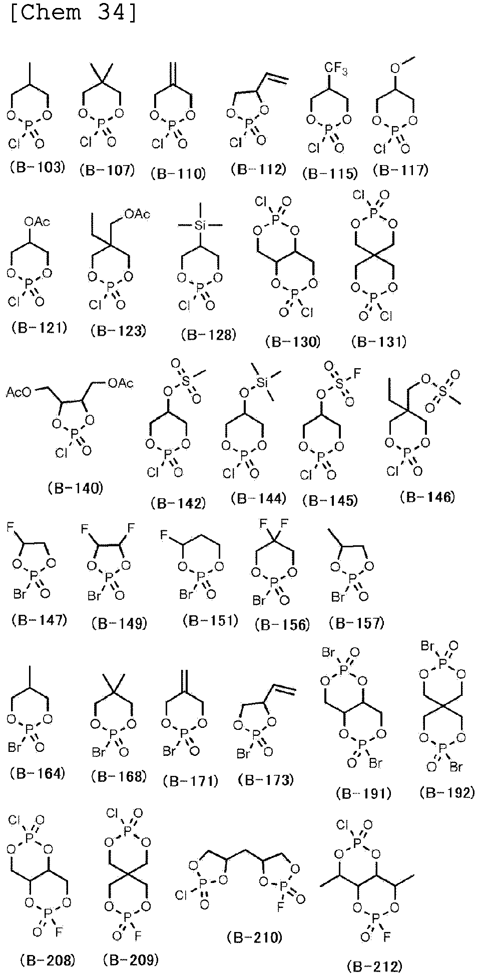

Among these, the following compounds are more preferred, because, when the resulting electrolytic solution is used in an energy device, a coating film on the surface of a negative electrode is stabilized, and the capacity retention rate during repeated charging and discharging is improved.

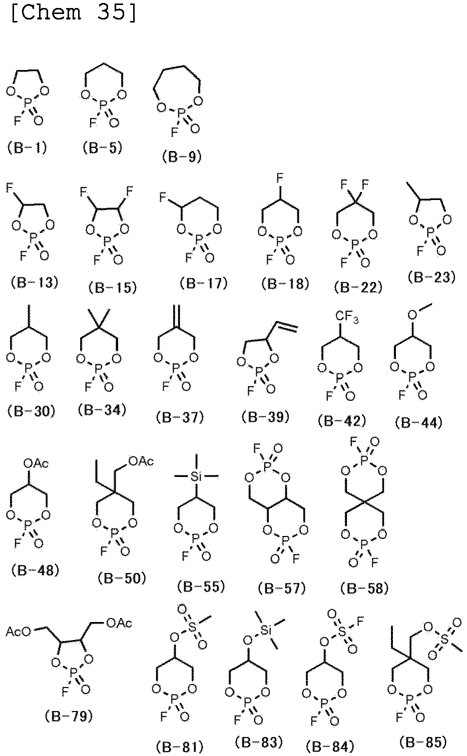

The halogenated phosphate ester compounds of the second embodiment may be used singly, or two or more kinds thereof may be used in any combination and ratio. Further, the content(s) of the halogenated phosphate ester compound(s) of the second embodiment is/are not particularly limited, and can be selected arbitrary as long as the effects of the present invention are not significantly impaired. However, it is preferred that the total content of the compounds represented by the general formulae (B1) and (B2) be 0.001% by mass or more, more preferably 0.01% by mass or more, and particularly preferably 0.1% by mass or more, with respect to the total amount of the non-aqueous electrolytic solution. When the total content of the compounds is within the range described above, a suitable coating film is formed on the negative electrode surface and the effect of reducing the side reactions of the constituent components of the electrolytic solution is exhibited, thereby increasing the effect of improving the cycle capacity retention rate during repeated charging and discharging, and the like.

On the other hand, the total content of the compounds represented by the general formulae (B1) and (B2) are preferably 30% by mass or less, more preferably 10% by mass or less, and particularly preferably 5% by mass or less, with respect to the total amount of the non-aqueous electrolytic solution. When the total content of the compounds is within the range described above, an excessive formation of a negative electrode coating film is prevented and the permeability of lithium ions can be ensured, thereby controlling the input/output characteristics and the charge/discharge rate characteristics within suitable ranges.

Each of the compounds represented by general formulae (B1) and (B2) can be produced by a combination of known methods, without particular limitation. Examples of the production method include: a method by a cyclization reaction of a phosphoryl halide with a polyol; a method by a cyclization reaction of a chain phosphoric acid halide with a polyol; a method by an oxidative halogenation reaction of a cyclic phosphonic acid; a method by an oxidation reaction of a cyclic phosphonic acid halide; a method by halogenation by a substitution reaction of a cyclic phosphate ester; and a method by a substitution reaction or an addition reaction, or introduction or removal of a substituent by an elimination reaction, on a hydrocarbon group of a cyclic phosphoric acid halide. Further, a halogen atom on the phosphorus of a cyclic phosphoric acid halide can be replaced to a different halogen atom, by a substitution reaction. Examples further include a method of producing each compound in the electrolytic solution, by a reaction of an oxygen nucleophile, a carbon electrophile or the like derived from a cyclic carbonate or the like, with a compound containing a phosphorus atom such as LiPF₆, or a reaction between substances derived therefrom.

The non-aqueous electrolytic solution containing a compound(s) represented by general formula(e) (B1) and/or (B2) can be prepared by a known method(s), without particular limitation. Examples of the preparation method include: a method in which a compound(s) represented by the structural formula(e) of general formula(e) (B1) and/or (B2) which has/have been separately synthetized is/are added to a non-aqueous electrolytic solution; a method in which a compound(s) represented by general formula(e) (B1) and/or (B2) which has/have been separately synthetized is/are added into a solvent, followed by dissolving an electrolyte salt therein, to form a non-aqueous electrolytic solution; a method in which a compound(s) represented by general formula(e) (B1) and/or (B2) is/are mixed into any of the battery components such as active materials, electrode plates and a separator(s) which are described later, to construct a battery element in advance, and, when a non-aqueous electrolytic solution is injected into the battery element to assemble an energy device such as a non-aqueous electrolytic solution secondary battery, the compound(s) represented by general formula(e) (B1) and/or (B2) is/are dissolved in the non-aqueous electrolytic solution; and a method in which a compound(s) capable of generating any of the compounds represented by general formulae (B1) and (B2) in a non-aqueous electrolytic solution or in a non-aqueous electrolytic solution secondary battery, is/are mixed into a non-aqueous electrolytic solution or a non-aqueous electrolytic solution secondary battery, in advance, to obtain an electrolytic solution containing the compound(s) represented by general formula(e) (B1) and/or (B2). Any of these methods may be used in the present invention.

Further, the method of measuring the content of each of the compounds represented by general formulae (B1) and (B2) in the above-described non-aqueous electrolytic solution, and in the resulting non-aqueous electrolytic solution secondary battery, is not particularly limited, and any known method can be used. Specific examples of the method include gas chromatography, liquid chromatography, and ¹H and ¹⁹F nuclear magnetic resonance spectroscopy (hereinafter, sometimes referred to as "NMR").

The reasons why the effects of the invention of the present application can be obtained by the non-aqueous electrolytic solution containing a compound(s) represented by general formula(e) (B1) and/or (B2) are assumed to be as follows.

A cyclic fluorinated phosphate ester compound is assumed to react to with the surface of a negative electrode active material containing a silicon atom and the like, and to suitably modify the surface of a negative electrode. Further, the cyclic fluorinated phosphate ester compound is reduced by accepting an electron on the negative electrode surface, and then reacts with a solvent reduction product to release a fluorine ion and a cyclic phosphate ester compound. This fluorine ion is thought to interact with a lithium ion present on the negative electrode surface or in the electrolytic solution, and acts as a coating film that protects the negative electrode surface. The cyclic phosphate ester compound has a property to react with a reductive decomposition product of a solvent to undergo ring-opening, and an intermolecular crosslinked product is formed when this occurs across the molecules. It is thought that the resulting intermolecular crosslinked product precipitates because of its low solubility, and acts as a coating film that protects the negative electrode surface.

Since the cyclic fluorinated phosphate ester is capable of suitably modifying the negative electrode surface and forming different coating film species from one compound, as described above, the battery performance is assumed to be drastically improved as compared to using a common cyclic phosphorus compound or a chain fluorinated phosphorus compound.

The first embodiment and the second embodiment of the non-aqueous electrolytic solution described above may be used in combination. In other words, the above-described compound(s) represented by general formula(e) (B1) and/or (B2) may be incorporated into the non-aqueous electrolytic solution in the first embodiment, or alternatively, the above-described compound(s) represented by general formula(e) (A1) and/or (A2) may be incorporated into the non-aqueous electrolytic solution in the second embodiment. In these cases, the above-described embodiments and preferred requirements can be applied to the embodiments and preferred requirements of the respective compounds.

### < 1-1-3. Specific Compound >

The non-aqueous electrolytic solution which is one embodiment of the present invention (hereinafter, the non-aqueous electrolytic solution according to the first embodiment and the non-aqueous electrolytic solution according to the second embodiment that have been described above, are not distinguished from each other, and collectively referred to as the "non-aqueous electrolytic solution", "non-aqueous electrolytic solution of the present embodiment", "non-aqueous electrolytic solution according to the present embodiment", or the like) preferably contains at least one specific compound selected from the group consisting of: a cyclic carbonate containing a fluorine atom, a cyclic carbonate containing a carbon-carbon unsaturated bond, a difluorophosphate, a salt having an FSO₂ structure, a compound containing an isocyanato group, a compound containing a cyano group, a cyclic sulfonate ester and a dicarboxylic acid complex salt.

Each of the specific compounds according to the present embodiment is thought to react with a compound represented by general formula (A1) or (A2), or by general formula (B1) or (B2), that has been reduced on a reducing electrode, among a plurality of electrodes, of an energy device, to concertedly form an on-coating film-structure suitable for an electrode reaction. The above-described action and principle are not particularly limited to the action and principle described below, but the present inventors assume as follows. Assumed mechanisms of the reactions of the following compounds (i) to (viii), with a nucleophile Nu⁻ which has been formed on the reducing electrode surface by the reduction of the compound represented by general formula (A1) or (A2), or by general formula (B1) or (B2), are shown below: (i) a cyclic carbonate containing a fluorine atom; (ii) a cyclic carbonate containing a carbon-carbon unsaturated bond; (iii) a difluorophosphate; (iv) a salt having an FSO₂ structure; (v) a compound containing an isocyanato group; (vi) a compound containing a cyano group; (vii) a cyclic sulfonate ester; and (viii) a dicarboxylic acid complex salt.

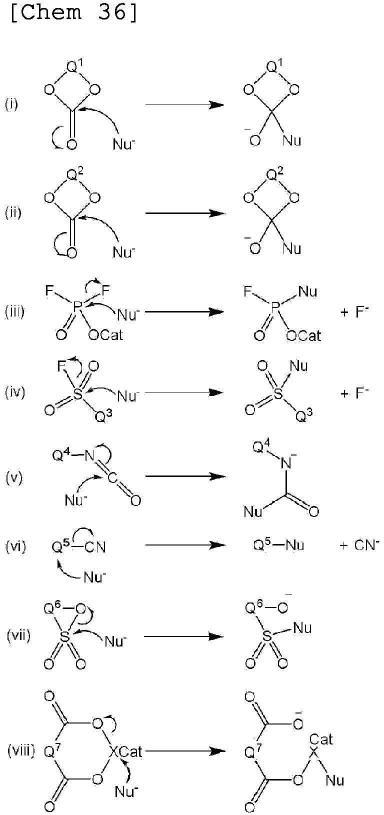

In the reaction formulae described above, Cat represents a cation as a constituent component of the corresponding salt. Q¹ represents a divalent organic group containing fluorine, Q² represents a divalent organic group containing a carbon-carbon unsaturated bond, each of Q³ to Q⁵ represents a monovalent organic group, Q⁶ represents a divalent organic group, Q⁷ represents a single bond or a divalent organic group, and X represents a divalent organic group containing the central element of the complex.

As shown in the reaction formulae, it is assumed that each of specific compounds includes a site for receiving a nucleophilic attack, and each compound further reacts with the compound of (A1) or (A2) or the compound of (B1) or (B2) as well, with each reaction shown above as an initiating reaction, thereby forming a structure in the form of a coating film which suitably supports the electrode reaction.

The molecular weight of each of the specific compounds is not particularly limited, and can be selected arbitrarily as long as the effects of the present invention are not significantly impaired. However, one having a molecular weight of 50 or more and 250 or less is preferred. When the molecular weight of each specific compound is within this range, the specific compound has a good solubility in the non-aqueous electrolytic solution, and the effect of the addition thereof can be sufficiently obtained.

The method of producing each specific compound is not particularly limited, as well, and a known method can be arbitrarily selected for the production. A commercially available product may also be used.

The specific compounds may be incorporated into the non-aqueous electrolytic solution of the present embodiment singly, or two or more kinds thereof may be used in any combination and ratio.

### < 1-1-3-1. Cyclic Carbonate Containing Fluorine Atom >

Among the specific compounds, the cyclic carbonate containing a fluorine atom (hereinafter, sometimes abbreviated as "fluorinated cyclic carbonate") is not particularly limited as long as it contains a fluorine atom, and any fluorinated cyclic carbonate can be used.

The fluorinated cyclic carbonate may be, for example, a cyclic carbonate derivative containing an alkylene group having from 2 to 6 carbon atoms, such as an ethylene carbonate derivative. The ethylene carbonate derivative may be, for example, ethylene carbonate or a fluorinated ethylene carbonate substituted with an alkyl group (such as an alkyl group having from 1 to 4 carbon atoms), and one having from 1 to 8 fluorine atoms is preferred, in particular.

Specific examples thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate and 4,4-difluoro-5,5-dimethylethylene carbonate.

Among these, at least one selected from the group consisting of monofluoroethylene carbonate, 4,4-difluoroethylene carbonate, 4,5-difluoroethylene carbonate and 4,5-difluoro-4,5-dimethylethylene carbonate, is more preferred, from the viewpoints of imparting a high ionic conductivity and suitably forming an interface protective coating film.

These fluorinated cyclic carbonates may be used singly, or two or more kinds thereof may be used in any combination and ratio. The content of the fluorinated cyclic carbonate is not particularly limited, and can be selected arbitrarily as long as the effects of the present invention are not significantly impaired. The content is usually 0.001% by mass or more, preferably 0.01% by mass or more and more preferably 0.1% by mass or more, and at the same time, usually 8% by mass or less, preferably 6% by mass or less and more preferably 5% by mass or less, in 100% by mass of the non-aqueous electrolytic solution. When the content is within this range, the resulting non-aqueous electrolytic solution secondary battery is more likely to exhibit sufficient cycle characteristics and high temperature storage characteristics. When the content is within this range, the resulting non-aqueous electrolytic solution secondary battery is more likely to exhibit sufficient cycle characteristics and high temperature storage characteristics.

The fluorinated cyclic carbonate may also be used as an auxiliary agent for the non-aqueous electrolytic solution, or as a non-aqueous solvent. The content of the fluorinated cyclic carbonate, in the case of being used as a non-aqueous solvent, is usually 8% by mass or more, preferably 10% by mass or more and more preferably 12% by mass or more, and at the same time, usually 85% by mass or less, preferably 80% by mass or less and more preferably 75% by mass or less, in 100% by mass of the non-aqueous electrolytic solution. When the content of the fluorinated cyclic carbonate is within this range, the resulting non-aqueous electrolytic solution secondary battery is more likely to exhibit a sufficient effect of improving the cycle characteristics, making it easier to avoid a decrease in discharge capacity retention rate.

### < 1-1-3-2. Cyclic Carbonate Containing Carbon-Carbon Unsaturated Bond >

Among the specific compounds, the cyclic carbonate containing a carbon-carbon unsaturated bond (hereinafter, sometimes abbreviated as "unsaturated cyclic carbonate") is not particularly limited as long as it is a cyclic carbonate containing a carbon-carbon unsaturated bond, and any carbonate containing a carbon-carbon unsaturated bond can be used. It is noted here that a cyclic carbonate containing a substituent having an aromatic ring is also included in the definition of the cyclic carbonate containing a carbon-carbon unsaturated bond. The method of producing the unsaturated cyclic carbonate is not particularly limited, and a known method can be arbitrarily selected for the production.

Examples of the unsaturated cyclic carbonate include vinylene carbonates, ethylene carbonates substituted with a substituent having an aromatic ring or a carbon-carbon unsaturated bond, phenyl carbonates, vinyl carbonates and allyl carbonates.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate and allylvinylene carbonate.

Specific examples of the ethylene carbonates substituted with a substituent having an aromatic ring or a carbon-carbon unsaturated bond include vinylethylene carbonate, 4,5-divinylethylene carbonate, phenylethylene carbonate, 4,5-diphenyl ethylene carbonate, ethynylethylene carbonate and 4,5-diethynylethylene carbonate.

Among these, vinylene carbonates, and ethylene carbonates substituted with a substituent having an aromatic ring or a carbon-carbon unsaturated bond are preferred. In particular, vinylene carbonate, 4,5-diphenylvinylene carbonate, 4,5-dimethylvinylene carbonate, vinylethylene carbonate or ethynylethylene carbonate is more suitably used, because a stable interface protective coating film can be formed.

The molecular weight of the unsaturated cyclic carbonate is not particularly limited, and can be selected arbitrarily as long as the effects of the present invention are not significantly impaired. The molecular weight of the unsaturated cyclic carbonate is usually 50 or more and preferably 80 or more, and at the same time, usually 250 or less and preferably 150 or less. When the molecular weight of the unsaturated cyclic carbonate is within this range, the solubility of the unsaturated cyclic carbonate in the non-aqueous electrolytic solution can be more easily ensured, and sufficient effects of the present invention are more likely to be obtained.

These unsaturated cyclic carbonates may be used singly, or two or more kinds thereof may be used in any combination and ratio. Further, the content of the unsaturated cyclic carbonate is not particularly limited, and can be selected arbitrarily as long as the effects of the present invention are not significantly impaired. The content of the unsaturated cyclic carbonate is usually 0.001% by mass or more, preferably 0.01% by mass or more, more preferably 0.1% by mass or more and still more preferably 0.2% by mass or more, and at the same time, usually 10% by mass or less, preferably 8% by mass or less and more preferably 5% by mass or less, in 100% by mass of the non-aqueous electrolytic solution. When the content of the unsaturated cyclic carbonate is within the range described above, the resulting non-aqueous electrolytic solution secondary battery is more likely to exhibit sufficient high temperature storage characteristics and a sufficient effect of improving the cycle characteristics.

### < 1-1-3-3. Difluorophosphate >

Among the specific compounds, the difluorophosphate is not particularly limited as long as it is a salt containing a difluorophosphate anion as a constituent component, and any difluorophosphate can be used.

Examples of the difluorophosphate include lithium difluorophosphate (sometimes abbreviated as "LiPO₂F₂"), sodium difluorophosphate, potassium difluorophosphate and ammonium difluorophosphate.

Among these, lithium difluorophosphate is preferred, and more suitably used because it can contribute to the formation of a stable structure in the form of a coating film.

The content of the difluorophosphate is not particularly limited, and can be selected arbitrarily as long as the effects of the present invention are not significantly impaired. However, the content is preferably 0.001% by mass or more and 2.0% by mass or less, with respect to the amount of the non-aqueous electrolytic solution of the present embodiment.

When the content of the difluorophosphate is equal to or higher than the lower limit described above, a sufficient effect of improving the cycle characteristics can be given to the resulting non-aqueous electrolytic solution secondary battery. Further, when the content is equal to or lower than the upper limit described above, an increase in the production cost of the non-aqueous electrolytic solution secondary battery can be avoided. The content of the difluorophosphate is more preferably 0.01% by mass or more, still more preferably 0.1% by mass or more and particularly preferably 0.2% by mass or more, and at the same time, more preferably1.5% by mass or less, still more preferably 1.2% by mass or less and particularly preferably 1.1% by mass or less.

### < 1-1-3-4. Salt Having FSO₂ Structure >

Among the specific compounds, the salt having an FSO₂ structure is not particularly limited as long as it is a salt containing an anion having an FSO₂ structure as a constituent component, and any salt having an FSO₂ structure can be used.

Examples of the salt having an FSO₂ structure include lithium fluorosulfonate (hereinafter, also abbreviate as "FSO₃Li"), sodium fluorosulfonate, potassium fluorosulfonate, ammonium fluorosulfonate, (FSO₂)₂NLi, (FSO₂)(CF₃SO₂)NLi and (FSO₂)(CF₃CF₂SO₂)NLi.

Among these, lithium fluorosulfonate and (FSO₂)₂NLi are preferred, and more suitably used because it can contribute to the formation of a stable structure in the form of a coating film.

The content of the salt having an FSO₂ structure is not particularly limited, and can be selected arbitrarily as long as the effects of the present invention are not significantly impaired. However, the content is preferably 0.001% by mass or more and 8.0% by mass or less, with respect to the amount of the non-aqueous electrolytic solution of the present embodiment. When the content of the salt having an FSO₂ structure is equal to or higher than the lower limit described above, a sufficient effect of improving the cycle characteristics can be given to the resulting non-aqueous electrolytic solution secondary battery. Further, when the content is equal to or lower than the upper limit described above, an increase in the production cost of the non-aqueous electrolytic solution secondary battery can be avoided. The content of the salt having an FSO₂ structure in cases where the salt is FSO₃Li, is more preferably 0.01% by mass or more, still more preferably 0.1% by mass or more and particularly preferably 0.2% by mass or more, and at the same time, more preferably 3.0% by mass or less, still more preferably 2.5% by mass or less and particularly preferably 2.0% by mass or less.

### < 1-1-3-5. Compound Containing Isocyanato Group >

Among the specific compounds, the compound containing an isocyanato group (hereinafter, sometimes abbreviated as "isocyanate") is not particularly limited, and any isocyanate can be used.

Examples of the isocyanate include monoisocyanates, diisocyanates and triisocyanates.

Specific examples of the monoisocyanates include isocyanatomethane, isocyanatoethane, 1-isocyanatopropane, 1-isocyanatobutane, 1-isocyanatopentane, 1-isocyanatohexane, 1-isocyanatoheptane, 1-isocyanatooctane, 1-isocyanatononane, 1-isocyanatodecane, isocyanatocyclohexane, methoxycarbonyl isocyanate, ethoxycarbonyl isocyanate, propoxycarbonyl isocyanate, butoxycarbonyl isocyanate, methoxysulfonylisocyanate, ethoxysulfonyl isocyanate, propoxysulfonyl isocyanate, butoxysulfonyl isocyanate and fluorosulfonyl isocyanate.

Specific examples of the diisocyanates include 1,4-diisocyanatobutane, 1,5-diisocyanatopentane, 1,6-diisocyanatohexane, 1,7-diisocyanatoheptane, 1,8-diisocyanatooctane, 1,9-diisocyanatononane, 1,10-diisocyanatodecane, 1,3-diisocyanatopropene, 1,4-diisocyanato-2-butene, 1,4-diisocyanato-2-fluorobutane, 1,4-diisocyanato-2,3-difluorobutane, 1,5-diisocyanato-2-pentene, 1,5-diisocyanato-2-methylpentane, 1,6-diisocyanato-2-hexene, 1,6-diisocyanato-3-hexene, 1,6-diisocyanato-3-fluorohexane, 1,6-diisocyanato-3,4-difluorohexane, toluene diisocyanate, xylene diisocyanate, tolylene diisocyanate, 1,2-bis(isocyanatomethyl)cyclohexane, 1,3-bis(isocyanatomethyl)cyclohexane, 1,4-bis(isocyanatomethyl)cyclohexane, 1,2-diisocyanatocyclohexane, 1,3-diisocyanatocyclohexane, 1,4-diisocyanatocyclohexane, dicyclohexylmethane-1,1'-diisocyanate, dicyclohexylmethane-2,2'-diisocyanate, dicyclohexylmethane-3,3'-diisocyanate, dicyclohexylmethane-4,4'-diisocyanate, isophorone diisocyanate, bicyclo[2.2.1]heptane-2,5-diylbis(methyl=isocyanate), bicyclo[2.2.1]heptane-2,6-diylbis(methyl=isocyanate), 2,4,4-trimethylhexamethylene diisocyanate and 2,2,4-trimethylhexamethylene diisocyanate.

Specific examples of the triisocyanates include 1,6,11-triisocyanatoundecane, 4-isocyanatomethyl-1,8-octamethylenediisocyanate, 1,3,5-triisocyanatemethylbenzene, 1,3,5-tris(6-isocyanatohex-1-yl)-1,3,5-triazine-2,4,6(1H,3H,5H)-trione and 4-(isocyanatomethyl)octamethylene=diisocyanate.

Among these, 1,6-diisocyanatohexane, 1,3-bis(isocyanatomethyl)cyclohexane, 1,3,5-tris(6-isocyanatohex-1-yl)-1,3,5-triazine-2,4,6(1H,3H,5H)-trione, 2,4,4-trimethylhexamethylene diisocyanate and 2,2,4-trimethylhexamethylene diisocyanate are preferred, from the viewpoints of ease of industrial availability and being able to achieve a low production cost of the electrolytic solution. Further, these compounds can contribute to the formation of a stable structure in the form of a coating film from the technical point of view, as well, and are more suitably used.

The content of the isocyanate is not particularly limited, and can be selected arbitrarily as long as the effects of the present invention are not significantly impaired. However, the content is preferably 0.001% by mass or more and 1.0% by mass or less, with respect to the amount of the non-aqueous electrolytic solution of the present embodiment.

When the content of the isocyanate is equal to or higher than the lower limit described above, a sufficient effect of improving the cycle characteristics can be given to the resulting non-aqueous electrolytic solution secondary battery. Further, when the content is equal to or lower than the upper limit described above, an increase in the initial resistance of the non-aqueous electrolytic solution secondary battery can be avoided. The content of the isocyanate is more preferably 0.01% by mass or more, still more preferably 0.1% by mass or more and particularly preferably 0.2% by mass or more, and at the same time, more preferably 0.8% by mass or less, still more preferably 0.7% by mass or less and particularly preferably 0.6% by mass or less.

### < 1-1-3-6. Compound Containing Cyano Croup >

Among the specific compounds, the compound containing a cyano group (hereinafter, sometimes abbreviated as "nitrile") is not particularly limited, and any nitrile can be used.

Examples of the nitrile include mononitriles and dinitriles.

Specific examples of the mononitriles include acetonitrile, propionitrile, butyronitrile, isobutyronitrile, valeronitrile, isovaleronitrile, lauronitrile, 2-methylbutyronitrile, trimethylacetonitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentene nitrile, 2-methyl-2-pentene nitrile, 3-methyl-2-pentene nitrile, 2-hexene nitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, 1,2,3-propanetricarbonitrile, 1,3,5-pentanetricarbonitrile and pentafluoropropionitrile.

Specific examples of the dinitriles include malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3-dimethylsuccinonitrile, bicyclohexyl-1,1-dicarbonitrile, bicyclohexyl-2,2-dicarbonitrile, bicyclohexyl-3,3-dicarbonitrile, 2,5-dimethyl-2,5-hexanedicarbonitrile, 2,3-diisobutyl-2,3-dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, maleonitrile, fumaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile and 3,3'-(ethylenedithio)dipropionitrile.

Among these, dinitriles such as malononitrile, succinonitrile, glutaronitrile, adiponitrile, pimelonitrile, suberonitrile, azelanitrile, sebaconitrile, undecanedinitrile and dodecanedinitrile can contribute to the formation of a stable structure in the form of a coating film, and are more suitably used.

The content of the nitrile is not particularly limited, and can be selected arbitrarily as long as the effects of the present invention are not significantly impaired. However, the content is preferably 0.001% by mass or more and 5.0% by mass or less, with respect to the amount of the non-aqueous electrolytic solution of the present embodiment.

When the content of the nitrile is equal to or higher than the lower limit described above, a sufficient effect of improving the cycle characteristics can be given to the resulting non-aqueous electrolytic solution secondary battery. Further, when the content is equal to or lower than the upper limit described above, it is possible to avoid an increase in the initial resistance and to reduce the deterioration of the rate characteristics, of the non-aqueous electrolytic solution secondary battery. The content of the nitrile is more preferably 0.01% by mass or more, still more preferably 0.1% by mass or more and particularly preferably 0.2% by mass or more, and at the same timer, more preferably4.0% by mass or less, still more preferably 3.0% by mass or less and particularly preferably 2.5% by mass or less.

### < 1-1-3-7. Cyclic Sulfonate Ester >

Among the specific compounds, the cyclic sulfonate ester is not particularly limited, and any cyclic sulfonate ester can be used.

Examples of the cyclic sulfonate ester include a saturated cyclic sulfonate ester and an unsaturated cyclic sulfonate ester.

Specific examples of the saturated cyclic sulfonate ester include 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1,4-butane sultone, 1-fluoro-1,4-butane sultone, 2-fluoro-1,4-butane sultone, 3-fluoro-1,4-butane sultone, 4-fluoro-1,4-butane sultone, 1-methyl-1,4-butane sultone, 2-methyl-1,4-butane sultone, 3-methyl-1,4-butane sultone, 4-methyl-1,4-butane sultone, methylene methanedisulfonate and ethylene methanedisulfonate.

Specific examples of the unsaturated cyclic sulfonate ester include 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1-butene-1,4-sultone, 2-butene-1,4-sultone, 3-butene-1,4-sultone, 1-fluoro-1-butene-1,4-sultone, 2-fluoro-1-butene-1,4-sultone, 3-fluoro-1-butene-1,4-sultone, 4-fluoro-1-butene-1,4-sultone, 1-fluoro-2-butene-1,4-sultone, 2-fluoro-2-butene-1,4-sultone, 3-fluoro-2-butene-1,4-sultone, 4-fluoro-2-butene-1,4-sultone, 1-fluoro-3-butene-1,4-sultone, 2-fluoro-3-butene-1,4-sultone, 3-fluoro-3-butene-1,4-sultone, 4-fluoro-3-butene-1,4-sultone, 1-methyl-1-butene-1,4-sultone, 2-methyl-1-butene-1,4-sultone, 3-methyl-1-butene-1,4-sultone, 4-methyl-1-butene-1,4-sultone, 1-methyl-2-butene-1,4-sultone, 2-methyl-2-butene-1,4-sultone, 3-methyl-2-butene-1,4-sultone, 4-methyl-2-butene-1,4-sultone, 1-methyl-3-butene-1,4-sultone, 2-methyl-3-butene-1,4-sultone, 3-methyl-3-butene-1,4-sultone and 4-methyl-3-butene-1,4-sultone.

Among those described above, 1,3-propane sultone, 1-fluoro-1,3-propane sultone, 2-fluoro-1,3-propane sultone, 3-fluoro-1,3-propane sultone, methylene methanedisulfonate, ethylene methanedisulfonate and 1-propene-1,3-sultone are more suitably used, from the viewpoints of ease of availability and being able to contribute to the formation of a stable structure in the form of a coating film.

The content of the cyclic sulfonate ester is not particularly limited, and can be selected arbitrarily as long as the effects of the present invention are not significantly impaired. However, the content is preferably 0.001% by mass or more and 3.0% by mass or less, in 100% by mass of the non-aqueous electrolytic solution of the present embodiment.

When the content of the cyclic sulfonate ester is equal to or higher than the lower limit described above, a sufficient effect of improving the cycle characteristics can be given to the resulting energy device. Further, when the content is equal to or lower than the upper limit described above, an increase in the production cost of the energy device can be avoided. The content of the cyclic sulfonate ester is more preferably 0.01% by mass or more, still more preferably 0.1% by mass or more and particularly preferably 0.2% by mass or more, and at the same time, more preferably 5.0% by mass or less, still more preferably 3.0% by mass or less and particularly preferably 2.0% by mass or less.

### < 1-1-3-8. Dicarboxylic Acid Complex Salt >

Among the specific compounds, the dicarboxylic acid complex salt is not particularly limited, and any dicarboxylic acid complex salt can be used.

Examples of the dicarboxylic acid complex salt include a dicarboxylic acid complex salt in which the central element of the complex is boron, and a dicarboxylic acid complex salt in which the central element of the complex is phosphorus.

Specific examples of the dicarboxylic acid complex salt in which the central element of the complex is boron, include lithium bis(oxalato)borate, lithium difluoro(oxalato)borate, lithium bis(malonate)borate, lithium difluoro(malonate)borate, lithium bis(methylmalonate)borate, lithium difluoro(methylmalonate)borate, lithium bis(dimethylmalonate)borate and lithium difluoro(dimethylmalonate)borate.

Specific examples of the dicarboxylic acid complex salt in which the central element of the complex is phosphorus, include lithium tris(oxalato)phosphate, lithium difluorobis(oxalato)phosphate, lithium tetrafluoro(oxalato)phosphate, lithium tris(malonate)phosphate, lithium difluorobis(malonate)phosphate, lithium tetrafluoro(malonate)phosphate, lithium tris(methylmalonate)phosphate, lithium difluorobis(methylmalonate)phosphate, lithium tetrafluoro(methylmalonate)phosphate, lithium tris(dimethylmalonate)phosphate, lithium difluorobis(dimethylmalonate)phosphate and lithium tetrafluoro(dimethylmalonate)phosphate.

Among these, lithium bis(oxalato)borate, lithium difluoro(oxalato)borate, lithium tris(oxalato)phosphate, lithium difluorobis(oxalato)phosphate and lithium tetrafluoro(oxalato)phosphate are more suitably used, from the viewpoints of ease of availability and being able to contribute to the formation of a stable structure in the form of a coating film.

The content of the dicarboxylic acid complex salt is not particularly limited, and can be selected arbitrarily as long as the effects of the present invention are not significantly impaired. However, the content is preferably 0.001% by mass or more and 2.5% by mass or less, with respect to the amount of the non-aqueous electrolytic solution of the present embodiment.

When the content of the dicarboxylic acid complex salt is equal to or higher than the lower limit described above, a sufficient effect of improving the cycle characteristics can be given to the resulting non-aqueous electrolytic solution secondary battery. Further, when the content is equal to or lower than the upper limit described above, it is possible to avoid an increase in the production cost of the non-aqueous electrolytic solution secondary battery, and to avoid the volume expansion of the non-aqueous electrolytic solution secondary battery due to the generation of gas. The content of the dicarboxylic acid complex salt is more preferably 0.01% by mass or more, still more preferably 0.1% by mass or more and particularly preferably 0.2% by mass or more, and at the same time, more preferably 5.0% by mass or less, still more preferably 3.0% by mass or less and particularly preferably 2.0% by mass or less.

### < 1-1-3-9. Preferred Specific Compound >

The non-aqueous electrolytic solution preferably contains, as the above-described specific compound, at least one compound selected from the group consisting of a cyclic carbonate containing a fluorine atom, a cyclic carbonate containing a carbon-carbon unsaturated bond, a difluorophosphate, a salt having an FSO₂ structure, a compound containing an isocyanato group, a cyclic sulfonate ester and a dicarboxylic acid complex salt. Above all, the non-aqueous electrolytic solution more preferably contains a cyclic carbonate containing a carbon-carbon unsaturated bond, a difluorophosphate or a salt having an FSO₂ structure. Specifically, the non-aqueous electrolytic solution preferably contains, as the specific compound, monofluoroethylene carbonate, 4,4-difluoroethylene carbonate, 4,5-difluoroethylene carbonate, vinylene carbonate, vinylethylene carbonate, ethynylethylene carbonate, lithium difluorophosphate, lithium fluorosulfonate, (FSO₂)₂NLi, 1,6-diisocyanatohexane, 1,3-bis(isocyanatomethyl)cyclohexane, 1,3-propane sultone, methylene methanedisulfonate, 1-propene-1,3-sultone, lithium bis(oxalato)borate, lithium difluoro(oxalato)borate, lithium tris(oxalato)phosphate, lithium difluorobis(oxalato)phosphate or lithium tetrafluoro(oxalato)phosphate, and more preferably contains monofluoroethylene carbonate, vinylene carbonate, vinylethylene carbonate, lithium difluorophosphate, lithium fluorosulfonate, (FSO₂)₂NLi, 1,6-diisocyanatohexane, 1,3-bis(isocyanatomethyl)cyclohexane, 1,3-propane sultone, methylene methanedisulfonate, 1-propene-1,3-sultone, lithium bis(oxalato)borate, lithium difluoro(oxalato)borate or lithium difluorobis(oxalato)phosphate.

Further, it is also preferred that the non-aqueous electrolytic solution contain a plurality of kinds of the specific compounds, and it is more preferred that the non-aqueous electrolytic solution contain both a cyclic carbonate containing a carbon-carbon unsaturated bond and a difluorophosphate.

### < 1-1-4. Electrolyte >

The non-aqueous electrolytic solution according to the present embodiment contains an electrolyte as a component thereof, as with common non-aqueous electrolytic solutions. The non-aqueous electrolytic solution preferably contains one or more lithium salts as electrolytes.

The lithium salt is not particularly limited as long as the salt is known to be used as an electrolyte, and any lithium salt can be used. Specific examples thereof include the following salts.

Inorganic halogenated lithium salts such as LiBF₄, LiClO₄, LiAlF₄, LiPF₆, LiSbF₆, LiTaF₆, LiWOF₅ and LiWF₇;
lithium carboxylate salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li and CF₃CF₂CF₂CF₂CO₂Li;
lithium sulfonate salts other than FO₃Li, such as CH₃SO₃Li, CH₂FSO₃Li, CHF₂SO₃Li, CF₃SO₃Li, CF₃CF₂SO₃Li, CF₃CF₂CF₂SO₃Li and CF₃CF₂CF₂CF₂SO₃Li;
lithium sulfate salts such as lithium methylsulfate, lithium ethylsulfate, lithium 2-propynylsulfate, lithium 1-methyl-2-propynylsulfate, lithium 1,1-dimethyl-2-propynylsulfate, lithium 2,2,2-trifluoroethylsulfate and dilithium ethylenedisulfate;
lithium imide salts other than the salt having an FSO₂ structure, such as LiN(FCO₂)₂, LiN(CF₃SO₂)₂, LiN(C₂F₅SO₂)₂, lithium cyclic 1,2-perfluoroethanedisulfonylimide, lithium cyclic 1,3-perfluoropropanedisulfonylimide and LiN(CF₃SO₂)(C₄F₉SO₂);
lithium methide salts such as LiC(FSO₂)₃, LiC(CF₃SO₂)₃ and LiC(C₂F₅SO₂)₃;
lithium oxalate salts such as lithium difluorooxalatoborate, lithium tetrafluorooxalatophosphate and lithium tris(oxalato)phosphate; and
fluorine-containing organic lithium salts such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂ and LiBF₂(C₂F₅SO₂)₂.

Among these lithium salts, one or more selected from inorganic lithium salts, lithium sulfonate salts, lithium imide salts and lithium oxalate salts are preferred, from the viewpoint of further enhancing the effect of improving the input/output characteristics, charge/discharge rate and charge/discharge characteristics, and impedance characteristics after a durability test such as a high temperature storage test or a cycle test.

Above all, LiBF₄, LiPF₆, LiSbF₆, LiTaF₆, CF₃SO₃Li, LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₃SO₂)₃, LiC(C₂F₅SO₂)₃, lithium difluorooxalatoborate, lithium tetrafluorooxalatophosphate and lithium tris(oxalato)phosphate are particularly preferred, because the effect of improving the input/output characteristics, the high-rate charge/discharge characteristics, the impedance characteristics, the high temperature storage characteristics, the cycle characteristics and the like can be obtained.

The total concentration of these electrolytes in the non-aqueous electrolytic solution is not particularly limited, and usually 8% by mass or more, preferably 8.5% by mass or more, and more preferably 9% by mass or more, with respect to 100% by mass of the total amount of the non-aqueous electrolytic solution. The upper limit thereof is usually 18% by mass or less, preferably 17% by mass or less, and more preferably 16% by mass or less. The total concentration of the electrolytes is preferably within the range described above, because an appropriate electrical conductivity for the operation of the resulting battery can be achieved.

These electrolytes may be used singly, in combination of two or more kinds thereof, or in combination with any of the specific compounds. A preferred example in the case of a combined use, is a combination of: LiPF₆ and LiBF₄; LiPF₆ and LiPO₂F₂; LiPF₆ and FSO₃Li; LiPF₆ and LiN(FSO₂)₂; LiPF₆ and LiN(CF₃SO₂)₂; LiPF₆ and lithium bis(oxalato)borate; LiPF₆ and lithium tetrafluorooxalatophosphate; LiPF₆ and lithium difluorobis (oxalato) phosphate; LiPF₆ and LiBF₄ and LiPO₂F₂; LiPF₆ and LiBF₄ and FSO₃Li; LiPF₆ and LiPO₂F₂ and FSO₃Li; LiPF₆ and LiPO₂F₂ and lithium bis(oxalato)borate; LiPF₆ and LiPO₂F₂ and lithium difluorobis(oxalato)phosphate; LiPF₆ and LiPO₂F₂ and LiN(FSO₂)₂; LiPF₆ and LiPO₂F₂ and LiN(CF₃SO₂)₂; LiPF₆ and FSO₃Li and lithium bis(oxalato)borate; or LiPF₆ and FSO₃Li and lithium difluorobis(oxalato)phosphate. Such a combination has the effect of improving the input/output characteristics, the high temperature storage characteristics and the cycle characteristics. In this case, the content of LiPF₆ in the non-aqueous electrolytic solution is preferably 7% by mass or more, more preferably 7.5% by mass or more and still more preferably 8% by mass or more, and at the same time, preferably 16% by mass or less, more preferably 15% by mass or less and still more preferably 14% by mass or less. Further, the content of LiBF₄, LiPO₂F₂, FSO₃Li, LiN(FSO₂)₂LiN(CF₃SO₂)₂, lithium bis(oxalato)borate or lithium difluorobis(oxalato)phosphate in the non-aqueous electrolytic solution is preferably 0.01% by mass or more, more preferably 0.05% by mass or more and still more preferably 0.1% by mass or more, and at the same time, preferably 5% by mass or less, more preferably 4% by mass or less and still more preferably 3% by mass or less. When the concentration of LiPF₆ is within the preferred range described above, an appropriate balance between the total ion content in the non-aqueous electrolytic solution and the viscosity of the non-aqueous electrolytic solution is achieved, thereby reducing the internal impedance of the resulting battery without causing an excessive decrease in the ion conductivity. This makes it further easier to obtain the effect of improving the input/output characteristics, cycle characteristics and storage characteristics due to the incorporation of LiPF₆.

The non-aqueous electrolytic solution containing the above-described electrolyte material can be prepared by a known method, without particular limitation. Examples of the preparation method include: a method in which the electrolyte material which has been separately synthetized is added to a non-aqueous electrolytic solution; a method in which the electrolyte material is mixed into any of the battery components such as active materials and electrode plates to be described later, to construct a battery element in advance, and, when a non-aqueous electrolytic solution is injected into the battery element to assemble a battery, the electrolyte material is dissolved in the non-aqueous electrolytic solution; and a method in which water is allowed to coexist in any of the battery components such as active materials, electrode plates and a separator(s), and, when a non-aqueous electrolytic solution containing the electrolyte material is used to assemble a non-aqueous electrolytic solution secondary battery, another electrolyte material is allowed to generate in the system. Any of these methods may be used in the present invention.

The method of measuring the content of each electrolyte in the above-described non-aqueous electrolytic solution, and in the resulting non-aqueous electrolytic solution secondary battery, is not particularly limited, and any known method can be used. Specific examples of the method include ion chromatography, and ¹⁹F nuclear magnetic resonance spectroscopy (hereinafter, sometimes referred to as "NMR").

### < 1-1-5. Non-aqueous Solvent >

The non-aqueous electrolytic solution according to one embodiment of the present invention usually contains a non-aqueous solvent that dissolves the above-described electrolyte, as a main component thereof, as with common non-aqueous electrolytic solutions. The non-aqueous solvent as used herein is not particularly limited, and a known organic solvent can eb used. The non-aqueous electrolytic solution preferably contains, as the organic solvent, at least one organic solvent (compound) selected from the group consisting of a saturated cyclic carbonate, a chain carbonate, a chain carboxylate ester, a cyclic carboxylate ester, an ether compound and a sulfone compound, but not particularly limited thereto. These solvents can be used singly, or in combination of two or more kinds thereof.

Further, in one embodiment of the present invention, it is preferred that the non-aqueous electrolytic solution contains one or more organic solvents selected from the group consisting of a cyclic carbonate, a chain carbonate and a chain ester.

### < 1-1-5-1. Saturated Cyclic Carbonate >

The saturated cyclic carbonate may be, for example, a saturated cyclic carbonate containing an alkylene group having from 2 to 4 carbon atoms.

Specific examples of the saturated cyclic carbonate having from 2 to 4 carbon atoms include ethylene carbonate, propylene carbonate and butylene carbonate. Among these, ethylene carbonate and propylene carbonate are preferred, from the viewpoint of achieving an improvement in battery characteristics derived from an enhanced lithium ion dissociation. These saturated cyclic carbonates may be used singly, or two or more kinds thereof may be used in any combination and ratio.

The content of the saturated cyclic carbonate is not particularly limited, and can be selected arbitrarily as long as the effects of the present invention are not significantly impaired. The lower limit of the content thereof in the case of using one kind singly is usually 3% by volume or more and preferably 5% by volume or more, in 100% by volume of the non-aqueous solvent. When the content of the saturated cyclic carbonate is within this range, a decrease in the electrical conductivity derived from a decrease in the dielectric constant of the non-aqueous electrolytic solution can be avoided, making it easier to control the high-current discharge characteristics, the stability to a negative electrode and the cycle characteristics, of the resulting non-aqueous electrolytic solution secondary battery, within favorable ranges. The upper limit of the content is usually 90% by volume or less, preferably 85% by volume or less, and more preferably 80% by volume or less. The content is preferably adjusted within this range, because the viscosity of the non-aqueous electrolytic solution can be controlled within an appropriate range, and a decrease in the ion conductivity can be reduced, which in turn makes it easier to further improve the input/output characteristics and further improve the durability such as the cycle characteristics and the storage characteristics, of the non-aqueous electrolytic solution secondary battery.

Further, two or more kinds of the saturated cyclic carbonates can be used in an arbitrary combination, as well. One of the preferred combinations is a combination of ethylene carbonate and propylene carbonate. The volume ratio of ethylene carbonate and propylene carbonate in this case is preferably from 99:1 to 40:60, and more preferably from 95:5 to 50:50. Further, the lower limit of the amount of propylene carbonate with respect to the total amount of the non-aqueous solvent is usually 1% by volume or more, preferably 2% by volume or more, and more preferably 3% by volume or more. The upper limit thereof is usually 30% by volume or less, preferably 25% by volume or less, and more preferably 20% by volume or less. It is preferred to contain propylene carbonate within this range, because the low temperature characteristics can further be improved.

### < 1-1-5-2. Chain Carbonate >

The chain carbonate is preferably a chain carbonate having from 3 to 7 carbon atoms.

Specific examples of the chain carbonate having from 3 to 7 carbon atoms include dimethyl carbonate, diethyl carbonate, di-n-propyl carbonate, diisopropyl carbonate, n-propyl isopropyl carbonate, ethyl methyl carbonate, methyl-n-propyl carbonate, n-butyl methyl carbonate, isobutyl methyl carbonate, t-butyl methyl carbonate, ethyl-n-propyl carbonate, n-butyl ethyl carbonate, isobutyl ethyl carbonate and t-butyl ethyl carbonate.

Among these, dimethyl carbonate, diethyl carbonate, din-propyl carbonate, diisopropyl carbonate, n-propyl isopropyl carbonate, ethyl methyl carbonate or methyl-n-propyl carbonate is preferred, and dimethyl carbonate, diethyl carbonate or ethyl methyl carbonate is particularly preferred.

A chain carbonate (hereinafter, sometimes abbreviated as "fluorinated chain carbonate") containing a fluorine atom can also be suitably used. The number of fluorine atoms contained in the fluorinated chain carbonate is not particularly limited as long as the number is one or more, and is usually 6 or less, and preferably 4 or less. In cases where the fluorinated chain carbonate contains a plurality of fluorine atoms, the atoms may be bonded to the same carbon atom, or may be bonded different carbon atoms. Examples of the fluorinated chain carbonate include a fluorinated dimethyl carbonate derivative, a fluorinated ethyl methyl carbonate derivative and a fluorinated diethyl carbonate derivative.

Examples of the fluorinated dimethyl carbonate derivative include fluoromethyl methyl carbonate, difluoromethyl methyl carbonate, trifluoromethyl methyl carbonate, bis(fluoromethyl) carbonate, bis(difluoro)methyl carbonate and bis(trifluoromethyl) carbonate.

Examples of the fluorinated ethyl methyl carbonate derivative include 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate and ethyl trifluoromethyl carbonate.

Examples of the fluorinated diethyl carbonate derivative include ethyl-(2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis (2,2-difluoroethyl) carbonate, 2,2,2-trifluoroethyl-2'-fluoroethyl carbonate, 2,2,2-trifluoroethyl-2',2'-difluoroethyl carbonate and bis(2,2,2-trifluoroethyl) carbonate.

These chain carbonates may be used singly, or two or more kinds thereof may be used in any combination and ratio.

The content of the chain carbonate is usually 15% by volume or more, preferably 20% by volume or more, and more preferably 25% by volume or more, in 100% by volume of the non-aqueous solvent, but not particularly limited thereto. Further, the content is usually 90% by volume or less, preferably 85% by volume or less, and more preferably 80% by volume or less. When the content of the chain carbonate is within the range described above, the viscosity of the non-aqueous electrolytic solution can be controlled within an appropriate range, and a decrease in the ion conductivity can be reduced, which in turn makes it easier to control the input/output characteristics and the charge/discharge rate characteristics of the resulting non-aqueous electrolytic solution secondary battery within favorable ranges. Further, a decrease in the electrical conductivity derived from a decrease in the dielectric constant of the non-aqueous electrolytic solution can be avoided, making it easier to control the input/output characteristics and the charge/discharge rate characteristics of the non-aqueous electrolytic solution secondary battery within favorable ranges.

Moreover, it is possible to significantly improve the battery performance, by combining ethylene carbonate in a specific content with a specific chain carbonate.

In cases where dimethyl carbonate and ethyl methyl carbonate are selected as the specific chain carbonates, for example, the content of ethylene carbonate is not particularly limited and can be selected arbitrarily as long as the effects of the present invention are not significantly impaired, and is usually 15% by volume or more and preferably 20% by volume, and at the same time, usually 45% by volume or less and preferably 40% by volume or less. The content of dimethyl carbonate in this case is usually 20% by volume or more and preferably 30% by volume or more, and at the same time, usually 50% by volume or less and preferably 45% by volume or less. The content of ethyl methyl carbonate in this case is usually 20% by volume or more and preferably 30% by volume or more, and at the same time, usually 50% by volume or less and preferably 45% by volume or less. When the contents of these compounds are within the ranges described above, the ion conductivity can be improved by decreasing the viscosity of the non-aqueous electrolytic solution while lowering the low temperature deposition temperature of the electrolyte, to obtain high input/output even at a low temperature.

### < 1-1-5-3. Chain Carboxylate Ester >

The chain carboxylate ester may be, for example, a chain carboxylate ester in which the number of total carbon atoms in the structural formula thereof is from 3 to 7.

Specific examples thereof include methyl acetate, ethyl acetate, acetic acid-n-propyl, isopropyl acetate, acetic acid-n-butyl, isobutyl acetate, acetic acid-t-butyl, methyl propionate, ethyl propionate, propionic acid-n-propyl, isopropyl propionate, propionic acid-n-butyl, isobutyl propionate, propionic acid-t-butyl, methyl butyrate, ethyl butyrate, butyric acid-n-propyl, isopropyl butyrate, methyl isobutyrate, ethyl isobutyrate, isobutyric acid-n-propyl and isopropyl isobutyrate.

Among these, methyl acetate, ethyl acetate, acetic acid-n-propyl, acetic acid-n-butyl, methyl propionate, ethyl propionate, propionic acid-n-propyl, isopropyl propionate, methyl butyrate or ethyl butyrate is preferred, from the viewpoints of improving the ion conductivity by decreasing the viscosity as well as reducing battery swelling under endurance conditions such as cycles and storage.

The content of the chain carboxylate ester is not particularly limited, and can be selected arbitrarily as long as the effects of the present invention are not significantly impaired. The content is usually 5% by volume or more and preferably 8% by volume or more, and at the same time, usually 80% by volume or less and preferably 70% by volume or less, in 100% by volume of the non-aqueous solvent. When the content of the chain carboxylate ester is within the range described above, the electrical conductivity of the non-aqueous electrolytic solution can be improved, making it easier to improve the input/output characteristics and charge/discharge rate characteristics of the resulting non-aqueous electrolytic solution secondary battery. Further, an increase in the negative electrode resistance can be reduced, making it easier to control the input/output characteristics and the charge/discharge rate characteristics of the non-aqueous electrolytic solution secondary battery within favorable ranges.

In the case of using the chain carboxylate ester, the chain carboxylate ester is preferably used in combination with a cyclic carbonate, and more preferably used in combination with a cyclic carbonate and a chain carbonate.

In the case of using a cyclic carbonate in combination with the chain carboxylate ester, for example, the content of the cyclic carbonate is not particularly limited and can be selected arbitrarily as long as the effects of the present invention are not significantly impaired, and is usually 15% by volume or more and preferably 20% by volume, and at the same time, usually 45% by volume or less and preferably 40% by volume or less. The content of the chain carboxylate ester in this case is usually 20% by volume or more and preferably 30% by volume or more, and at the same time, usually 55% by volume or less and preferably 50% by volume or less. Further, in the case of using a cyclic carbonate and a chain carbonate in combination with the chain carboxylate ester, the content of the cyclic carbonate is not particularly limited and can be selected arbitrarily as long as the effects of the present invention are not significantly impaired, and is usually 15% by volume or more and preferably 20% by volume, and at the same time, usually 45% by volume or less and preferably 40% by volume or less. The content of the chain carbonate in this case is usually 25% by volume or more and preferably 30% by volume or more, and at the same time, usually 84% by volume or less and preferably 80% by volume or less. The contents of these compounds are preferably adjusted within the ranges described above, because the ion conductivity can be improved by decreasing the viscosity of the non-aqueous electrolytic solution while lowering the low temperature deposition temperature of the electrolyte, to obtain high input/output even at a low temperature, and also because battery swelling can further be reduced.

### <1-1-5-4. Cyclic Carboxylate Ester >

The cyclic carboxylate ester may be, for example, a cyclic carboxylate ester in which the number of total carbon atoms in the structural formula thereof is from 3 to 12.

Specific examples thereof include γ-butyrolactone, γ-valerolactone, γ-caprolactone and ε-caprolactone. Among these, γ-butyrolactone is particularly preferred, from the viewpoint of achieving an improvement in the battery characteristics derived from an enhanced lithium ion dissociation.

The content of the cyclic carboxylate ester is not particularly limited, and can be selected arbitrarily as long as the effects of the present invention are not significantly impaired. The content is usually 3% by volume or more and preferably 5% by volume or more, and at the same time, usually 60% by volume or less and preferably 50% by volume or less, in 100% by volume of the non-aqueous solvent. When the content of the cyclic carboxylate ester is within the range described above, the electrical conductivity of the non-aqueous electrolytic solution is improved, making it easier to improve the input/output characteristics and the charge/discharge rate characteristics of the resulting non-aqueous electrolytic solution secondary battery. Further, the viscosity of the non-aqueous electrolytic solution can be controlled within an appropriate range, a decrease in the electrical conductivity can be avoided, and an increase in the negative electrode resistance can be reduced, making it easier to control the input/output characteristics and the charge/discharge rate characteristics of the non-aqueous electrolytic solution secondary battery within favorable ranges.

### < 1-1-5-5. Ether Compound >

The ether compound is preferably a chain ether having from 3 to 10 carbon atoms or a cyclic ether having from 3 to 6 carbon atoms.

Examples of the chain ether having from 3 to 10 carbon atoms include diethyl ether, di(2-fluoroethyl) ether, di(2,2-difluoroethyl) ether, di(2,2,2-trifluoroethyl) ether, ethyl (2-fluoroethyl) ether, ethyl (2,2,2-trifluoroethyl) ether, ethyl (1,1,2,2-tetrafluoroethyl) ether, (2-fluoroethyl) (2,2,2-trifluoroethyl) ether, (2-fluoroethyl) (1,1,2,2-tetrafluoroethyl) ether, (2,2,2-trifluoroethyl) (1,1,2,2-tetrafluoroethyl) ether, ethyl-n-propyl ether, ethyl (3-fluoro-n-propyl) ether, ethyl (3,3,3-trifluoro-n-propyl) ether, ethyl (2,2,3,3-tetrafluoro-n-propyl) ether, ethyl (2,2,3,3,3-pentafluoro-n-propyl) ether, 2-fluoroethyl-n-propyl ether, (2-fluoroethyl) (3-fluoro-n-propyl) ether, (2-fluoroethyl) (3,3,3-trifluoro-n-propyl) ether, (2-fluoroethyl) (2,2,3,3-tetrafluoro-n-propyl) ether, (2-fluoroethyl) (2,2,3,3,3-pentafluoro-n-propyl) ether, 2,2,2-trifluoroethyl-n-propyl ether, (2,2,2-trifluoroethyl) (3-fluoro-n-propyl) ether, (2,2,2-trifluoroethyl) (3,3,3-trifluoro-n-propyl) ether, (2,2,2-trifluoroethyl) (2,2,3,3-tetrafluoro-n-propyl) ether, (2,2,2-trifluoroethyl) (2,2,3,3,3-pentafluoro-n-propyl) ether, 1,1,2,2-tetrafluoroethyl-n-propyl ether, (1,1,2,2-tetrafluoroethyl) (3-fluoro-n-propyl) ether, (1,1,2,2-tetrafluoroethyl) (3,3,3-trifluoro-n-propyl) ether, (1,1,2,2-tetrafluoroethyl) (2,2,3,3-tetrafluoro-n-propyl) ether, (1,1,2,2-tetrafluoroethyl) (2,2,3,3,3-pentafluoro-n-propyl) ether, di-n-propyl ether, (n-propyl) (3-fluoro-n-propyl) ether, (n-propyl) (3,3,3-trifluoro-n-propyl) ether, (n-propyl) (2,2,3,3-tetrafluoro-n-propyl) ether, (n-propyl) (2,2,3,3,3-pentafluoro-n-propyl) ether, di(3-fluoro-n-propyl) ether, (3-fluoro-n-propyl) (3,3,3-trifluoro-n-propyl) ether, (3-fluoro-n-propyl) (2,2,3,3-tetrafluoro-n-propyl) ether, (3-fluoro-n-propyl) (2,2,3,3,3-pentafluoro-n-propyl) ether, di(3,3,3-trifluoro-n-propyl) ether, (3,3,3-trifluoro-n-propyl) (2,2,3,3-tetrafluoro-n-propyl) ether, (3,3,3-trifluoro-n-propyl) (2,2,3,3,3-pentafluoro-n-propyl) ether, di(2,2,3,3-tetrafluoro-n-propyl) ether, (2,2,3,3-tetrafluoro-n-propyl) (2,2,3,3,3-pentafluoro-n-propyl) ether, di(2,2,3,3,3-pentafluoro-n-propyl) ether, di-n-butyl ether, dimethoxymethane, methoxyethoxymethane, methoxy(2-fluoroethoxy)methane, methoxy(2,2,2-trifluoroethoxy)methane methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy) methane, di(2-fluoroethoxy)methane, (2-fluoroethoxy)(2,2,2-trifluoroethoxy)methane, (2-fluoroethoxy)(1,1,2,2-tetrafluoroethoxy)methane di(2,2,2-trifluoroethoxy)methane, (2,2,2-trifluoroethoxy)(1,1,2,2-tetrafluoroethoxy)methane, di(1,1,2,2-tetrafluoroethoxy)methane, dimethoxyethane, methoxyethoxyethane, methoxy(2-fluoroethoxy)ethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, di(2-fluoroethoxy)ethane, (2-fluoroethoxy) (2,2,2-trifluoroethoxy)ethane, (2-fluoroethoxy) (1,1,2,2-tetrafluoroethoxy)ethane, di(2,2,2-trifluoroethoxy)ethane, (2,2,2-trifluoroethoxy)(1,1,2,2-tetrafluoroethoxy)ethane, di(1,1,2,2-tetrafluoroethoxy)ethane, ethylene glycol di-n-propyl ether, ethylene glycol di-n-butyl ether and diethylene glycol dimethyl ether.

Examples of the cyclic ether having from 3 to 6 carbon atoms include: tetrahydrofuran, 2-methyltetrahydrofuran, 3-methyltetrahydrofuran, 1,3-dioxane, 2-methyl-1,3-dioxane, 4-methyl-1,3-dioxane and 1,4-dioxane; and fluorinated compounds thereof.

Among these, dimethoxymethane, diethoxymethane, ethoxymethoxymethane, ethylene glycol di-n-propyl ether, ethylene glycol di-n-butyl ether or diethylene glycol dimethyl ether is preferred, because of its high solvation ability to lithium ions and ability to enhance ion dissociation. Dimethoxymethane, diethoxymethane or ethoxymethoxymethane is particularly preferred, because of its low viscosity and ability to give a high ion conductivity.

The content of the ether compound is not particularly limited, and can be selected arbitrarily as long as the effects of the present invention are not significantly impaired. The content is usually 1% by volume or more, preferably 2% by volume or more and more preferably 3% by volume or more, and at the same time, usually 30% by volume or less, preferably 25% by volume or less and more preferably 20% by volume or less, in 100% by volume of the non-aqueous solvent. When the content of the ether compound is within the preferred range described above, the effects of achieving an enhanced lithium ion dissociation of the chain ether and an improved ion conductivity derived from a decrease in the viscosity can be more easily ensured. In cases where the negative electrode active material is a carbonaceous material, a phenomenon in which the chain ether is co-inserted along with lithium ions can be reduced, making it possible to control the input/output characteristics and the charge/discharge rate characteristics within appropriate ranges.

### < 1-1-5-6. Sulfone Compound >

The sulfone compound is preferably a cyclic sulfone having from 3 to 6 carbon atoms, or a chain sulfone having from 2 to 6 carbon atoms. The number of sulfonyl groups within one molecule is preferably 1 or 2.

Examples of the cyclic sulfone include: monosulfone compounds such as trimethylene sulfones, tetramethylene sulfones and hexamethylene sulfones; and disulfone compounds such as trimethylene disulfones, tetramethylene disulfones and hexamethylene disulfones. Among these, tetramethylene sulfones, tetramethylene disulfones, hexamethylene sulfones and hexamethylene disulfones are more preferred, and tetramethylene sulfones (sulfolanes) are particularly preferred, from the viewpoint of improving the dielectric constant and the viscosity.

As the sulfolanes, sulfolane and/or a sulfolane derivative (hereinafter, sometimes collectively abbreviated as a "sulfolane(s)", including sulfolane) is/are preferred. The sulfolane derivative is preferably one in which one or more hydrogen atoms bonded to the carbon atom(s) constituting the sulfolane ring are substituted with a fluorine atom or an alkyl group.

Among these, 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethyl sulfolane, 3-difluoromethyl sulfolane, 2-trifluoromethyl sulfolane, 3-trifluoromethyl sulfolane, 2-fluoro-3-(trifluoromethyl)sulfolane, 3-fluoro-3-(trifluoromethyl)sulfolane, 4-fluoro-3-(trifluoromethyl)sulfolane, 5-fluoro-3-(trifluoromethyl)sulfolane and the like are preferred, because of its high ion conductivity and high input/output.

Examples of the chain sulfone include dimethyl sulfone, ethyl methyl sulfone, diethyl sulfone, n-propyl methyl sulfone, n-propyl ethyl sulfone, di-n-propyl sulfone, isopropyl methyl sulfone, isopropyl ethyl sulfone, diisopropyl sulfone, n-butyl methyl sulfone, n-butyl ethyl sulfone, t-butyl methyl sulfone, t-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, perfluoroethyl methyl sulfone, ethyl trifluoroethyl sulfone, ethyl pentafluoroethyl sulfone, di(trifluoroethyl) sulfone, perfluorodiethyl sulfone, fluoromethyl-n-propyl sulfone, difluoromethyl-n-propyl sulfone, trifluoromethyl-n-propyl sulfone, fluoromethyl isopropyl sulfone, difluoromethyl isopropyl sulfone, trifluoromethyl isopropyl sulfone, trifluoroethyl-n-propyl sulfone, trifluoroethylisopropyl sulfone, pentafluoroethyl-n-propyl sulfone, pentafluoroethyl isopropyl sulfone, trifluoroethyl-n-butyl sulfone, trifluoroethyl-t-butyl sulfone, pentafluoroethyl-n-butyl sulfone and pentafluoroethyl-t-butyl sulfone.

Among these, dimethyl sulfone, ethyl methyl sulfone, diethyl sulfone, n-propyl methyl sulfone, isopropyl methyl sulfone, n-butyl methyl sulfone, t-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, ethyl trifluoroethyl sulfone, ethyl pentafluoroethyl sulfone, trifluoromethyl-n-propyl sulfone, trifluoromethyl isopropyl sulfone, trifluoroethyl-n-butyl sulfone, trifluoroethyl-t-butyl sulfone, trifluoromethyl-n-butyl sulfone or trifluoromethyl-t-butyl sulfone is preferred, because of its high ion conductivity and high input/output.

The content of the sulfone compound is not particularly limited, and can be selected arbitrarily as long as the effects of the present invention are not significantly impaired. The content is usually 0.3% by volume or more, preferably 0.5% by volume or more and more preferably 1% by volume or more, and at the same time, usually 40% by volume or less, preferably 35% by volume or less and more preferably 30% by volume or less, in 100% by volume of the non-aqueous solvent. When the content of the sulfone compound is within the range described above, the effect of improving the durability such as cycle characteristics and storage characteristics is more easily obtained. Further, the viscosity of the non-aqueous electrolytic solution can be controlled within an appropriate range, and a decrease in the electrical conductivity can be avoided, enabling to control the input/output characteristics and the charge/discharge rate characteristics of the resulting non-aqueous electrolytic solution secondary battery within appropriate ranges.

### < 1-1-6. Auxiliary Agent >

The non-aqueous electrolytic solution according to the present embodiment may further contain any of various auxiliary agents to be described below.

### < 1-1-6-1. Overcharge Inhibitor >

Specific examples of overcharge inhibitors include aromatic compounds including:
toluene derivatives such as toluene, xylene, 2-fluorotoluene, 3-fluorotoluene and 4-fluorotoluene;
unsubstituted biphenyl derivatives, and biphenyl derivatives substituted with an alkyl group such as biphenyl, 2-methylbiphenyl, 3-methylbiphenyl and 4-methylbiphenyl;
unsubstituted terphenyl derivatives such as o-terphenyl, m-terphenyl and p-terphenyl, and terphenyl derivatives substituted with an alkyl group;
partially hydrogenated products of unsubstituted terphenyl derivatives and of terphenyl derivatives substituted with an alkyl group;
cycloalkylbenzene derivatives such as cyclopentylbenzene and cyclohexylbenzene;
alkylbenzene derivatives containing a tertiary carbon directly bonded to a benzene ring, such as cumene, 1,3-diisopropylbenzene and 1,4-diisopropylbenzene;
alkylbenzene derivatives containing a quaternary carbon directly bonded to a benzene ring, such as t-butylbenzene, t-amylbenzene and t-hexylbenzene, 1,1,3-trimethyl-3-phenylindan; and
aromatic compounds containing an oxygen atom, such as diphenyl ether and dibenzofuran.

Further, specific examples of other overcharge inhibitors include: partially fluorinated products of the above-described aromatic compounds, such as fluorobenzene, benzotrifluoride, 2-fluorobiphenyl, o-cyclohexylfluorobenzene and p-cyclohexylfluorobenzene; and fluorine-containing anisole compounds such as 2,4-difluoroanisole, 2,5-difluoroanisole and 1,6-difluoroanisole.

These overcharge inhibitors may be used singly, or two or more kinds thereof may be used in any combination and ratio. In the case of using overcharge inhibitors in an arbitrary combination, the compounds in the same category as exemplified above may be used in combination, or the compounds in different categories may be used in combination.

In the case of incorporating an overcharge inhibitor, the amount of the overcharge inhibitor to be incorporated can be selected arbitrarily as long as the effects of the present invention are not significantly impaired. However, the content is preferably within the range of from 0.001% by mass or more and 10% by mass or less with respect to the total amount (100% by mass) of the non-aqueous electrolytic solution.

It is preferred to incorporate an overcharge inhibitor into the non-aqueous electrolytic solution of the present embodiment to the extent that the effects of the present invention are not significantly impaired, because the safety of the resulting energy device can be improved so as not to cause any problem, even if a circumstance should occur, by any chance, where an overcharge protection circuit does not operate properly due to wrong usage or an abnormality in a charging apparatus or the like to cause overcharge.

### < 1-1-6-2. Other Auxiliary Agents >

Specific examples of other auxiliary agents for improving the capacity retention characteristics and cycle characteristics after high temperature storage include the following compounds:
carbonate compounds other than those corresponding to carbonates containing an unsaturated bond, such as erythritan carbonate and spiro-bis-dimethylene carbonate;
cyclic sulfites such as ethylene sulfite;
non-fluorinated cyclic sulfate esters such as ethylene sulfate, vinylene sulfate and propylene sulfate;
chain sulfonate esters such as methyl methanesulfonate and busulfan;
cyclic sulfones such as sulfolane and sulfolene;
chain sulfones such as dimethyl sulfone, diphenyl sulfone and methyl phenyl sulfone;
sulfides such as dibutyl disulfide, dicyclohexyl disulfide and tetramethylthiuram monosulfide;
sulfur-containing compounds such as sulfonamides including N,N-dimethylmethanesulfonamide and N,N-diethylmethanesulfonamide;
nitrogen-containing compounds such as 1-methyl-2-pyrrolidinone, 1-methyl-2-piperidone, 3-methyl-2-oxazolidinone and 1,3-dimethyl-2-imidazolidinone;
hydrocarbon compounds such as heptane, octane and cycloheptane;
triple-bond compounds such as propargyl 2-(diethoxyphosphoryl)acetate, 2-(diethoxyphosphoryl)acetic acid-2-butynyl, propargyl 2-(methane sulfonyloxy)propionate, propargyl methanesulfonyloxyacetate, lithium ethyl-propargyloxycarbonylphosphonate, lithium ethyl-2-butynyloxycarbonylphosphonate, sulfuric acid propargyllithium, sulfuric acid 2-butynyllithium, sulfuric acid propargyl trimethylsilyl, 2-butyne-1,4-diyl dimesylate, 2-butyne-1,4-diyl diethanesulfonate, 2-butyne-1,4-diyl diformate, 2-butyne-1,4-diyl diacetate, 2-butyne-1,4-diyl dipropionate, 4-hexadiyn-1,6-diyl dimethanesulfonate, propargyl methanesulfonate, 2-butynyl methanesulfonate, propargyl ethanesulfonate, propargyl vinylsulfonate, propargyl methyl carbonate, propargyl ethyl carbonate, dipropargyl carbonate, propargyl formate, propargyl acetate, propargyl methacrylate, methyl propargyl oxalate, ethyl propargyl oxalate and dipropargyl oxalate;
silane compounds such as tris(trimethylsilyl) borate, tris(trimethoxysilyl) borate, tris(trimethylsilyl) phosphate, tris(trimethoxysilyl) phosphate, dimethoxyaluminoxytrimethoxysilane, diethoxyaluminoxytriethoxysilane, dipropoxyaluminoxytriethoxysilane, dibutoxyaluminoxytrimethoxysilane, dibutoxyaluminoxytriethoxysilane, titanium tetrakis(trimethylsiloxide) and titanium tetrakis(triethylsiloxide);
fluorine-containing aromatic compounds such as fluorobenzene, difluorobenzene and benzotrifluoride; and
pentafluorophenyl compounds such as pentafluorophenyl methanesulfonate, pentafluorophenyl trifluoromethanesulfonate, pentafluorophenyl acetate, pentafluorophenyl trifluoroacetate and methylpentafluorophenyl carbonate.

These other auxiliary agents may be used singly, or two or more kinds thereof may be used in any combination and ratio.

In cases where the non-aqueous electrolytic solution of the present embodiment contains any of these other auxiliary agents, the content thereof can be selected arbitrarily as long as the effects of the present invention are not significantly impaired. However, the content is preferably within the range of from 0.001% by mass or more and 10% by mass or less with respect to the total amount (100% by mass) of the non-aqueous electrolytic solution.

The definition of the non-aqueous electrolytic solution which has been described above includes a non-aqueous electrolytic solution present in the interior of an energy device such as a non-aqueous electrolytic solution secondary battery according to one embodiment of the present invention. Specifically, the definition of the non-aqueous electrolytic solution also includes: the case of a non-aqueous electrolytic solution present in the interior of a non-aqueous electrolytic solution secondary battery, obtained by preparing the non-aqueous electrolytic solution from the components of the non-aqueous electrolytic solution such as a lithium salt, a solvent and an auxiliary agent that have been separately synthesized and substantially isolated, and injecting the electrolytic solution into the battery separately assembled by the method described below; the case of a non-aqueous electrolytic solution having the same composition as the non-aqueous electrolytic solution of the present embodiment, obtained by separately placing the components of the non-aqueous electrolytic solution of the present embodiment into a non-aqueous electrolytic solution secondary battery in advance, and allowing the components to mix within the battery; and further, the case of a non-aqueous electrolytic solution having the same composition as the non-aqueous electrolytic solution of the present embodiment, obtained by allowing the compounds constituting the non-aqueous electrolytic solution of the present embodiment to generate within the non-aqueous electrolytic solution secondary battery.

### < 1-2. Method of Producing Non-aqueous Electrolytic Solution >

The non-aqueous electrolytic solution of the present embodiment can be prepared by dissolving, in the above-described non-aqueous solvent, an electrolyte, a compound(s) represented by general formula(e) (A1) and/or (A2) (at least one compound selected from compounds represented by general formulae (A1) and (A2)) or a compound(s) represented by general formula(e) (B1) and/or (B2) (at least one compound selected from compounds represented by general formulae (B1) and (B2)), and if necessary, the above-described specific compound, the above-described "auxiliary agent" and the like.

In the case of preparing the non-aqueous electrolytic solution, the respective raw materials of the non-aqueous electrolytic solution, namely an electrolyte such as a lithium salt, a compound(s) represented by general formula(e) (A1) and/or (A2) (at least one compound selected from compounds represented by general formulae (A1) and (A2)) or a compound(s) represented by general formula(e) (B1) and/or (B2) (at least one compound selected from compounds represented by general formulae (B1) and (B2)), the specific compound, the non-aqueous solvent, the auxiliary agent and the like, are preferably dehydrated in advance. It is desired that these materials be dehydrated usually to a degree of 50 ppm or less, and preferably 30 ppm or less.

The removal of water in the non-aqueous electrolytic solution makes it less likely to cause the electrolysis of water, the reaction of water with lithium metal, the hydrolysis of a lithium salt and the like. In cases where the object to be dehydrated is a liquid such as a non-aqueous solvent for example, the dehydration can be performed by means of using a desiccant agent such as a molecular sieve, but not particularly limited thereto. Further, in cases where the object to be dehydrated is a solid such as an electrolyte, the electrolyte can be dried by heating at a temperature lower than the temperature at which decomposition occurs.

### < 2. Energy Device Using Non-aqueous Electrolytic Solution >

An energy device using the non-aqueous electrolytic solution of the present embodiment includes a plurality of electrodes capable of absorbing or releasing metal ions, and the non-aqueous electrolytic solution of the present embodiment described above. Specific examples of the type of the energy device include primary batteries, secondary batteries, and metal ion capacitors including lithium ion capacitors. Among these, a primary battery or a secondary battery is preferred, and a secondary battery is particularly preferred. The non-aqueous electrolytic solution used in any of these energy devices is also preferably a so-called gel electrolyte which has been pseudo-solidified with a polymer, a filler or the like. The above-described energy device will be described below.

### < 2-1. Non-aqueous Electrolytic Solution Secondary Battery >

### < 2-1-1. Battery Configuration >

A non-aqueous electrolytic solution secondary battery according to one embodiment of the present invention (hereinafter, sometimes referred to as "non-aqueous secondary battery of the present embodiment") has the same configuration as a conventionally known non-aqueous electrolytic solution secondary battery, except for the non-aqueous electrolytic solution, and usually has a configuration in which a positive electrode and a negative electrode are layered via a porous membrane (separator) impregnated with the non-aqueous electrolytic solution of the present embodiment, and housed in a casing (outer casing). Therefore, the shape of the non-aqueous electrolytic solution secondary battery of the present embodiment is not particularly limited, and the battery may have, for example, any of cylindrical, rectangular, laminated-type, coin-type and large-sized shapes.

### < 2-1-2. Non-aqueous Electrolytic Solution >

The above-described non-aqueous electrolytic solution of the present embodiment is used as the non-aqueous electrolytic solution to be used in the non-aqueous electrolytic solution battery. The non-aqueous electrolytic solution of the present embodiment can also be used as a mixture with another non-aqueous electrolytic solution(s) as long as the it does not depart from the gist of the present invention.

### < 2-1-3. Negative Electrode >

The negative electrode active material to be used for the negative electrode is not particularly limited, as long as the material is capable of electrochemically absorbing and releasing metal ions. Specific examples thereof include a carbonaceous material, a metal compound-based material and a lithium-containing metal composite oxide material. These materials may be used singly, or two or more kinds thereof may be used in any combination.

Among these, a carbonaceous material and a metal compound-based material are preferred. Among metal compound-based materials, a material containing silicon is preferred. Therefore, a carbonaceous material and a material containing silicon are more preferred as the negative electrode active material. Further, in a combination with the non-aqueous electrolytic solution of the second embodiment, a negative electrode active material containing a silicon atom is particularly preferred.

### < 2-1-3-1. Carbonaceous Material >

The carbonaceous material to be used as the negative electrode active material is not particularly limited, but preferably selected from the following (A) to (D), because a secondary battery with a good balance between initial irreversible capacity and high-current-density charge/discharge characteristics can be obtained.
(A) Natural graphite
(B) A carbonaceous material obtained by heat-treating an artificial carbonaceous substance and an artificial graphite substance one or more times within the temperature range of from 400°C to 3200°C.
(C) A carbonaceous material forming a negative electrode active material layer which is composed of at least two kinds of carbon materials having different crystallinities, and/or which includes an interface at which the carbon materials having different crystallinities are in contact with each other
(D) A carbonaceous material forming a negative electrode active material layer which is composed of at least two kinds of carbon materials having different orientations, and/or which includes an interface at which the carbon materials having different orientations are in contact with each other

The carbonaceous materials (A) to (D) may be used singly, or two or more kinds thereof may be used in any combination and ratio.

Specific examples of the artificial carbonaceous substance and the artificial graphite substance in (B) above include:
natural graphite, coal-based coke, petroleum-based coke, coal-based pitch, petroleum-based pitch, and oxidized products of these pitches;
needle coke, pitch coke, and carbon materials obtained by partially graphitizing these materials;
thermally decomposed organic materials, such as furnace black, acetylene black and pitch-based carbon fibers;
carbonizable organic materials and carbides thereof; and
solution carbides obtained by dissolving any of the carbonizable organic materials in a low molecular weight organic solvent such as benzene, toluene, xylene, quinoline or n-hexane.

All of the carbonaceous materials (A) to (D) are conventionally known, and the production methods thereof are known to those skilled in the art. Commercially available products thereof can be purchased, as well.

### < 2-1-3-2. Metal Compound-based Material >

The metal compound-based material to be used as the negative electrode active material is not particularly limited as long as the material is capable of absorbing and releasing lithium, and it is possible to use a compound such as: a single metal or alloy that forms an alloy with lithium; or an oxide, a carbide, a nitride, a silicide, a sulfide or a phosphide thereof. Examples of such a metal compound include a compound containing a metal such as A g, Al, Ba, Bi, Cu, Ga, Ge, In, Ni, P, Pb, Sb, Si, Sn, Sr or Zn. In particular, the metal compound-based material is preferably a single metal or alloy that forms an alloy with lithium, more preferably a material containing a metallic or semi-metallic element in Group 13 or 14 of the periodic table (namely, excluding carbon. Hereinafter, metals and semimetals are each collectively referred to as "metal"), and still more preferably a single metal of silicon (Si), tin (Sn) or lead (Pb) (hereinafter, these three kinds of elements are sometimes referred to as "SSP metallic elements") or an alloy containing any of these atoms, or a compound of any of these metals (SSP metallic elements). A compound containing silicon is particularly preferred. These compounds may be used singly, or two or more kinds thereof may be used in any combination and ratio.

In the present embodiment, the content of the metal compound-based material with respect to the total amount of the negative electrode active material is preferably 1% by mass or more, more preferably 3% by mass or more and still more preferably 5% by mass or more, and may be 100% by mass.

Examples of the negative electrode active material containing at least one atom selected from the SSP metallic elements include: a single metal of any one kind of the SSP metallic elements; an alloy composed of two or more kinds of the SSP metallic elements; an alloy composed of one or more kinds of the SSP metallic elements and one or more kinds of other metallic elements; and a complex compound of a compound containing one or more kinds of the SSP metallic elements, or of an oxide, a carbide, a nitride, a silicide, a sulfide, a phosphide or the like of the compound. The capacity of the resulting battery can be increased, by using such a single metal, alloy or metal compound as the negative electrode active material.

Further, examples thereof also include a compound in which such a complex compound is bonded with several kinds of elements, such as those of single metals, alloys, non-metallic elements, etc., in a complicated manner. More specifically, in the case of one containing silicon (Si) and/or tin (Sn), for example, it is possible to use an alloy of one or both of these elements with a metal(s) that do/does not function as a negative electrode. Further, in the case of one containing tin, for example, it is also possible to use a complicated compound containing 5 to 6 kinds of elements in any combination of metals that function as a negative electrode other than tin and silicon, metals that do not function as a negative electrode, and non-metallic elements.

Among these negative electrode active materials, a single metal of any one kind of the SSP metallic elements, an alloy composed of two or more kinds of the SSP metallic elements, or an oxide, a carbide, a nitride or the like of any of the SSP metallic elements is preferred, and a single metal(s) of silicon (Si) and/or tin (Sn), or an alloy, an oxide, a carbide, a nitride or the like thereof is particularly preferred, because a large capacity per unit mass can be achieved in the resulting battery. From the viewpoint of the capacity per unit mass and environmental stress, Si single metal, a Si alloy, a Si oxide (SiOₓ), a Si carbide (SiCₓ), a Si nitride (SiNₓ), a Si nitrogen oxide (SiNₓO_{y}) or a Si carbon oxide (SiCₓO_{y}) is still more preferred. Among these, Si single metal and a SiOₓ are particularly preferred.

Further, the following compounds containing silicon and/or tin are also preferred, because excellent cycle characteristics can be obtained although the capacity per unit mass is inferior to the case of using a single metal or an alloy.
- An "oxide of silicon and/or tin" in which the elemental ratio of silicon and/or tin with oxygen is usually 0.2 or more, preferably 0.3 or more and still more preferably 0.5 or more, and at the same time, usually 1.5 or less, preferably 1.3 or less and still more preferably 1.1 or less.
- A "nitride of silicon and/or tin" in which the elemental ratio of silicon and/or tin with nitrogen is usually 0.2 or more, preferably 0.3 or more and still more preferably 0.5 or more, and at the same time, usually 1.5 or less, preferably 1.3 or less, and still more preferably 1.1 or less.
- A "carbide of silicon and/or tin" in which the elemental ratio of silicon and/or tin with carbon is usually 0.2 or more, preferably 0.3 or more and still more preferably 0.5 or more, and at the same time, usually 1.5 or less, preferably 1.3 or less and still more preferably 1.1 or less.

The negative electrode active materials described above may be used singly, or two or more kinds thereof may be used in any combination and ratio.

A compound represented by general formula SiOₓ is obtained from silicon dioxide (SiO₂) and Si metal (Si) as raw materials, and the value of x in the SiOₓ is usually 0 or more and less than 2, more preferably 0.2 or more and 1.8 or less, still more preferably 0.4 or more and 1.6 or less, and particularly preferably 0.6 or more and 1.4 or less. Further, x = 0 is also preferred. When the value of x is within this range, it is possible to simultaneously achieve a high capacity, and a decrease in the irreversible capacity due to bonding of Li with oxygen.

The negative electrode active materials described above may be used singly, or two or more kinds thereof may be used in any combination and ratio.

### < 2-1-3-3. Lithium-containing Metal Composite Oxide Material >

The lithium-containing metal composite oxide material to be used as the negative electrode active material is not particularly limited, as long as the material is capable of absorbing and releasing lithium. However, a lithium-containing metal composite oxide material containing titanium is preferred, and a composite oxide of lithium and titanium (hereinafter, sometimes abbreviated as "lithium-titanium composite oxide") is particularly preferred. In other words, when a lithium-titanium composite oxide having a spinel structure is incorporated into a negative electrode active material for a lithium-ion non-aqueous electrolytic solution secondary battery and used, the output resistance of the secondary battery is drastically reduced, and thus is particularly preferred.

Also preferred is a lithium-titanium composite oxide in which lithium and/or titanium is/are substituted with at least one other metallic element selected from the group consisting of Na, K, Co, Al, Fe, Ti, Mg, Cr, Ga, Cu, Zn and Nb, for example.

Examples of the lithium-titanium composite oxide which is preferred as the negative electrode active material include a lithium-titanium composite oxide represented by the following general formula (7):

LiₓTi_{y}M_{z}O₄ (7)

(In general formula (7), M represents at least one element selected from the group consisting of Na, K, Co, Al, Fe, Ti, Mg, Cr, Ga, Cu, Zn and Nb. It is preferred that x, y and z in general formula (7) satisfy 0.7 ≤ x ≤ 1.5, 1.5 ≤ y ≤ 2.3 and 0 ≤ z ≤ 1.6, because a stable structure during the doping and de-doping of lithium ions can be obtained).

### < 2-1-3-4. Configuration, Physical Properties, Preparation Method of Negative Electrode >

While known technical configurations can be employed for the negative electrode containing any of the active materials described above and the electrode preparation method, and a current collector, it is desirable that any one or more of the following items (i) to (vi) be satisfied at the same time.

### (i) Preparation of Negative Electrode

Any known method can be used to produce the negative electrode, as long as the effects of the present invention are not significantly limited. For example, a binder, a solvent, and if necessary, a thickening agent, a conductive material, a filler and the like can be added to the negative electrode active material to form a slurry-like negative electrode-forming material, which is then applied on a current collector, dried, and then pressed to form a negative electrode active material layer.

### (ii) Current Collector

Any known material can be used as the current collector that holds the negative electrode active material. Examples of the material of the negative electrode current collector include metal materials such as aluminum, copper, nickel, stainless steel and nickel-plated steel. Copper is particularly preferred from the viewpoint of ease of processing and cost.

In cases where the current collector is made of a metal material, the current collector may be, for example, in the form of a metal foil, a metal cylinder, a metal coil, a metal plate, a metal thin film, an expanded metal, a punched metal or a foamed metal. Among these, the current collector is preferably a metal thin film, more preferably a copper foil, and still more preferably a rolled copper foil obtained by the rolling method, or an electrolytic copper foil obtained by the electrolytic method.

### (iii) Thickness Ratio of Negative Electrode Active Material Layer to Current Collector

The thickness ratio of the negative electrode active material layer to the current collector is not particularly limited. However, the value of the ratio "(thickness of negative electrode active material layer on one side immediately before injection step of non-aqueous electrolytic solution) / (thickness of current collector)" is preferably 150 or less, more preferably 20 or less and particularly preferably 10 or less, and at the same time, preferably 0.1 or more, more preferably 0.4 or more and particularly preferably 1 or more.

When the thickness ratio of the negative electrode active material layer to the current collector exceeds the range described above, the current collector may generate heat due to Joule heat during the charging and discharging at a high current density of the resulting secondary battery. When the thickness ratio is below the range described above, the volume ratio of the current collector to the negative electrode active material may increase, possibly resulting in a decrease in the capacity of the secondary battery.

### (iv) Electrode Density

There is no particular limitation on the electrode structure when the negative electrode active material is formed into an electrode, and the density of the negative electrode active material present on the current collector is preferably 1 g·cm⁻³ or more, more preferably 1.2 g·cm⁻³ or more and still more preferably 1.3 g·cm⁻³ or more, and at the same time, preferably 4 g·cm⁻³ or less, more preferably 3 g·cm⁻³ or less, still more preferably 2.5 g·cm⁻³ or less and particularly preferably 1.7 g·cm⁻³ or less. When the density of the negative electrode active material present on the current collector is within the range described above, negative electrode active material particles are less likely to be destroyed, making it easier to prevent an increase in the initial irreversible capacity, and the deterioration of the high-current-density charge/discharge characteristics due to a reduced penetration of the non-aqueous electrolytic solution to the vicinity of the current collector/negative electrode active material interface, of the resulting secondary battery. Further, the conductivity between the negative electrode active materials can be ensured, enabling to increase the capacity per unit volume without causing an increase in the battery resistance.

### (v) Binder, Solvent and the like

The slurry for forming the negative electrode active material layer is usually prepared by adding to the negative electrode active material, a mixture obtained by adding a binder, a thickening agent and the like to a solvent.

The binder for binding the negative electrode active material is not particularly limited, as long as the binder is a material stable in the non-aqueous electrolytic solution or a solvent used in the electrode production.

Specific examples of the binder include:
resin polymers such as polyethylene, polypropylene, polyethylene terephthalate, polymethyl methacrylate, aromatic polyamides, cellulose and nitrocellulose;
rubber-like polymers such as SBR (styrene-butadiene rubber), isoprene rubber, butadiene rubber, fluororubber, NBR (acrylonitrile-butadiene rubber) and ethylene-propylene rubber;
styrene-butadiene-styrene block copolymers and hydrogenated products thereof;
thermoplastic elastomeric polymers such as EPDM (ethylene-propylene-diene ternary copolymers), styrene-ethylene-butadiene-styrene copolymers and styrene-isoprene-styrene block copolymers and hydrogenated products thereof;
soft resin-like polymers such as syndiotactic-1,2-polybutadiene, polyvinyl acetate, ethylene-vinyl acetate copolymers and propylene-α-olefin copolymers;
fluoropolymers such as polyvinylidene fluoride, polytetrafluoroethylene, fluorinated polyvinylidene fluoride and polytetrafluoroethylene-ethylene copolymers; and
polymer compositions with ionic conductivity for alkali metal ions (particularly, lithium ions). These binders may be used singly, or two or more kinds thereof may be used in any combination and ratio.

The type of the solvent for forming the slurry is not particularly limited, as long as the negative electrode active material, the binder, and a thickening agent and a conductive material which are used as necessary, can be dissolved or dispersed in the solvent, and either an aqueous solvent or an organic solvent may be used.

Examples of the aqueous solvent include water and alcohol. Examples of the organic solvent include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene and hexane.

In the case of using an aqueous solvent, in particular, it is preferred to incorporate a dispersing agent and the like along with a thickening agent, and to form into a slurry using a latex of SBR or the like.

These solvents may be used singly, or two or more kinds thereof may be used in any combination and ratio.

The ratio of the amount of binder with respect to 100 parts by mass of the negative electrode active material is preferably 0.1 parts by mass or more, more preferably 0.5 parts by mass or more and still more preferably 0.6 parts by mass or more, and at the same time, preferably 20 parts by mass or less, more preferably 15 parts by mass or less, still more preferably 10 parts by mass or less and particularly preferably 8 parts by mass or less. When the ratio of the amount of binder with respect to the amount of negative electrode active material is within the range described above, the proportion of the binder that does not contribute to the battery capacity is not increased, making it less likely to cause a decrease in the battery capacity. Further, a decrease in the strength of the resulting negative electrode is also less likely to occur.

In cases where the slurry as the negative electrode-forming material contains a rubber-like polymer typified by SBR as a main component, in particular, the ratio of the amount of binder with respect to 100 parts by mass of the negative electrode active material is preferably 0.1 parts by mass or more, more preferably 0.5 parts by mass or more and still more preferably 0.6 parts by mass or more, and at the same time, preferably 5 parts by mass or less, more preferably 3 parts by mass or less and still more preferably 2 parts by mass or less.

Further, in cases where the slurry contains a fluoropolymer typified by polyvinylidene fluoride as a main component, the ratio of the amount of binder with respect to 100 parts by mass of the negative electrode active material is preferably 1 part by mass or more, more preferably 2 parts by mass or more and still more preferably 3 parts by mass or more, and at the same time, preferably 15 parts by mass or less, more preferably 10 parts by mass or less and still more preferably 8 parts by mass or less.

The thickening agent is usually used for adjusting the viscosity of the slurry. The thickening agent is not particularly limited, and specific examples thereof include: carboxymethyl cellulose, methyl cellulose, hydroxymethyl cellulose, ethyl cellulose, polyvinyl alcohol, oxidized starch, phosphorylated starch and casein; and salts thereof. These thickening agents may be used singly, or two or more kinds thereof may be used in any combination and ratio.

In the case of using the thickening agent, the ratio of the amount of thickening agent with respect to 100 parts by mass of the negative electrode active material is usually 0.1 parts by mass or more, preferably 0.5 parts by mass or more, and more preferably 0.6 parts by mass or more.
Further, the above-described ratio is usually 5 parts by mass or less, preferably 3 parts by mass or less, and more preferably 2 parts by mass or less. When the ratio of the amount of thickening agent with respect to the amount of negative electrode active material is within the range described above, the applicability of the slurry is improved. Further, an appropriate proportion of the amount of negative electrode active material in the negative electrode active material layer can be achieved, making it less likely to cause problems of a decrease in the battery capacity and an increase in the resistance between the particles of the negative electrode active material.

### (vi) Area of Negative Electrode Plate

The area of a negative electrode plate is not particularly limited. However, the negative electrode plate is preferably designed to be slightly larger than an opposing positive electrode plate so that the positive electrode plate does not protrude outward from the negative electrode plate. From the viewpoint of reducing the deterioration of the cycle life upon repeated charging and discharging and the deterioration due to high temperature storage of the resulting secondary battery, it is preferred that the area of the negative electrode plate be as close as possible to the area of the positive electrode, because this will increase the proportion of the electrodes that work more uniformly and effectively, and improve the characteristics of the battery. In cases where the secondary battery is used at a high current, the above-described area design of the negative electrode plate is particularly important.

### < 2-1-4. Positive Electrode >

The positive electrode to be used in the non-aqueous electrolytic solution secondary battery of the present embodiment will be described below.

### < 2-1-4-1. Positive Electrode Active Material >

The positive electrode active material to be used for the above-described positive electrode will be described below.

### (1) Composition

The positive electrode active material is not particularly limited as long as the material is capable of electrochemically absorbing and releasing metal ions. For example, a material capable of electrochemically absorbing and releasing lithium ions is preferred, and a material that contains lithium and at least one transition metal is preferred. Specific examples of the positive electrode active material include lithium-transition metal composite oxides, lithium-containing transition metal phosphate compounds, lithium-containing transition metal silicate compounds and lithium-containing transition metal borate compounds.

The transition metals in the above-described lithium-transition metal composite oxides are preferably V, Ti, Cr, Mn, Fe, Co, Ni, Cu and the like. Specific examples of the above-described composite oxides include: lithium-cobalt composite oxides such as LiCoO₂; lithium-nickel composite oxides such as LiNiO₂; lithium-manganese composite oxides such as LiMnO₂, LiMn₂O₄ and Li₂MnO₄; and composite oxides in which main transition metal atoms of these lithium-transition metal composite oxides are partially substituted with other metals such as Al, Ti, V, Cr, Mn, Fe, Co, Li, Ni, Cu, Zn, Mg, Ga, Zr, Si, Nb, Mo, Sn, W, etc.

Specific examples of the substituted composite oxides include LiNi_{0.5}Mn_{0.5}O₂, LiNi_{0.85}Co_{0.10}Al_{0.05}O₂, LiNi_{0.33}Co_{0.33}Mn_{0.33}O₂, LiMn₂O₄, LiMn_{1.8}Al_{0.2}O₄, Li_{1.1}Mn_{1.9}Al_{0.1}O₄ and LiMn_{1.5}Ni_{0.5}O₄.

Among these, a composite oxide containing lithium, nickel and cobalt is more preferred. This is because the use of a composite oxide containing cobalt and nickel allows for a large capacity when used at the same potential.

However, since cobalt is an expensive metal with few resources, and the amount of active material used increases in large batteries for automobile applications and the like, which require a high capacity. Therefore, it is also desirable to use manganese, which is a less expensive transition metal, as a main component, from the viewpoint of cost. In other words, a lithium-nickel-cobalt-manganese composite oxide is still more preferred. Above all, a lithium-nickel-cobalt-manganese composite oxide in which the amount of cobalt used is reduced and the amount of nickel used is increased, is particularly preferred from the viewpoint of satisfying the balance between the cost and the capacity at a high level. Specific examples of particularly preferred composite oxides include LiNi_{0.5}Co_{0.2}Mn_{0.3}O₂, LiNi_{0.6}Co_{0.2}Mn_{0.2}O₂ and LiNi_{0.8}Co_{0.1}Mn_{0.1}O₂.

Considering the stability as a compound and procurement cost due to ease of production, in addition, a lithium-manganese composite oxide having a spinel-type structure is also preferred. In other words, preferred specific examples of the above-described specific examples also include LiMn₂O₄, LiMn_{1.8}Al_{0.2}O₄, Li_{1.1}Mn_{1.9}Al_{0.1}O₄ and LiMn_{1.5}Ni_{0.5}O₄.

The transition metals in the above-described lithium-containing transition metal phosphate compounds are preferably V, Ti, Cr, Mn, Fe, Co, Ni, Cu and the like. Specific examples of the above-described phosphate compounds include: iron phosphates such as LiFePO₄, Li₃Fe₂(PO₄)₃ and LiFeP₂O₇; cobalt phosphates such as LiCoPO₄; manganese phosphates such as LiMnPO₄; and compounds in which main transition metal atoms of these lithium transition metal phosphate compounds are partially substituted with other metals such as Al, Ti, V, Cr, Mn, Fe, Co, Li, Ni, Cu, Zn, Mg, Ga, Zr, Si, Nb, Mo, Sn, W, etc.

The transition metals in the above-described lithium-containing transition metal silicate compounds are preferably V, Ti, Cr, Mn, Fe, Co, Ni, Cu and the like. Specific examples of the above-described silicate compounds include: iron silicates such as Li₂FeSiO₄; cobalt silicates such as Li₂CoSiO₄; and compounds in which main transition metal atoms of these lithium transition metal silicate compounds are partially substituted with other metals such as Al, Ti, V, Cr, Mn, Fe, Co, Li, Ni, Cu, Zn, Mg, Ga, Zr, Si, Nb, Mo, Sn, W, etc.

The transition metals in the above-described lithium-containing transition metal borate compounds are preferably V, Ti, Cr, Mn, Fe, Co, Ni, Cu and the like. Specific examples of the above-described borate compounds include: iron borates such as LiFeBO₃; cobalt borates such as LiCoBO₃; and compounds in which main transition metal atoms of these lithium transition metal borate compounds are partially substituted with other metals such as Al, Ti, V, Cr, Mn, Fe, Co, Li, Ni, Cu, Zn, Mg, Ga, Zr, Si, Nb, Mo, Sn, W, etc.

### (2) Method of Producing Positive Electrode Active Material

The method of producing the positive electrode active material is not particularly limited as long as the scope of the present invention is not exceeded. Examples thereof include several methods, and a common method of producing an inorganic compound is used.

There are various possible methods in order to produce a spherical or ellipsoidal active material, in particular. One example of the production method may be a method in which: a transition metal raw material such as a transition metal nitrate or sulfate, and if necessary, a raw material of another element, are dissolved, or ground and dispersed, in a solvent such as water; the pH of the resulting solution or dispersion is adjusted while stirring, to prepare and collect a spherical precursor; the precursor is dried as necessary, followed by adding a Li source such as LiOH, Li₂CO₃ or LiNO₃ thereto and calcining the precursor at a high temperature, to obtain an active material.

Another example of the production method may be a method in which: a transition metal raw material such as a transition metal nitrate, sulfate, hydroxide or oxide, and if necessary, a raw material of another element, are dissolved, or ground and dispersed, in a solvent such as water; the resulting solution or dispersion is dried and molded using a spray dryer or the like, to prepare a spherical or ellipsoidal precursor, followed by adding a Li source such as LiOH, Li₂CO₃ or LiNO₃ thereto and calcining the precursor at a high temperature, to obtain an active material.

Still another example of the production method may be a method in which: a transition metal raw material such as a transition metal nitrate, sulfate, hydroxide or oxide, a Li source such as LiOH, Li₂CO₃ or LiNO₃, and if necessary, a raw material of another element, are dissolved, or ground and dispersed, in a solvent such as water; the resulting solution or dispersion is dried and molded using a spray dryer or the like, to prepare a spherical or ellipsoidal precursor, followed by calcining the precursor at a high temperature, to obtain an active material.

### < 2-1-4-2. Positive Electrode Structure and Preparation Method >

The configuration of the positive electrode to be used in the present invention and the method of preparing the same will be described below.

### (Method of Preparing Positive Electrode)

The positive electrode is prepared by forming a positive electrode active material layer containing positive electrode active material particles and a binder, on a current collector. The production of the positive electrode using the positive electrode active material can be performed by any known method. For example, the positive electrode can be obtained by forming a positive electrode active material layer on a positive electrode current collector either by: dry mixing the positive electrode active material and a binder, and if necessary, a conductive material, a thickening agent and the like to be formed into a sheet, and pressure bonding the resulting sheet on the positive electrode current collector; or by dissolving or dispersing these materials in a liquid medium to form a slurry, and applying the resulting slurry on the positive electrode current collector, followed by drying.

The content of the positive electrode active material in the positive electrode active material layer is 60% by mass or more, more preferably 70% by mass or more and still more preferably 80% by mass or more, and at the same time, preferably 99.9% by mass or less and more preferably 99% by mass or less. When the content of the positive electrode active material positive electrode active material is within the range described above, a sufficient electrical capacity can be ensured. Further, a sufficient strength of the positive electrode can also be obtained. In the present invention, one kind of positive electrode active material powder may be used singly, or two or more kinds of powders differing in compositions or powder physical properties may be used in any combination and ratio. In the case of using two or more kinds of active materials in combination, it is preferred to use the above-described composite oxide containing lithium and manganese as a powder component. This is because, as described above, cobalt or nickel is not preferred from the viewpoint of cost, since cobalt or nickel is an expensive metal with few resources, and the amount of active material used increases in large batteries for automobile applications and the like which require a high capacity, and thus it is desirable to use manganese, which is a less expensive transition metal, as a main component.

### (Conductive Material)

Any known conductive material can be used as the conductive material. Specific examples thereof include: a metal material such as copper or nickel; graphite such as natural graphite or artificial graphite; carbon black such as acetylene black; and a carbonaceous material such as amorphous carbon, for example, needle coke. These conductive materials may be used singly, or two or more kinds thereof may be used in any combination and ratio.

The content of the conductive material in the positive electrode active material layer is preferably 0.01% by mass or more, more preferably 0.1% by mass or more and still more preferably 1% by mass or more, and at the same time, preferably 50% by mass or less, more preferably 30% by mass or less and still more preferably 15% by mass or less. When the content of the conductive material is within the range described above, a sufficient conductivity can be ensured. Further, a decrease in the battery capacity can be more easily prevented, as well.

### (Binder)

The binder to be used in the positive electrode active material layer is not particularly limited, as long as the binder is a material stable in the non-aqueous electrolytic solution or in a solvent used in the electrode production.

In the case of preparing the positive electrode by the coating method, the binder is not particularly limited as long as the binder is a material that can be dissolved or dispersed in a liquid medium used in the electrode production. Specific examples of the binder include:
resin polymers such as polyethylene, polypropylene, polyethylene terephthalate, polymethyl methacrylate, aromatic polyamides, cellulose and nitrocellulose;
rubber-like polymers such as SBR (styrene-butadiene rubber), NBR (acrylonitrile-butadiene rubber), fluororubber, isoprene rubber, butadiene rubber and ethylene-propylene rubber;
thermoplastic elastomeric polymers such as styrene-butadiene-styrene block copolymers and hydrogenated products thereof, EPDM (ethylene-propylene-diene ternary copolymers), styrene-ethylene-butadiene-ethylene copolymers, and styreneisoprene-styrene block copolymers and hydrogenated products thereof;
soft resin-like polymers such as syndiotactic-1,2-polybutadiene, polyvinyl acetate, ethylene-vinyl acetate copolymers and propylene-α-olefin copolymers;
fluoropolymers such as polyvinylidene fluoride (PVdF), polytetrafluoroethylene, fluorinated polyvinylidene fluoride and polytetrafluoroethylene-ethylene copolymers; and
polymer compositions with ionic conductivity of alkali metal ions (particularly, lithium ions). These binders may be used singly, or two or more kinds thereof may be used in any combination and ratio.

The content of the binder in the positive electrode active material layer is preferably 0.1% by mass or more, more preferably 1% by mass or more and still more preferably 3% by mass or more, and at the same time, preferably 80% by mass or less, more preferably 60% by mass or less, still more preferably 40% by mass or less and particularly preferably 10% by mass or less. When the binder is contained in a proportion within the range described above, the positive electrode active material can be sufficiently retained and the mechanical strength of the positive electrode can be ensured, making it possible to achieve a good battery performance, such as cycle characteristics. This also leads to avoiding a decrease in the battery capacity and conductivity.

### (Liquid Medium)

The type of the liquid medium to be used in the preparation of the slurry for forming the positive electrode active material layer is not particularly limited, as long as the liquid medium is a solvent capable of dissolving or dispersing the positive electrode active material, the conductive material, the binder, and a thickening agent which is used as necessary. Either an aqueous solvent or an organic solvent may be used as the liquid medium.

Examples of the aqueous medium include water, and a mixture of alcohol and water.

Examples of the organic medium include:
aliphatic hydrocarbons such as hexane;
aromatic hydrocarbons such as benzene, toluene, xylene and methylnaphthalene;
heterocyclic compounds such as quinoline and pyridine;
ketones such as acetone, methyl ethyl ketone and cyclohexanone;
esters such as methyl acetate and methyl acrylate;
amines such as diethylenetriamine and N,N-dimethylaminopropylamine;
ethers such as diethyl ether and tetrahydrofuran (THF);
amides such as N-methylpyrrolidone (NMP), dimethylformamide and dimethylacetamide; and
aprotic polar solvents such as hexamethylphosphoramide and dimethyl sulfoxide.

These media may be used singly, or two or more kinds thereof may be used in any combination and ratio.

### (Thickening Agent)

In the case of using an aqueous medium as the liquid medium for forming the slurry, it is preferred to use a thickening agent and a latex of styrene-butadiene rubber (SBR) or the like to form the slurry. The thickening agent is usually used for adjusting the viscosity of the slurry.

The thickening agent is not limited as long as the effects of the present invention are not significantly limited, and specific examples thereof include: carboxymethyl cellulose, methyl cellulose, hydroxymethyl cellulose, ethyl cellulose, polyvinyl alcohol, oxidized starch, phosphorylated starch and casein; and salts thereof. These thickening agents may be used singly, or two or more kinds thereof may be used in any combination and ratio.

In the case of using the thickening agent, the ratio of the amount of thickening agent with respect to the total mass of the positive electrode active material and the thickening agent is preferably 0.1% by mass or more, more preferably 0.5% by mass or more and still more preferably 0.6% by mass or more, and at the same time, preferably 5% by mass or less, more preferably 3% by mass or less and still more preferably 2% by mass or less. When the ratio of the amount of thickening agent is within the range described above, the applicability of the slurry is improved. Further, a sufficient proportion of the amount of active material in the positive electrode active material layer can be achieved, making it easier to avoid problems of a decrease in the capacity of the resulting secondary battery and an increase in the resistance between the positive electrode active materials.

### (Compaction)

The positive electrode active material layer obtained by applying the above-described slurry on a current collector followed by drying, is preferably compacted by a method such as hand pressing or roller pressing, in order to increase the packing density of the resulting positive electrode active material. The density of the positive electrode active material layer is preferably 1 g·cm⁻³ or more, more preferably 1.5 g·cm⁻³ or more and particularly preferably 2 g·cm⁻³ or more, and at the same time, preferably 4 g·cm⁻³ or less, more preferably 3.9 g·cm⁻³ or less and particularly preferably 3.8 g·cm⁻³ or less.

When the density of the positive electrode active material layer is within the range described above, the penetration of the non-aqueous electrolytic solution to the vicinity of the current collector/active material interface does not decrease, enabling to achieve good charge/discharge characteristics at a high current density of the secondary battery, in particular. Further, the conductivity between the active materials is less likely to decrease, making the battery resistance less likely to increase.

### (Current Collector)

The material of the positive electrode current collector is not particularly limited, and any known material can be used. Specific examples thereof include: metal materials such as aluminum, stainless steel, nickel plating, titanium and tantalum; and carbonaceous materials such as carbon cloth and carbon paper. Among these, a metal material, particularly aluminum, is preferred.

In cases where the current collector is made of a metal material, the current collector may be, for example, in the form of a metal foil, a metal cylinder, a metal coil, a metal plate, a metal thin film, an expanded metal, a punched metal or a foamed metal. In cases where the current collector is made of a carbonaceous material, the current collector may be, for example, in the form of a carbon plate, a carbon thin film or a carbon cylinder. Among these, a metal thin film is preferred. A thin film may be formed into a mesh, as appropriate.

The thickness of the current collector can be selected arbitrarily, and is preferably 1 µm or more, more preferably 3 µm or more and still more preferably 5 µm or more, and at the same time, preferably 1 mm or less, more preferably 100 µm or less and still more preferably 50 µm or less. When the thickness of the current collector is within the range described above, a strength necessary for the current collector can be sufficiently ensured. A good handleability can also be obtained.

The thickness ratio of the positive electrode active material layer to the current collector is not particularly limited, and the ratio (thickness of active material layer on one side immediately before injecting non-aqueous electrolytic solution) / (thickness of current collector) is preferably 150 or less, more preferably 20 or less and particularly preferably 10 or less, and at the same time, preferably 0.1 or more, more preferably 0.4 or more and particularly preferably 1 or more.

When the thickness ratio of the positive electrode active material layer to the current collector is within the range described above, the current collector is less likely to generate heat due to Joule heat during the charging and discharging at a high current density of the resulting secondary battery. Further, the volume ratio of the current collector to the positive electrode active material is less likely to increase, enabling to prevent a decrease in the battery capacity.

### (Electrode Area)

From the viewpoint of enhancing the safety at a high output and high temperature, the area of the positive electrode active material layer is preferably designed so as to be larger than the outer surface area of the outer casing of the battery. Specifically, the total electrode area of the above-described positive electrode with respect to the surface area of the outer casing of the non-aqueous electrolytic solution secondary battery is preferably set to not less than 20 times, and more preferably not less than 40 times, in area ratio. In the case of an outer casing in a bottomed rectangular shape, the outer surface area of the outer casing refers to the total area calculated from the dimensions of the length, the width and the thickness of the casing portion within which the power generating element is housed, excluding terminal protrusions. In the case of an outer casing in a bottomed cylindrical shape, the outer surface area of the outer casing refers to the geometric surface area calculated by approximating the casing portion within which the power generating element is housed, excluding terminal protrusions, as a cylinder. The total electrode area of the positive electrode refers to the geometric surface area of a positive electrode composite layer opposing a composite layer containing the negative electrode active material, and in a structure composed of positive electrode composite layers formed on both sides of a current collector foil interposed therebetween, the total electrode area refers to the sum of the areas of the respective surfaces separately calculated.

### (Discharge Capacity)

In the case of using the non-aqueous electrolytic solution of the present embodiment, the electrical capacity (electrical capacity when a battery is discharged from the fully charged state to the discharged state) of the battery element housed in a single battery casing of the non-aqueous electrolytic solution secondary battery, is preferably not less than 1 ampere-hour (Ah), because the effect of improving the low-temperature discharge characteristics is increased. Therefore, the positive electrode plate is designed such that the discharge capacity is preferably 3 Ah (ampere-hour) and more preferably 4 Ah or more, and at the same time, preferably 20 Ah or less and more preferably 10 Ah or less, on a full charge.

When the discharge capacity is within the range described above, an excessive increase in voltage drop due to electrode reaction resistance during high current extraction can be prevented, enabling to prevent the deterioration of power efficiency can be prevented. Further, it is possible to prevent an excessive increase in temperature distribution due to the internal heat generation of the battery during pulse charging/discharging, and to avoid phenomena such as poor durability to repeated charging/discharging, and poor heat dissipation efficiency against sudden heat generation during abnormal conditions such as overcharge or internal short circuit, as well.

### (Thickness of Positive Electrode Plate)

The thickness of the positive electrode plate is not particularly limited. From the viewpoint of achieving a high capacity, a high output and high rate characteristics, the thickness of a positive electrode active material layer, which is obtained by subtracting the thickness of the current collector from that of the positive electrode plate, is preferably 10 µm or more and more preferably 20 µm or more, and at the same time, preferably 200 µm or less and more preferably 150 µm or less, for one side of the current collector.

### < 2-1-5. Separator >

In the non-aqueous electrolytic solution secondary battery of the present embodiment, a separator is usually interposed between a positive electrode and a negative electrode, in order to prevent short circuits. In this case, the separator is usually used in a state impregnated with the non-aqueous electrolytic solution of the present embodiment.

The material and the shape of the separator are not particularly limited, and any known material and shape can be employed as long as the effects of the present invention are not significantly impaired. In particular, a resin, glass fibers, an inorganic material or the like formed of a material stable in the non-aqueous electrolytic solution of the present embodiment is used as the material, and it is preferred to use a separator in the form of a porous sheet or a nonwoven fabric having excellent liquid retention properties.

As the material of a resin or glass fiber separator, it is possible to use, for example, a polyolefin such as polyethylene or polypropylene, an aramid resin, polytetrafluoroethylene, polyether sulfone, a glass filter or the like. Among these materials, a glass filter or a polyolefin is preferred, and a polyolefin is more preferred. These materials may be used singly, or two or more kinds thereof may be used in any combination and ratio.

The thickness of the separator can be selected arbitrarily, and is preferably 1 µm or more, more preferably 5 µm or more and still more preferably 10 µm or more, and at the same time, preferably 50 µm or less, more preferably 40 µm or less and still more preferably 30 µm or less. When the thickness of the separator is within the range described above, a good electrical insulation and mechanical strength can be obtained. Further, it is also possible to prevent a decrease in the battery performance such as rate characteristics, and a decrease in the energy density of the non-aqueous electrolytic solution secondary battery as a whole.

In the case of using a porous separator, such as one in the form of a porous sheet or a nonwoven fabric, the porosity of the separator can be selected arbitrarily. However, the porosity is preferably 20% or more, more preferably 35% or more and still more preferably 45% or more, and at the same time, preferably 90% or less, more preferably 85% or less and still more preferably 75% or less. When the porosity is within the range described above, an excessive increase in membrane resistance can be prevented, and the deterioration of the rate characteristics of the secondary battery can be reduced. Further, a moderate mechanical strength of the separator is achieved, and a decrease in the electrical insulation can also be reduced.

The average pore diameter of the separator can also be selected arbitrarily, and is preferably 0.5 µm or less and more preferably 0.2 µm or less, and at the same time, preferably 0.05 µm or more. When the average pore diameter is within the range described above, short circuits are less likely to occur. It is also possible to prevent an excessive increase in membrane resistance, and a decrease in the rate characteristics of the secondary battery.

As the inorganic material, on the other hand, an oxide such as alumina or silicon dioxide, a nitride such as aluminum nitride or silicon nitride, or a sulfate such as barium sulfate or calcium sulfate is used, and a material in the form of particles or fibers is used.

A separator in the form of a nonwoven fabric, a woven fabric or a thin film such as a microporous film is used. As the separator in the form of a thin film, one having a pore diameter of from 0.01 to 1 µm and a thickness of from 5 to 50 µm is suitably used. In addition to the separator in the form of an independent thin film described above, it is also possible to use a separator obtained by forming a composite porous layer containing the particles of the above-described inorganic material in which a binder made of resin is used, on one or both surface layers of the positive electrode and/or the negative electrode. Such separators can be obtained, for example, by forming a porous layer on both surfaces of the positive electrode using alumina particles having a 90% particle size of less than 1 µm and using a fluororesin as a binder.

### < 2-1-6. Battery Design >

### (Electrode Group)

The non-aqueous electrolytic solution secondary battery may include an electrode group having either a layered structure in which the above-described positive electrode plate and negative electrode plate are layered via the above-described separator interposed therebetween, or a spirally wound structure in which the above-described positive electrode plate and negative electrode plate, and the above-described separator interposed therebetween, are wound spirally. The ratio of the volume of the electrode group with respect to the internal volume of the battery (hereinafter, referred to as "electrode group occupancy ratio") is preferably 40% or more and more preferably 50% or more, and at the same time, preferably 95% or less and more preferably 90% or less. When the electrode group occupancy ratio is within the range described above, the battery capacity is less likely to decrease. Further, an adequate void space can be ensured, making it possible to avoid cases where the internal pressure is increased due to the expansion of members or an increase in the vapor pressure of liquid components of the non-aqueous electrolytic solution as a result of elevated battery temperature, leading to decreases in various properties such as the repetitive charge/discharge performance and high temperature storage characteristics of the secondary battery. It is also possible to avoid cases where a gas release valve that releases the internal pressure to the outside is activated.

### (Current Collecting Structure)

The non-aqueous electrolytic solution secondary battery preferably has, but not particularly limited to, a current collecting structure that reduces the resistance at a wiring portion or a junction portion, in order to more effectively achieve an improvement in the discharge characteristics provided by the non-aqueous electrolytic solution of the present embodiment. When the internal resistance is reduced in such a manner, the effect of using the non-aqueous electrolytic solution of the present embodiment can be obtained particularly favorably.

In the case of an electrode group having the layered structure described above, a structure formed by bundling the metal core portions of the respective electrode layers and welding the bundled portions to terminals is suitably used. Since the internal resistance increases when a single electrode has a large area, it is also suitable to provide a plurality of terminals within the electrode to reduce the resistance. In the case of an electrode group having the spirally wound structure described above, the internal resistance can be reduced by providing a plurality of lead structures to each of the positive and negative electrodes, and connecting the bundles of the leads to the respective terminals.

### (Protection Element)

The non-aqueous electrolytic solution secondary battery includes, as a protection element, for example, a PTC (Positive Temperature Coefficient) thermistor whose resistance increases upon abnormal heat generation or excessive current flow, a thermal fuse, a valve (current shutoff valve) that shuts off the current flowing in the circuit in response to a sudden surge in internal battery pressure or internal temperature upon abnormal heat generation, or the like. It is preferred to select a protection element that is not activated under normal operating conditions at a high current, as the protection element, and it is more preferred to employ a battery design capable of avoiding abnormal heat generation or thermal run away even without a protection element.

### (Outer Casing)

The non-aqueous electrolytic solution secondary battery of the present embodiment is usually formed by housing the above-described non-aqueous electrolytic solution, negative electrode, positive electrode, separator and the like, in an outer casing. The outer casing is not particularly limited, and any known outer casing can be used as long as the effects of the present invention are not significantly impaired.

The material of the outer casing is not particularly limited, as long as the material is stable to the non-aqueous electrolytic solution. Specifically, a metal such as a nickel-plated steel sheet, a stainless steel, aluminum or an aluminum alloy, a magnesium alloy, nickel or titanium; or a layered film (laminated film) composed of a resin and an aluminum foil is used as the material. From the viewpoint of weight reduction, a metal such as aluminum or an aluminum alloy, or a laminated film is suitably used.

Examples of the outer casing using any of the metals described above include: those in which metals are welded by laser welding, resistance welding or ultrasonic welding to form hermetically sealed structures; and those in which the metals are caulked via resin gaskets to form caulked structures. Examples of the outer casing using the laminated film described above include a casing in which resin layers are thermally fused to each other to form a hermetically sealed structure. In order to improve sealing performance, a resin different from that used in the laminated film may be interposed between the resin layers. Particularly in cases where resin layers are thermally fused via current-collecting terminals to form a hermetically sealed structure, a resin containing a polar group or a modified resin into which a polar group is introduced is suitably used as the resin to be interposed, since it involves the bonding of a metal and a resin.

The shape of the outer casing can also be selected arbitrarily, and the casing may be, for example, any of cylindrical, rectangular, laminated-type, coin-type and large-sized casings.

### < 2-2. Non-aqueous Electrolytic Solution Primary Battery >

In a non-aqueous electrolytic solution primary battery which is one embodiment of the present invention, for example, a material capable of absorbing metal ions is used for a positive electrode, and a material capable of releasing metal ions is used for a negative electrode. A transition metal oxide such as a fluorinated graphite or manganese dioxide is preferred as a positive electrode material. A single metal such as zinc or lithium is preferred as a negative electrode material. The above-described non-aqueous electrolytic solution of the present embodiment is used as the non-aqueous electrolytic solution to be used in the primary battery.

### < 2-3. Metal Ion Capacitor >

In a metal ion capacitor which is one embodiment of the present invention, for example, a material capable of forming an electric double layer is used for a positive electrode, and a material capable of absorbing and releasing metal ions is used for a negative electrode. Activated carbon is preferred as a positive electrode material. A carbonaceous material is preferred as a negative electrode material. The above-described non-aqueous electrolytic solution of the present embodiment is used as the non-aqueous electrolytic solution to be used in the metal ion capacitor.

### < 2-4. Electric Double Layer Capacitor >

In an electric double layer capacitor which is one embodiment of the present invention, for example, a material capable of forming an electric double layer is used for an electrode. Activated carbon is preferred as an electrode material. The above-described non-aqueous electrolytic solution of the present embodiment is used as the non-aqueous electrolytic solution to be used in the electric double layer capacitor.

### EXAMPLES

The present invention will now be described in more specific detail with reference to Examples and Reference Examples. However, the present invention is in no way limited to these Examples, as long as the scope of the invention is not exceeded.

### < Experiment I >

In Synthesis Examples 1 and 2 in the present Experiment I, 2-chloro-5,5-dimethyl-1,3,2-dioxaphosphorinane-2-oxide, 2-chloro-5,5-difluoro-1,3,2-dioxaphosphorinane-2-oxide and 3,9-dichloro-2,4,8,10-tetraoxa-3,9-diphosphaspiro[5.5]undecane 3,9-dioxide that had been synthesized in accordance with "Pharmaceutical Research" (2007), 24, (4), 679 to 687, were used.

The respective analysis methods used in the Synthesis Examples below are as follows.

### [Nuclear Magnetic Resonance (NMR) Analysis]

¹H, ¹³C and ³¹P-NMR measurements were performed using Ultrashield 400, manufactured by Bruker Corporation, at each of 400, 101 and 162 MHz. Each sample was dissolved in deuterated chloroform or deuterated dimethyl sulfoxide (DMSOd₆), to carry out each measurement.

### [Differential Scanning Calorimetry (DSC)]

The measurement was carried out for 1 m g of each sample using a differential scanning calorimeter (DSC 7020, manufactured by Hitachi High-Tech Science Corporation) under a nitrogen gas stream, and under conditions within the temperature range of from 20°C to 400°C and at a temperature rise rate of 10°C/min. In cases where the difference between the height of the amount of heat generation at 70°C, H₁, and the height of the amount of heat generation at the maximum heat generation peak temperature, H_{MAX}, was defined as ΔH₁, and the height of the amount of heat generation, H₁, was taken as the standard, the temperature when the height of the amount of heat generation reached 5% of the ΔH₁ was defined as the heat generation starting temperature.

### (Synthesis Example 1)

### [Synthesis of 2-Fluoro-5,5-dimethyl-1,3,2-dioxaphosphorinane-2-oxide (Compound A-1)]

Potassium fluoride (2.83 g, 48.9 mmol) was suspended in acetonitrile (20 mL) in a 100 mL three-neck flask equipped with a Dimroth condenser, under a nitrogen atmosphere. To the resulting suspension, a solution of 2-chloro-5,5-dimethyl-1,3,2-dioxaphosphorinane-2-oxide (3.00 g,16.3 mmol) in acetonitrile (10 mL) was added dropwise under cooling with ice, and the mixture was refluxed for 1.5 hours. After filtering insoluble components and removing inorganic components by silica gel, the solvent was removed by distillation to obtain a white solid as the target product (2.36 g, 14.0 mmol). The resulting product had a purity, as estimated by ¹H-NMR, of 99%. The heat generation starting temperature in DSC was 242°C. The analysis results of ¹H-NMR, ¹³C-NMR and ³¹P-NMR were as follows.

¹H-NMR (δ, CDCl₃): 4.23 (2H, d, J = 10.6 Hz), 4.08 to 3.97 (2H, m), 1.34 (3H, s), 0.92 (3H, s), ¹³C-NMR (δ, CDCl₃): 79.2, 32.4, 21.6, 20.0, ³¹P-NMR (δ, CDCl₃) : -16.65 (J_{PF} = 1010 Hz)

### (Synthesis Example 2)

### [Synthesis of 2-Fluoro-5,5-difluoro-1,3,2-dioxaphosphorinane-2-oxide (Compound A-77)]

Potassium fluoride (4.98 g, 83.1 mmol) was suspended in acetonitrile (60 mL) in a 300 mL three-neck flask equipped with a Dimroth condenser, under a nitrogen atmosphere. To the resulting suspension, a solution of 2-chloro-5,5-difluoro-1,3,2-dioxaphosphorinane-2-oxide (8.61 g, 41.6 mmol) in acetonitrile (20 mL) was added dropwise under cooling with ice, and the mixture was refluxed for 40 minutes. After filtering insoluble components, the solvent was removed by distillation. The resulting crude product was purified using a Kugelrohr distillation apparatus to obtain to obtain a white solid as the target product (1.23 g, 6.99 mmol). The resulting product had a purity, as estimated by ¹H-NMR, of 99%. The heat generation starting temperature in DSC was 373°C. The analysis results of ¹H-NMR, ¹³C-NMR and ³¹P-NMR were as follows.

¹H-NMR (δ, DMSOd₆) : 4.85 to 5.08 (4H, m), ¹³C-NMR (δ, DMSOd₆) : 113.23, 69.78, ³¹P-NMR (δ, DMSOd₆) : -17.70 (J_{PF} = 1026 Hz)

### (Synthesis Example 3)

### [Synthesis of 3,9-Difluoro-2,4,8,10-tetraoxa-3,9-diphosphaspiro[5.5]undecane 3,9-dioxide (A-114)]

Potassium fluoride (0.780 g, 13.5 mmol) was suspended in acetonitrile (30 mL) in a 100 mL three-neck flask equipped with a Dimroth condenser, under a nitrogen atmosphere. To the resulting suspension, 3,9-dichloro-2,4,8,10-tetraoxa-3,9-diphosphaspiro[5.5]undecane 3,9-dioxide (1.00 g, 3.40 mmol) was added little by little under cooling with ice, and the mixture was refluxed for 3.5 hours. After filtering insoluble components, an inorganic salt was removed by silica gel, and the solvent was removed by distillation to obtain a white solid (0.390 g, 1.48 mmol).

The resulting product had a purity, as estimated by ¹H-NMR, of 99%. The heat generation starting temperature in DSC was 204°C. The analysis results of ¹H-NMR and ³¹P-NMR were as follows.

¹H NMR (δ, DMSO-d6): 4.42 to 4.89 (m, 8H), ³¹P NMR (δ, DMSO-d6): -17.1 (J_{PF} = 1016 Hz)

### (Example 1)

### [Preparation of Negative Electrode]

To 98 parts by mass of a carbonaceous material, 1 part by mass of an aqueous dispersion (concentration of sodium carboxymethylcellulose: 1% by mass) of sodium carboxymethylcellulose and 1 part by mass of an aqueous dispersion (concentration of styrene-butadiene rubber: 50% by mass) of styrene-butadiene rubber were added, as a thickening agent and a binder, respectively, and the mixture was mixed using a disperser to form a slurry. The resulting slurry was applied on a copper foil having a thickness of 10 µm, dried and rolled with a pressing machine. The resultant was cut out in such a shape that the resulting active material layer has a width of 30 mm and a length of 40 mm in size and that an un-coated portion having a width of 5 mm and a length of 9 mm was included, and used as a negative electrode.

### [Preparation of Positive Electrode]

A quantity of 97% by mass of LiCo_{0.2}O₂ as a positive electrode active material, 1.5% by mass of acetylene black as a conductive material, and 1.5% by mas of polyvinylidene fluoride (PVdF) as a binder were mixed in a N-methylpyrrolidone solvent, to form a slurry. The resulting slurry was applied on one surface of an aluminum foil which has a thickness of 15 µm and on which a conductive auxiliary agent had been applied in advance, dried, and roll pressed using a pressing machine. The resultant was cut out in such a shape that the resulting active material layer has a width of 30 mm and a length of 40 mm in size and that an un-coated portion having a width of 5 mm and a length of 9 mm was included, and used as a positive electrode.

### [Preparation of Non-aqueous Electrolytic Solution]

Under a dry argon atmosphere, dry LiPF₆ was dissolved in a mixture of ethylene carbonate (EC) and dimethyl carbonate (DMC) (volume ratio: 20:80) so as to achieve a proportion of 1 mol/L, to prepare a base electrolytic solution 1. A quantity of 98 parts by mass of the resulting base electrolytic solution 1 was mixed with 2 parts by mass of 2-fluoro-5,5-dimethyl-1,3,2-dioxaphosphorinane-2-oxide (compound A-1) synthesized in Synthesis Example 1, to prepare a non-aqueous electrolytic solution of Example 1.

### [Production of Non-aqueous Electrolytic Solution Secondary Battery]

The positive electrode and the negative electrode prepared above, and a polyethylene separator, were layered in the order of the negative electrode, the separator and the positive electrode, to prepare a battery element. The resulting battery element was inserted into a bag composed of a laminated film obtained by coating both sides of aluminum (thickness: 40 µm) with resin layers such that the terminals of the positive electrode and the negative electrode of the battery element protrude from the bag. Thereafter, the electrolytic solution prepared above was injected into the bag, followed by vacuum-sealing to prepare a sheet-type non-aqueous electrolytic solution secondary battery of Example 1 that reaches the fully charged state at 4.2 V.

### [Break-in Operation]

The non-aqueous electrolytic solution secondary battery was charged at 25°C to 4.2 V at a constant current equivalent to 0.2 C and then discharged to 3.0 V at a constant current of 0.2 C, in a state sandwiched between glass plates in order to enhance the adhesion between the electrodes. Two cycles of the above-described operation were carried out to stabilize the battery. In the third cycle, the battery was charged to 4.2 V at a constant current of 0.2 C, then continuously charged at a constant voltage of 4.2 V until the current value reached 0.05 C, and then discharged to 3.0 V at a constant current of 0.2 C.
The above-described cycle was repeated twice to complete the break-in operation.

### [Evaluation of Change in Capacity Retention Rate during Repeated Charging and Discharging]

Among the batteries which had completed the evaluation test of initial discharge capacity, one in which both the initial output and the initial input exceeded 80% was charged to 4.2 V at a constant current of 0.5 C, and then discharged to 3.0 V at a constant current of 0.5 C. Two hundred cycles of the above-described operation were performed at 25°C. The capacity retention rate (%) during repeated charging and discharging was determined from (discharge capacity at 200th cycle) ÷ (discharge capacity at first cycle) × 100. Table 1 shows the relative value (%) when the value in Comparative Example 1 is taken as 100.0. In the present Example, the capacity retention rate during repeated charging and discharging was evaluated as excellent when the capacity retention rate was higher than that in Comparative Example 1.

### (Example 2)

The same procedure as in Example 1 was carried out to prepare a sheet-type non-aqueous electrolytic solution secondary battery of Example 2 and to evaluate the capacity retention rate during repeated charging and discharging thereof, except that 2-fluoro-5,5-difluoro-1,3,2-dioxaphosphorinane-2-oxide (compound A-77) synthesized in Synthesis Example 2 was used instead of the compound A-1 in the preparation of the non-aqueous electrolytic solution.

### (Comparative Example 1)

The same procedure as in Example 1 was carried out to prepare a sheet-type non-aqueous electrolytic solution secondary battery of Comparative Example 1 and to evaluate the capacity retention rate during repeated charging and discharging thereof, except that the base electrolytic solution 1 was used as it is.

### (Comparative Example 2)

The same procedure as in Example 1 was carried out to prepare a sheet-type non-aqueous electrolytic solution secondary battery of Comparative Example 2 and to evaluate the capacity retention rate during repeated charging and discharging thereof, except that 2-fluoro-1,3,2-dioxaphosphorinane-2-oxide was used instead of the compound A-1 in the preparation of the non-aqueous electrolytic solution.

### (Comparative Example 3)

The same procedure as in Example 1 was carried out to prepare a sheet-type non-aqueous electrolytic solution secondary battery of Comparative Example 3 and to evaluate the capacity retention rate during repeated charging and discharging thereof, except that diisopropyl fluorophosphate was used instead of the compound A-1 in the preparation of the non-aqueous electrolytic solution.

The results of Examples 1 and 2 as well as Comparative Examples 1 to 3 are shown in the following Table 1.

### [Table 1]

**Table 1**

| | Compound | Content /% by mass | Capacity retention rate during repeated charging and discharging /% | Heat generation starting temperature of compound /° C |
|---|---|---|---|---|
| Example 1 | 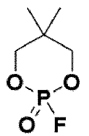 | 2.0 | 104.7 | 242 |
| Example 2 | 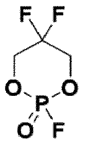 | 2.0 | 104.6 | 373 |
| Comparative Example 1 | - | - | 100.0 | - |
| Comparative Example 2 | 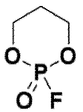 | 2.0 | 104.4 | 122 |
| Comparative Example 3 | 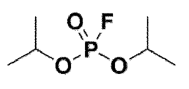 | 2.0 | 102.0 | 188 |

As is evident from Table 1, a better capacity retention rate during repeated charging and discharging is achieved in the case of using any of the compounds of the present embodiment (Examples 1 and 2), as compared to the case of using the base electrolytic solution 1 as it is (Comparative Example 1) or the case of using the acyclic phosphorus compound (Comparative Example 3). Further, the compounds of the present embodiment (Examples 1 and 2) have an excellent industrial thermal stability, since the compounds show a higher heat generation starting temperature as compared to the phosphorus compound (Comparative Example 2) which has a cyclic structure but does not have two substituents at the 5-position. It can be seen from these results that it is important to select a compound represented by general formula (A1) or (A2), as a compound having a high industrial thermal stability which contributes to an improvement in the capacity retention rate during repeated charging and discharging.

### (Example 3)

### [Preparation of Negative Electrode]

To 98 parts by mass of a carbonaceous material, 1 part by mass of an aqueous dispersion (concentration of sodium carboxymethylcellulose: 1% by mass) of sodium carboxymethylcellulose and 1 part by mass of an aqueous dispersion (concentration of styrene-butadiene rubber: 50% by mass) of styrene-butadiene rubber were added, as a thickening agent and a binder, respectively, and the mixture was mixed using a disperser to form a slurry. The resulting slurry was applied on a copper foil having a thickness of 10 µm, dried and rolled with a pressing machine. The resultant was cut out in such a shape that the resulting active material layer has a width of 30 mm and a length of 40 mm in size and that an un-coated portion having a width of 5 mm and a length of 9 mm was included, and used as a negative electrode.

### [Preparation of Positive Electrode]

A quantity of 97% by mass of LiCo_{0.2}O₂ as a positive electrode active material, 1.5% by mass of acetylene black as a conductive material, and 1.5% by mas of polyvinylidene fluoride (PVdF) as a binder were mixed in a N-methylpyrrolidone solvent, to form a slurry. The resulting slurry was applied on one surface of an aluminum foil which has a thickness of 15 µm and on which a conductive auxiliary agent had been applied in advance, dried, and roll pressed using a pressing machine. The resultant was cut out in such a shape that the resulting active material layer has a width of 30 mm and a length of 40 mm in size and that an un-coated portion having a width of 5 mm and a length of 9 mm was included, and used as a positive electrode.

### [Preparation of Non-aqueous Electrolytic Solution]

Under a dry argon atmosphere, dry LiPF₆ was dissolved in a mixture of ethylene carbonate (EC) and dimethyl carbonate (DMC) (volume ratio: 20:80) so as to achieve a proportion of 1 mol/L, to prepare a base electrolytic solution 1. A quantity of 100 parts by mass of the resulting base electrolytic solution 1 was mixed with 2 parts by mass of 2-fluoro-5,5-dimethyl-1,3,2-dioxaphosphorinane-2-oxide (compound A-1) synthesized in Synthesis Example 1, to prepare a non-aqueous electrolytic solution of Example 3.

### [Production of Non-aqueous Electrolytic Solution Secondary Battery]

The positive electrode and the negative electrode prepared above, and a polyethylene separator, were layered in the order of the negative electrode, the separator and the positive electrode, to prepare a battery element. The resulting battery element was inserted into a bag composed of a laminated film obtained by coating both sides of aluminum (thickness: 40 µm) with resin layers such that the terminals of the positive electrode and the negative electrode of the battery element protrude from the bag. Thereafter, the electrolytic solution prepared above was injected into the bag, followed by vacuum-sealing to prepare a sheet-type non-aqueous electrolytic solution secondary battery of Example 3 that reaches the fully charged state at 4.2 V.

### [Break-in Operation]

The non-aqueous electrolytic solution secondary battery was charged at 25°C at a constant current equivalent to 0.05 C for 6 hours and then discharged to 3.0 V at a constant current of 0.2 C, in a state sandwiched between glass plates in order to enhance the adhesion between the electrodes. Subsequently, the battery was charged to 4.1 V at a constant current equivalent to 0.2C, then continuously charged at a constant voltage of 4.1 V until the current value reached 0.05 C, left to stand at 45°C for 72 hours, and then discharged to 3.0 V at a constant current of 0.2 C.
Thereafter, the battery was charged to 4.2 V at a constant current of 0.2 C, then continuously charged at a constant voltage of 4.2 V until the current value reached 0.05 C, and then discharged to 3.0 V at a constant current of 0.2 C, thereby completing the break-in operation.

### [Evaluation of Change in Capacity Retention Rate during Repeated Charging and Discharging]

Among the batteries which had completed the evaluation test of initial discharge capacity, one in which both the initial output and the initial input exceeded 80% was charged to 4.2 V at a constant current of 0.5 C, then continuously charged at a constant voltage of 4.2 V until the current value reached 0.05 C, and then discharged to 3.0 V at a constant current of 0.5 C. Three hundred cycles of the above-described operation were performed at 25°C. Further, in the 1st cycle and every 100 cycles thereafter, the battery was charged to 4.2 V at a constant current of 0.2 C, then continuously charged at a constant voltage of 4.2 V until the current value reached 0.05 C, and then discharged to 3.0 V at a constant current of 0.2 C. The capacity retention rate (%) during repeated charging and discharging was determined from (discharge capacity at 300th cycle) ÷ (discharge capacity at first cycle) × 100. Table 2 shows the relative value (%) when the value in Comparative Example 4 is taken as 100.0. In the present Example, the capacity retention rate during repeated charging and discharging was evaluated as excellent when the capacity retention rate was higher than that in Comparative Example 4.

### (Example 4)

The same procedure as in Example 3 was carried out to prepare a sheet-type non-aqueous electrolytic solution secondary battery of Example 4 and to evaluate the capacity retention rate during repeated charging and discharging thereof, except that 2-fluoro-5,5-difluoro-1,3,2-dioxaphosphorinane-2-oxide (compound A-77) synthesized in Synthesis Example 2 was used instead of the compound A-1 in the preparation of the non-aqueous electrolytic solution.

### (Example 5)

The same procedure as in Example 3 was carried out to prepare a sheet-type non-aqueous electrolytic solution secondary battery of Example 5 and to evaluate the capacity retention rate during repeated charging and discharging thereof, except that 3,9-difluoro-2,4,8,10-tetraoxa-3,9-diphosphaspiro[5.5]undecane 3,9-dioxide (compound A-114) synthesized in Synthesis Example 3 was used instead of the compound A-1 in the preparation of the non-aqueous electrolytic solution.

### (Comparative Example 4)

The same procedure as in Example 3 was carried out to prepare a sheet-type non-aqueous electrolytic solution secondary battery of Comparative Example 4 and to evaluate the capacity retention rate during repeated charging and discharging thereof, except that the base electrolytic solution 1 was used as it is.

### (Comparative Example 5)

The same procedure as in Example 3 was carried out to prepare a sheet-type non-aqueous electrolytic solution secondary battery of Comparative Example 5 and to evaluate the capacity retention rate during repeated charging and discharging thereof, except that 2-fluoro-1,3,2-dioxaphosphorinane-2-oxide was used instead of the compound A-1 in the preparation of the non-aqueous electrolytic solution.

### (Comparative Example 6)

The same procedure as in Example 3 was carried out to prepare a sheet-type non-aqueous electrolytic solution secondary battery of Comparative Example 5 and to evaluate the capacity retention rate during repeated charging and discharging thereof, except that 2-fluoro-5-methyl-1,3,2-dioxaphosphorinane-2-oxide was used instead of the compound A-1 in the preparation of the non-aqueous electrolytic solution.

### (Comparative Example 7)

The same procedure as in Example 3 was carried out to prepare a sheet-type non-aqueous electrolytic solution secondary battery of Comparative Example 7 and to evaluate the capacity retention rate during repeated charging and discharging thereof, except that diisopropyl fluorophosphate was used instead of the compound A-1 in the preparation of the non-aqueous electrolytic solution.

The results of Examples 3 to 5 and Comparative Examples 4 to 7 are shown in the following Table 2.

### [Table 2]

**Table 2**

| | Compound | Content /% by mass | Capacity retention rate during repeated charging and discharging /% | Heat generation starting temperature of compound /° C |
|---|---|---|---|---|
| Example 3 | 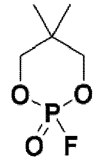 | 2.0 | 104.3 | 242 |
| Example 4 | 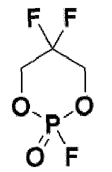 | 2.0 | 103.8 | 373 |
| Example 5 | 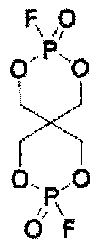 | 2.0 | 104.5 | 204 |
| Comparative Example 4 | - | - | 100.0 | - |
| Comparative Example 5 | 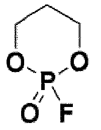 | 2.0 | 103.6 | 122 |
| Comparative Example 6 | 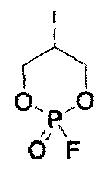 | 2.0 | 103.8 | 183 |
| Comparative Example 7 | 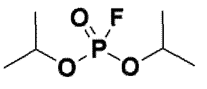 | 2.0 | 102.5 | 188 |

As is evident from Table 2, a better capacity retention rate during repeated charging and discharging is achieved in the case of using any of the compounds of the present embodiment (Examples 3 to 5), as compared to the case of using the base electrolytic solution 1 as it is (Comparative Example 4) or the case of using the acyclic phosphorus compound (Comparative Example 7). Further, the compounds of the present embodiment (Examples 3 to 5) have an excellent industrial thermal stability, since the compounds show a higher heat generation starting temperature as compared to the phosphorus compounds (Comparative Examples 5 and 6) which have a cyclic structure but do not have two substituents at the 5-position. It can be seen from these results that it is important to select a compound represented by general formula (A1) or (A2), as a compound having a high industrial thermal stability which contributes to an improvement in the capacity retention rate during repeated charging and discharging.

### (Example 6)

### [Preparation of Negative Electrode]

Natural graphite powder as a negative electrode active material, an aqueous dispersion (concentration of sodium carboxymethylcellulose: 1% by mass) of sodium carboxymethylcellulose and an aqueous dispersion (concentration of styrene-butadiene rubber: 50% by mass) of styrene-butadiene rubber, as a thickening agent and a binder, respectively, were mixed using a disperser to form a slurry. The resulting slurry was uniformly applied on one surface of a copper foil having a thickness of 10 µm, dried and then pressed to form a negative electrode. The negative electrode was prepared such that the mass ratio of natural graphite: sodium carboxymethylcellulose: styrene-butadiene rubber in the negative electrode after drying was 98:1:1.

### [Preparation of Positive Electrode]

A quantity of 90% by mass of a lithium-nickel-manganese-cobalt composite oxide (NMC) as a positive electrode active material, and 7% by mass of acetylene black as a conductive material, and 3% by mass of polyvinylidene fluoride (PVdF) as a binder were mixed in a N-methylpyrrolidone solvent, to form a slurry. The resulting slurry was applied on both surfaces of an aluminum foil which has a thickness of 15 µm and on which a conductive auxiliary agent had been applied in advance, dried and then pressed, to form a positive electrode.

### [Preparation of Non-aqueous Electrolytic Solution]

Under a dry argon atmosphere, dry LiPF₆ was dissolved in a mixture of ethylene carbonate (EC), dimethyl carbonate (DMC) and ethyl methyl carbonate (volume ratio: 30:40:30) so as to achieve a proportion of 1 mol/L, to prepare a base electrolytic solution 2. A quantity of 97.5 parts by mass of the resulting base electrolytic solution 2 was mixed with 2.0 parts by mass of vinylene carbonate and 0.5 parts by mass of 2-fluoro-5,5-dimethyl-1,3,2-dioxaphosphorinane-2-oxide (compound A-1) synthesized in Synthesis Example 1, to prepare a non-aqueous electrolytic solution of Example 6.

### [Production of Non-aqueous Electrolytic Solution Secondary Battery]

The positive and negative electrodes prepared above, and polyethylene separators, were layered in the order of the negative electrode, the separator, the positive electrode, the separator and the negative electrode, to prepare a battery element. The resulting battery element was inserted into a bag composed of a laminated film obtained by coating both sides of aluminum (thickness: 40 µm) with resin layers such that the terminals of the positive electrode and the negative electrodes of the battery element protrude from the bag. Thereafter, the electrolytic solution prepared above was injected into the bag, followed by vacuum-sealing to prepare a sheet-type non-aqueous electrolytic solution secondary battery of Example 6 that reaches the fully charged state at 4.2 V.

### [Break-in Operation]

The non-aqueous electrolytic solution secondary battery was charged at 25°C to 3.7 V at a constant current equivalent to 0.05 C and then discharged to 2.8 V at a constant current of 0.2 C, in a state sandwiched between glass plates in order to enhance the adhesion between the electrodes. Subsequently, the battery was charged to 4.1 V at a constant current of 0.2 C, then continuously charged at a constant voltage of 4.1 V until the current value reached 0.05 C, and left to stand at 45°C for 24 hours. Thereafter, the battery was discharged to 2.8 V at a constant current of 0.2 C to complete the break-in operation.

### [Evaluation of Change in Capacity Retention Rate during Repeated Charging and Discharging]

The battery which had completed the evaluation test of initial discharge capacity was charged to 4.2 V at a constant current of 1 C, then discharged to 3.0 V at a constant current 1 C, and then discharged at a low voltage of 3.0 V until the constant current reached 0.1 C. Two hundred cycles of the above-described operation were performed at 45°C. The capacity retention rate (%) during repeated charging and discharging was determined from (discharge capacity at 200th cycle) ÷ (discharge capacity at first cycle) × 100. Table 3 shows the relative value (%) when the value in Comparative Example 8 is taken as 100.0. In the present Example, the capacity retention rate during repeated charging and discharging was evaluated as excellent when the capacity retention rate was higher than that in Comparative Example 8.

### (Example 7)

The same procedure as in Example 6 was carried out to prepare a sheet-type non-aqueous electrolytic solution secondary battery of Example 7 and to evaluate the capacity retention rate during repeated charging and discharging thereof, except that 3,9-difluoro-2,4,8,10-tetraoxa-3,9-diphosphaspiro[5.5]undecane 3,9-dioxide (compound A-114) synthesized in Synthesis Example 3 was used instead of the compound A-1 in the preparation of the non-aqueous electrolytic solution.

### (Comparative Example 8)

The same procedure as in Example 6 was carried out to prepare a sheet-type non-aqueous electrolytic solution secondary battery of Comparative Example 8 and to evaluate the capacity retention rate during repeated charging and discharging thereof, except that the base electrolytic solution 2 was used as it is.

The results of Examples 6 and 7 as well as Comparative Example 8 are shown in the following Table 3.

### [Table 3]

**Table 3**

| | Compound | Content /% by mass | Capacity retention rate during repeated charging and discharging /% | Heat generation starting temperature of compound /° C |
|---|---|---|---|---|
| Example 6 | 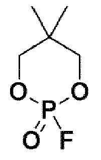 | 0.5 | 100.7 | 242 |
| Example 7 | 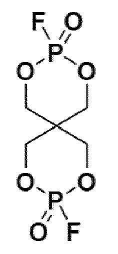 | 0.5 | 101.0 | 204 |
| Comparative Example 8 | - | - | 100.0 | - |

As is evident from Table 3, a better capacity retention rate during repeated charging and discharging is achieved in the case of using any of the compounds of the present embodiment (Examples 6 and 7), as compared to the case of using the base electrolytic solution 2 as it is (Comparative Example 8). Further, the compounds of the present embodiment (Examples 6 and 7) have an excellent industrial thermal stability, since the compounds show a high heat generation starting temperature. It can be seen from these results that it is important to select a compound represented by general formula (A1) or (A2), as a compound having a high industrial thermal stability which contributes to an improvement in the capacity retention rate during repeated charging and discharging.

### (Example 8)

### [Preparation of Non-aqueous Electrolytic Solution]

Under a dry argon atmosphere, dry LiPF₆ was dissolved in a mixture of ethylene carbonate (EC) and ethyl methyl carbonate (EMC) (volume ratio: 30:70) so as to achieve a proportion of 1 mol/L, to prepare a base electrolytic solution 3. A quantity of 100 parts by mass of the resulting base electrolytic solution 3 was mixed with 1.9 parts by mass of 2-fluoro-5,5-dimethyl-1,3,2-dioxaphosphorinane-2-oxide (compound A-1) synthesized in Synthesis Example 1, to prepare a non-aqueous electrolytic solution of Example 8.

### [Production of Non-aqueous Electrolytic Solution Secondary Battery]

A SiO thin film obtained by sputtering SiO on a copper foil, lithium metal, the non-aqueous electrolytic solution and a polyethylene separator were layered in the order of the SiO thin film, the non-aqueous electrolytic solution, the separator and the lithium metal. The thus obtained battery element was housed in a 2032 coin-type battery can, and caulked with a caulking machine to obtain a coin-type non-aqueous electrolytic solution secondary battery of Example 8.

### [Break-in Operation]

At 25°C, the non-aqueous electrolytic solution secondary battery was charged to 5 mV at a constant current equivalent to 0.05C, then continuously charged at a constant voltage of 5 mV until the current value reached 0.01 C, and then discharged to 1500 mV at a constant current of 0.1 C. Three cycles of the above-described operation were carried out to stabilize the battery, thereby completing the break-in operation.

### [Evaluation of Capacity Retention Rate during Repeated Charging and Discharging]

The battery which had completed the break-in operation was charged to 5 mV at a constant current of 0.05 C, then continuously charged at a constant voltage of 5 mV until the current value reached 0.01 C, and then discharged to 1500 mV at a constant current of 0.1 C. This amount of discharge was taken as the discharge capacity at the first cycle. Thereafter, charging to 5 mV and discharging to 1500 mV were repeated 150 times. The charging and discharging were carried out under the above-described conditions once in every 30 times, and other than that, under the conditions of charging to 5 mV at a constant current equivalent to 0.5 C, then continuing charging at a constant voltage of 5 mV until the current value reaches 0.05 C, and then discharging to 1500 mV at a constant current of 1 C. The amount of discharge at the 151st cycle at 0.1 C was taken as the discharge capacity at the 151st cycle. The capacity retention rate (%) during repeated charging and discharging was determined from (discharge capacity at 151st cycle) ÷ (discharge capacity at first cycle) × 100.

### (Example 9)

The same procedure as in Example 8 was carried out to prepare a coin-type non-aqueous electrolytic solution secondary battery of Example 9 and to evaluate the capacity retention rate during repeated charging and discharging thereof, except that 2.0 parts by mass of 2-fluoro-5,5-difluoro-1,3,2-dioxaphosphorinane-2-oxide (compound A-77) synthesized in Synthesis Example 2 was used instead of the compound A-1 in the preparation of the non-aqueous electrolytic solution.

### (Example 10)

The same procedure as in Example 8 was carried out to prepare a coin-type non-aqueous electrolytic solution secondary battery of Example 10 and to evaluate the capacity retention rate during repeated charging and discharging thereof, except that 3.0 parts by mass of 3,9-difluoro-2,4,8,10-tetraoxa-3,9-diphosphaspiro[5.5]undecane 3,9-dioxide (compound A-114) synthesized in Synthesis Example 3 was used instead of the compound A-1 in the preparation of the non-aqueous electrolytic solution.

### (Comparative Example 9)

The same procedure as in Example 8 was carried out to prepare a coin-type non-aqueous electrolytic solution secondary battery of Comparative Example 9 and to evaluate the capacity retention rate during repeated charging and discharging thereof, except that the base electrolytic solution 3 was used as it is.

### (Comparative Example 10)

The same procedure as in Example 8 was carried out to prepare a coin-type non-aqueous electrolytic solution secondary battery of Comparative Example 10 and to evaluate the capacity retention rate during repeated charging and discharging thereof, except that 1.6 parts by mass of 2-fluoro-1,3,2-dioxaphosphorinane-2-oxide was used instead of the compound A-1 in the preparation of the non-aqueous electrolytic solution.

### (Comparative Example 11)

The same procedure as in Example 8 was carried out to prepare a coin-type non-aqueous electrolytic solution secondary battery of Comparative Example 11 and to evaluate the capacity retention rate during repeated charging and discharging thereof, except that 1.8 parts by mass of 2-fluoro-5-methyl-1,3,2-dioxaphosphorinane-2-oxide was used instead of the compound A-1 in the preparation of the non-aqueous electrolytic solution.

### (Comparative Example 12)

The same procedure as in Example 8 was carried out to prepare a coin-type non-aqueous electrolytic solution secondary battery of Comparative Example 12 and to evaluate the capacity retention rate during repeated charging and discharging thereof, except that 2.1 parts by mass of diisopropyl fluorophosphate was used instead of the compound A-1 in the preparation of the non-aqueous electrolytic solution.

### (Comparative Example 13)

The same procedure as in Example 8 was carried out to prepare a coin-type non-aqueous electrolytic solution secondary battery of Comparative Example 13 and to evaluate the capacity retention rate during repeated charging and discharging thereof, except that 0.9 parts by mass of triethyl phosphate was used instead of the compound A-1.

The results of Examples 8 to 10 and Comparative Examples 9 to 13 are shown in Table 4. In the evaluation of the capacity retention rate during repeated charging and discharging, the relative values (%) when the value in Comparative Example 9 is taken as 100 are shown.

### [Table 4]

**Table 4**

| | Compound | Content /% by mass | Capacity retention rate during repeated charging and discharging /% | Heat generation starting temperature of compound /° C |
|---|---|---|---|---|
| Example 8 | 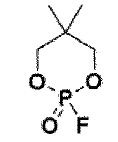 | 1.9 | 116 | 242 |
| Example 9 | 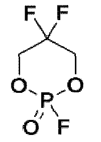 | 2.0 | 141 | 373 |
| Example 10 | 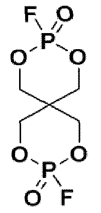 | 3.0 | 123 | 204 |
| Comparative Example 9 | - | - | 100 | - |
| Comparative Example 10 | 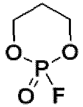 | 1.6 | 118 | 122 |
| Comparative Example 11 | 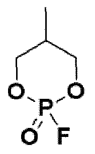 | 1.8 | 117 | 183 |
| Comparative Example 12 | 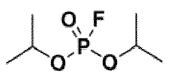 | 2.1 | 113 | 188 |
| Comparative Example 13 | 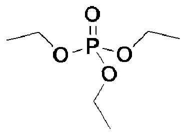 | 0.9 | 97 | 179 |

As is evident from Table 4, a better capacity retention rate during repeated charging and discharging is achieved in the case of using any of the compounds of the present embodiment (Examples 8 to 10), as compared to the case of using the base electrolytic solution 3 as it is (Comparative Example 9) or the case of using the acyclic phosphorus compounds (Comparative Examples 12 and 13). Further, the compounds of the present embodiment (Examples 8 to 10) have an excellent industrial thermal stability, since the compounds show a higher heat generation starting temperature as compared to the phosphorus compounds (Comparative Examples 10 and 11) which have a cyclic structure but do not have two substituents at the 5-position. It can be seen from these results that it is important to select a compound represented by general formula (A1) or (A2), as a compound having a high industrial thermal stability which contributes to an improvement in the capacity retention rate during repeated charging and discharging.

### < Experiment II >

In the present Experiment II, 2-fluoro-5,5-dimethyl-1,3,2-dioxaphosphorinane-2-oxide (compound B-34), 2-fluoro-5,5-difluoro-1,3,2-dioxaphosphorinane-2-oxide (compound B-22) and 3,9-difluoro-2,4,8,10-tetraoxa-3,9-diphosphaspiro[5.5]undecane 3,9-dioxide (compound B-58) that had been synthesized in the same manner as in Synthesis Examples 1 to 3 in Experiment I were used. Further, 2-Fluoro-1,3,2-dioxaphosphorinane-2-oxide (compound B-5) and 2-fluoro-5-methyl-1,3,2-dioxaphosphorinane-2-oxide (compound B-30) that had been synthesized in accordance with "Phosphorus and Sulfur and the Related Elements" (1981), 11, 19 to 25, were used.

### (Example 11)

### [Preparation of Non-aqueous Electrolytic Solution]

Under a dry argon atmosphere, dry LiPF₆ was dissolved in a mixture of ethylene carbonate (EC) and ethyl methyl carbonate (EMC) (volume ratio: 30:70) so as to achieve a proportion of 1 mol/L, to prepare a base electrolytic solution. The resulting base electrolytic solution 3 was mixed with 1.9 parts by mass of 2-fluoro-5,5-dimethyl-1,3,2-dioxaphosphorinane-2-oxide (compound B-34) to prepare a non-aqueous electrolytic solution of Example 11.

### [Production of Non-aqueous Electrolytic Solution Secondary Battery]

A SiOₓ thin film (x = 1.3) obtained by sputtering SiOₓ on a copper foil, lithium metal, the non-aqueous electrolytic solution and a polyethylene separator were layered in the order of the SiOₓ thin film, the non-aqueous electrolytic solution, the separator and the lithium metal. The thus obtained battery element was housed in a 2032 coin-type battery can, and caulked with a caulking machine to obtain a coin-type non-aqueous electrolytic solution secondary battery of Example 11.

### [Break-in Operation]

At 25°C, the lithium-ion secondary battery was charged to 5 mV at a constant current equivalent to 0.05C, then continuously charged at a constant voltage of 5 mV until the current value reached 0.01 C, and then discharged to 1500 mV at a constant current of 0.1 C. Three cycles of the above-described operation were carried out to stabilize the battery, thereby completing the break-in operation.

### [Evaluation of Capacity Retention Rate during Repeated Charging and Discharging]

The battery which had completed the break-in operation was charged to 5 mV at a constant current of 0.05 C, then continuously charged at a constant voltage of 5 mV until the current value reached 0.01 C, and then discharged to 1500 mV at a constant current of 0.1 C. This amount of discharge was taken as the discharge capacity at the first cycle. Thereafter, charging to 5 mV and discharging to 1500 mV were repeated 150 times. The charging and discharging were carried out under the above-described conditions once in every 30 times, and other than that, under the conditions of charging to 5 mV at a constant current equivalent to 0.5 C, then continuing charging at a constant voltage of 5 mV until the current value reaches 0.05 C, and then discharging to 1500 mV at a constant current of 1 C. The amount of discharge at the 151st cycle at 0.1 C was taken as the discharge capacity at the 151st cycle. The discharge capacity retention rate (%) during repeated charging and discharging was determined from (discharge capacity at 151st cycle) ÷ (discharge capacity at first cycle) × 100. The relative value (%) when the value in Comparative Example 14 is taken as 100.0 is shown in Table 5.

### (Example 12)

The same procedure as in Example 11 was carried out to prepare a coin-type non-aqueous electrolytic solution secondary battery of Example 12 and to evaluate the capacity retention rate during repeated charging and discharging thereof, except that 2.0 parts by mass of 2-fluoro-5,5-difluoro-1,3,2-dioxaphosphorinane-2-oxide (compound B-22) was used instead of the compound B-34 in the preparation of the non-aqueous electrolytic solution.

### (Example 13)

The same procedure as in Example 11 was carried out to prepare a coin-type non-aqueous electrolytic solution secondary battery of Example 13 and to evaluate the capacity retention rate during repeated charging and discharging thereof, except that 3.0 parts by mass of 3,9-difluoro-2,4,8,10-tetraoxa-3,9-diphosphaspiro[5.5]undecane 3,9-dioxide (compound B-58) was used instead of the compound B-34 in the preparation of the non-aqueous electrolytic solution.

### (Example 14)

The same procedure as in Example 11 was carried out to prepare a coin-type non-aqueous electrolytic solution secondary battery of Example 14 and to evaluate the capacity retention rate during repeated charging and discharging thereof, except that 1.6 parts by mass of 2-fluoro-1,3,2-dioxaphosphorinane-2-oxide (compound B-5) was used instead of the compound B-34 in the preparation of the non-aqueous electrolytic solution.

### (Example 15)

The same procedure as in Example 11 was carried out to prepare a coin-type non-aqueous electrolytic solution secondary battery of Example 15 and to evaluate the capacity retention rate during repeated charging and discharging thereof, except that 1.8 parts by mass of 2-fluoro-5-methyl-1,3,2-dioxaphosphorinane-2-oxide (compound B-30) was used instead of the compound B-34 in the preparation of the non-aqueous electrolytic solution.

### (Comparative Example 14)

The same procedure as in Example 11 was carried out to prepare a coin-type non-aqueous electrolytic solution secondary battery of Comparative Example 14 and to evaluate the cycle characteristics thereof, except that the base electrolytic solution 3 was used as it is.

### (Comparative Example 15)

The same procedure as in Example 11 was carried out to prepare a coin-type non-aqueous electrolytic solution secondary battery of Comparative Example 15 and to evaluate the cycle characteristics thereof, except that 2.1 parts by mass of diisopropyl fluorophosphate was used instead of the compound B-34.

### (Comparative Example 16)

The same procedure as in Example 11 was carried out to prepare a coin-type non-aqueous electrolytic solution secondary battery of Comparative Example 16 and to evaluate the cycle characteristics thereof, except that 0.9 parts by mass of triethyl phosphate was used instead of the compound B-34.

The results of Examples 11 to 15 and Comparative Examples 14 to 16 are shown in Table 5. In the evaluation of the capacity retention rate during repeated charging and discharging, the relative values (%) when the value in Comparative Example 14 is taken as 100 are shown.

### [Table 5]

**Table 5**

| | Compound | Content /% by mass | Capacity retention rate during repeated charging and discharging /% |
|---|---|---|---|
| Example 11 | 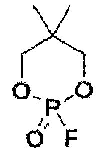 | 1.9 | 116 |
| Example 12 | 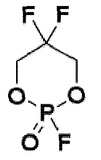 | 2.0 | 141 |
| Example 13 | 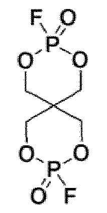 | 3.0 | 123 |
| Example 14 | 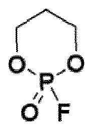 | 1.6 | 118 |
| Example 15 | 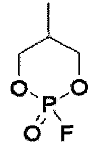 | 1.8 | 117 |
| Comparative Example 14 | - | - | 100 |
| Comparative Example 15 | 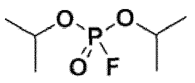 | 2.1 | 113 |
| Comparative Example 16 | 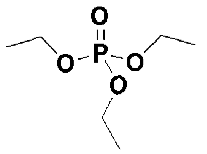 | 0.9 | 97 |

As is evident from Table 5, in each of the non-aqueous secondary batteries in which the negative electrode includes a negative electrode active material containing a silicon atom, a better capacity retention rate during repeated charging and discharging is achieved when a compound represented by general formula (B1) or (B2) is used (Examples 11 to 15), as compared to the case of using the base electrolytic solution as it is (Comparative Example 14) or the case of using the acyclic phosphorus compounds (Comparative Examples 15 to 16). It can be seen from these results that it is important to select a compound represented by general formula (B1) or (B2).

### INDUSTRIAL APPLICABILITY

According to the first aspect of the non-aqueous electrolytic solution of the present embodiment, it is possible to handle the non-aqueous electrolytic solution industrially stably and to improve the capacity retention rate during repeated charging and discharging of the resulting non-aqueous electrolytic solution secondary battery, and according to the second aspect of the present embodiment, it is possible to improve the capacity retention rate during repeated charging and discharging of the non-aqueous electrolytic solution secondary battery, both of which aspects are useful. Therefore, the non-aqueous electrolytic solution of the present embodiment, and an energy device such as a non-aqueous electrolytic solution secondary battery using the same can be used in various types of known applications. Specific examples of applications include notebook personal computers, pen-input personal computers, mobile personal computers, electronic book players, mobile phones, mobile facsimile machines, mobile copying machines, mobile printers, portable cassette players, video/movie cameras, liquid crystal television sets, handy cleaners, portable CD players, mini-disk players, transceivers, electronic organizers, electronic calculators, memory cards, mobile tape recorders, radios, backup power supplies, motors, automobiles, motorcycles, motor-assisted bicycles, bicycles, lighting equipment, toys, game machines, watches, electric tools, stroboscopic lamps, cameras, backup power supplies for domestic use, backup power supplies for offices, power supplies for load leveling, power supplies for natural energy storage and lithium ion capacitors.

## Claims

1. A non-aqueous electrolytic solution comprising a compound(s) represented by the following general formula(e) (A1) and/or (A2): 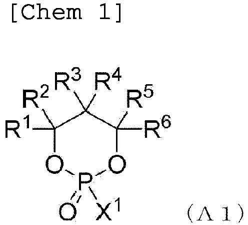 wherein, in formula (A1), X¹ represents a halogen atom; each of R¹, R², R⁵ and R⁶ independently represents a hydrogen atom, a halogen atom, or a hydrocarbon group having 10 or less carbon atoms optionally substituted with a halogen atom; and each of R³ and R⁴ independently represents a halogen atom, or a hydrocarbon group having 10 or less carbon atoms optionally substituted with a halogen atom; wherein at least two of R¹ to R⁶ may be bonded to each other to form a ring; 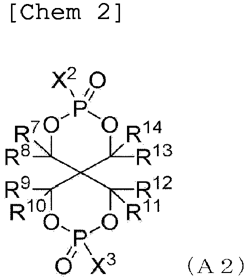 wherein, in formula (A2), each of X² and X³ independently represents a halogen atom; and each of R⁷ to R¹⁴ independently represents a hydrogen atom, a halogen atom, or a hydrocarbon group having 10 or less carbon atoms optionally substituted with a halogen atom; wherein at least two of R⁷ to R¹⁴ may be bonded to each other to form a ring.

2. The non-aqueous electrolytic solution according to claim 1, wherein R¹, R², R⁵ and R⁶ in the formula (A1) are hydrogen atoms.

3. The non-aqueous electrolytic solution according to claim 1 or 2, wherein X¹ in the formula (A1) is a fluorine atom.

4. The non-aqueous electrolytic solution according to claim 1, wherein all of R⁷ to R¹⁴ in the formula (A2) are hydrogen atoms.

5. The non-aqueous electrolytic solution according to claim 1 or 4, wherein X² and X³ in the formula (A2) are fluorine atoms.

6. The non-aqueous electrolytic solution according to any one of claims 1 to 5, wherein the non-aqueous electrolytic solution comprises at least one organic solvent selected from the group consisting of a saturated cyclic carbonate, a chain carbonate, a chain carboxylate ester, a cyclic carboxylate ester, an ether compound and a sulfone compound.

7. The non-aqueous electrolytic solution according to any one of claims 1 to 6, wherein the total content of the compounds represented by the general formulae (A1) and (A2) is 0.001% by mass or more and 30% by mass or less, with respect to the total amount of the non-aqueous electrolytic solution.

8. An energy device comprising:
a plurality of electrodes capable of absorbing and releasing metal ions; and
the non-aqueous electrolytic solution according to any one of claims 1 to 7.

9. A compound represented by the following formula (A3):

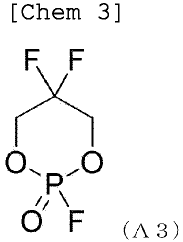

10. An energy device comprising:
a positive electrode capable of absorbing and releasing metal ions;
a negative electrode capable of absorbing and releasing metal ions; and
a non-aqueous electrolytic solution;
wherein the negative electrode comprises a negative electrode active material containing a silicon atom; and
wherein the non-aqueous electrolytic solution is a non-aqueous electrolytic solution containing at least one compound selected from compounds represented by the following general formulae (B1) and (B2): 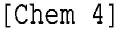 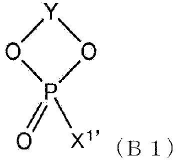 wherein, in general formula (B1), X¹' represents a halogen atom; and Y represents a divalent alkyl group in which the number of carbon atoms forming a ring together with a part of a halogenated phosphate ester is from 2 to 4, with the proviso that one or more hydrogen atoms bonded to the carbon atoms forming the ring, of the carbon atoms of Y, are optionally substituted with a halogen atom or an organic group having 6 or less carbon atoms; 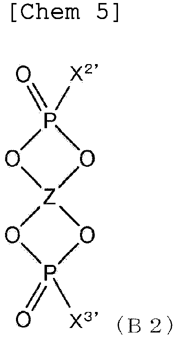 wherein, in general formula (B2), each of X²' and X³' independently represents a halogen atom; and Z represents a tetravalent alkyl group in which the number of carbon atoms forming rings together with a part of a halogenated phosphate ester is from 4 to 8, with the proviso that one or more hydrogen atoms bonded to the carbon atoms forming the rings, of the carbon atoms of Z, are optionally substituted with a halogen atom or an organic group having 6 or less carbon atoms.

11. The energy device according to claim 10, wherein the number of carbon atoms forming the ring together with a part of the halogenated phosphate ester, in Y in the general formula (B1), is 3.

12. The energy device according to claim 10 or 11, wherein at least one of the hydrogen atoms bonded to the carbon atoms forming the ring, of the carbon atoms of Y in the general formula (B1), is substituted with a fluorine atom.

13. The energy device according to any one of claims 10 to 12, wherein X¹' in the general formula (B1) is a fluorine atom.

14. The energy device according to claim 10, wherein the number of carbon atoms forming the rings together with a part of the halogenated phosphate ester, in Z in the general formula (B2), is 5.

15. The energy device according to claim 14, wherein at least one of the hydrogen atoms bonded to the carbon atoms forming the rings, of the carbon atoms of Z in the general formula (B2), is substituted with a fluorine atom.

16. The energy device according to any one of claims 10, 14 and 15, wherein X²' and X³' in the general formula (B2) are fluorine atoms.

17. The energy device according to any one of claims 10 to 16, wherein the non-aqueous electrolytic solution comprises at least one compound selected from the group consisting of a saturated cyclic carbonate, a chain carbonate, a chain carboxylate ester, a cyclic carboxylate ester, an ether compound and a sulfone compound.

18. The energy device according to any one of claims 10 to 17, wherein the total content of the compounds represented by the general formulae (B1) and (B2) is 0.001% by mass or more and 30% by mass or less, with respect to the total amount of the non-aqueous electrolytic solution.
